# EUROPEAN PATENT SPECIFICATION

(11) **EP 4 151 526 B1**
(45) Date of publication and mention of the grant of the patent: **29.01.2025**
(21) Application number: 22203389.6
(22) Date of filing: 12.09.2019
(51) Int. Cl.: B64C 39/02, G05D 1/00, B64U 30/12, B64U 30/296, B64U 70/40

(54) **SIX DEGREE OF FREEDOM AERIAL VEHICLE HAVING RECONFIGURABLE MOTORS, PROPELLERS, OR WINGS**
LUFTFAHRZEUG MIT SECHS FREIHEITSGRADEN MIT REKONFIGURIERBAREN MOTOREN, PROPELLERN ODER FLÜGELN
VÉHICULE AÉRIEN À SIX DEGRÉS DE LIBERTÉ AYANT DES MOTEURS, HÉLICES OU AILES RECONFIGURABLES

(30) Priority: 17.09.2018 US 201816133546; 17.09.2018 US 201816133592; 17.09.2018 US 201816133573; 17.09.2018 US 201816133609
(43) Date of publication of application: 22.03.2023
(62) Divisional of application: 19779249.2
(73) Proprietor: Amazon Technologies, Inc., Seattle, WA 98108-1226 (US)
(72) Inventor: LEGRAND, Louis Leroi, Seattle, 98109-5210 (US); RAND, Omri, Seattle, 98109-5210 (US); KIMCHI, Gur, Seattle, 98109-5210 (US); FISCHER, Sebastian, Seattle, 98109-5210 (US); WELSH, Ricky, Seattle, 98109-5210 (US)
(74) Representative: D Young & Co LLP

(56) References cited:
- EP-A1- 3 243 745
- WO-A1-2016/089882
- US-A1- 2017 313 433
- US-A1- 2018 229 839
- US-B1- 9 550 567

## Description

### PRIORITY

This application claims the benefit of U.S. Application No. 16/133,546, filed September 17, 2018, claims the benefit of U.S. Application No. 16/133,592, filed September 17, 2018, claims the benefit of U.S. Application No. 16/133,573, filed September 17, 2018, and claims the benefit of U.S. Application No. 16/133,609, filed September 17, 2018.

### CROSS-REFERENCE TO RELATED APPLICATION

This application is related to U.S. Application No. 15/435,121, filed February 16, 2017, entitled "Six Degree of Freedom Aerial Vehicle with a Ring Wing".

### BACKGROUND

Unmanned vehicles, such as unmanned aerial vehicles ("UAV"), ground and water based automated vehicles, are continuing to increase in use. For example, UAVs are often used by hobbyists to obtain aerial images of buildings, landscapes, etc. Likewise, unmanned ground based units are often used in materials handling facilities to autonomously transport inventory within the facility. While there are many beneficial uses of these vehicles, balancing the tightly coupled vehicle performance parameters of stability, maneuverability, and energy efficiency introduces design complexities of the UAVs. For example, due to current design limitations, design tradeoffs exist between optimizing UAVs for high agility versus high energy efficiency. Likewise, aerial vehicles are designed to only operate with four degrees of freedom - pitch, yaw, roll, and heave. In addition, aerial vehicles are generally designed assuming a fully operational state. Accordingly, there is a need for systems and methods to maintain control and safety of aerial vehicles even in degraded operational states.
US 9,550,567 B1 discusses an unmanned aerial vehicle ("UAV") that transitions in-flight between vertical flight configuration and horizontal flight configuration by changing an orientation of the UAV by approximately ninety degrees. The UAV may include propulsion units that are coupled to a wing. The wing may include wing segments rotatably coupled together by pivots that rotate to position the propulsion units around a center of mass of the UAV when the fuselage is oriented perpendicular with the horizon. In this vertical flight configuration, the UAV may perform vertical flight or hover. During the vertical flight, the UAV may cause the wing to extend outward via the pivots such that the wing segments become positioned substantially parallel to one another and the wing resembles a conventional fixed wing. With the wing extended, the UAV assumes a horizontal flight configuration that provides upward lift generated from the wing.
US 2018/0229839 A1 discusses an apparatus and method of an aerial vehicle, such as an unmanned aerial vehicle ("UAV") that can operate in either a vertical takeoff and landing (VTOL) orientation or a horizontal flight orientation. The aerial vehicle includes a plurality of propulsion mechanisms that enable the aerial vehicle to move in any of the six degrees of freedom (surge, sway, heave, pitch, yaw, and roll) when in the VTOL orientation. The aerial vehicle also includes a ring wing that surrounds the propulsion and provides lift to the aerial vehicle when the aerial vehicle is operating in the horizontal flight orientation.
EP 3 243 745 A1 discusses an aircraft comprising a plurality of engines including two or more rotor blades, each rotor blade (202) in mechanical communication with a hub and pivotable about an axis of rotation, a bearing plate comprising a rotating portion and a non-rotating portion, a fold linkage coupled to the rotating portion of the bearing plate and in communication with the rotor blade, and an actuator coupled to the non-rotating portion of the bearing plate and operable to reposition the bearing plate from a first position to a second position such that the folding links pivot the rotor blades from a deployed position to a forward folded position. However, none of these documents disclose at least the following features of appended claim 1: frangible connection releasing or separating the first wing section from the adjacent wing section, the first actuator is configured to alter the orientation of the first wing section.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIGS. 1-4 illustrate various views of an aerial vehicle with a substantially hexagonal shaped ring wing, in accordance with disclosed implementations.
FIG. 5 illustrates a view of an aerial vehicle with a substantially circular shaped ring wing, in accordance with disclosed implementations.
FIGs. 6A and 6B illustrate views of a propulsion mechanism having an adjustable cant angle, in accordance with disclosed implementations.
FIGs. 7A and 7B illustrate views of a propulsion mechanism having an adjustable toe angle, in accordance with disclosed implementations.
FIG. 8 illustrates a view of a propulsion mechanism having an adjustable position, in accordance with disclosed implementations.
FIG. 9 illustrates a view of a propulsion mechanism having an adjustable orientation using variable elasticity, in accordance with disclosed implementations.
FIGs. 10A-10C illustrate various views of an aerial vehicle with adjustable propulsion mechanisms, in accordance with disclosed implementations.
FIG. 11 illustrates a flow diagram of an example aerial vehicle motor out control process, in accordance with disclosed implementations.
FIG. 12 illustrates a flow diagram of an example aerial vehicle motor reconfiguration process, in accordance with disclosed implementations.
FIGs. 13A and 13B illustrate views of a propeller of a propulsion mechanism having an adjustable orientation, in accordance with disclosed implementations.
FIG. 14A illustrates a view of a propeller blade of a propulsion mechanism having adjustable control surfaces and/or trim tabs, in accordance with disclosed implementations.
FIG. 14B illustrates a view of a propeller blade of a propulsion mechanism having an adjustable blade section using variable elasticity, in accordance with disclosed implementations.
FIGs. 15A-15D illustrate views of a propeller blade of a propulsion mechanism having an adjustable orientation and/or adjustable length, in accordance with disclosed implementations.
FIGs. 16A and 16B illustrate views of a propeller hub of a propulsion mechanism having hinged, flapping propeller blades, in accordance with disclosed implementations.
FIGs. 17A-17C illustrate various views of an aerial vehicle having propulsion mechanisms with adjustable propellers and/or adjustable propeller blades, in accordance with disclosed implementations.
FIG. 18 illustrates a flow diagram of an example aerial vehicle motor out control process, in accordance with disclosed implementations.
FIG. 19 illustrates a flow diagram of an example aerial vehicle propeller reconfiguration process, in accordance with disclosed implementations.
FIG. 20 illustrates a view of an adjustable wing section of an aerial vehicle, in accordance with disclosed implementations.
FIG. 21 illustrates a plan view of an aerial vehicle with adjustable wing sections in a first reconfiguration, in accordance with disclosed implementations.
FIG. 22 illustrates a plan view of an aerial vehicle with adjustable wing sections in a second reconfiguration, in accordance with disclosed implementations.
FIGs. 23A-23C illustrate various side views of an aerial vehicle with adjustable wing sections in various reconfigurations, in accordance with disclosed implementations.
FIG. 24A illustrates a plan view of an aerial vehicle with adjustable wing sections in a third reconfiguration, in accordance with disclosed implementations.
FIG. 24B illustrates a plan view of an aerial vehicle with adjustable wing sections in a fourth reconfiguration, in accordance with disclosed implementations.
FIGs. 25A and 25B illustrate various side views of an aerial vehicle with adjustable wing sections in various reconfigurations, in accordance with disclosed implementations.
FIG. 26 illustrates a flow diagram of an example aerial vehicle motor out control process, in accordance with disclosed implementations.
FIG. 27 illustrates a flow diagram of an example aerial vehicle wing reconfiguration process, in accordance with disclosed implementations.
FIG. 28 illustrates another view of an aerial vehicle with a substantially hexagonal shaped ring wing, in accordance with disclosed implementations.
FIG. 29 illustrates a schematic, partial view of a pivoting wing section and an example locking element, in accordance with disclosed implementations.
FIG. 30 illustrates a schematic, cross-sectional view of a pivoting wing section, in accordance with disclosed implementations.
FIG. 31A illustrates a schematic, partial view of a pivoting wing section and a first example actuator, in accordance with disclosed implementations.
FIG. 31B illustrates a schematic, partial view of a pivoting wing section and a second example actuator, in accordance with disclosed implementations.
FIG. 31C illustrates a schematic, partial view of a pivoting wing section and a third example actuator, in accordance with disclosed implementations.
FIG. 32 is a flow diagram illustrating an example pivoting wing section(s) operation process, in accordance with disclosed implementations.
FIG. 33 is a block diagram illustrating various components of an example aerial vehicle control system, in accordance with disclosed implementations.

While implementations are described herein by way of example, those skilled in the art will recognize that the implementations are not limited to the examples or drawings described. It should be understood that the drawings and detailed description thereto are not intended to limit implementations to the particular form disclosed but, on the contrary, the intention is to cover all modifications and alternatives falling within the scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to.

### DETAILED DESCRIPTION

This disclosure describes aerial vehicles, such as UAVs (e.g., quad-copters, hex-copters, hepta-copters, octa-copters) that can operate in a vertical takeoff and landing (VTOL) orientation or in a horizontal flight orientation. Likewise, when the aerial vehicle is in a VTOL orientation, it can transition independently in any of the six degrees of freedom. Specifically, as described herein, the aerial vehicles may efficiently rotate in any of the three degrees of freedom of rotation (pitch, yaw, and roll) and/or may efficiently move in any of the three degrees of freedom of translation (surge, heave, and sway). For example, the aerial vehicle may include six propulsion mechanisms that are oriented at different angles and therefore, together, can provide thrust in the vertical direction and/or the horizontal direction when the aerial vehicle is in a VTOL orientation.

As discussed further below, a ring wing is included on the aerial vehicle that surrounds the propulsion mechanisms of the aerial vehicle and provides both protection around the propulsion mechanisms and lift when the aerial vehicle is in the horizontal flight orientation and navigating in a substantially horizontal direction.

In addition, responsive to degraded functional states of aerial vehicles such as motor out situations, the aerial vehicles described herein may implement one or more reconfigurations to maintain control of the aerial vehicles and land the aerial vehicles at safe landing locations. In one example embodiment, an aerial vehicle that has detected a failed propulsion mechanism may reconfigure cant angles of one or more propulsion mechanisms. In other example embodiments, an aerial vehicle that has detected a failed propulsion mechanism may reconfigure toe angles of one or more propulsion mechanisms. In further example embodiments, an aerial vehicle that has detected a failed propulsion mechanism may reconfigure positions of one or more propulsion mechanisms. In still further example embodiments, various combinations of reconfigurations may be implemented, and some of the various combinations may include planarizing two or more propulsion mechanisms, angling one or more propulsion mechanisms toward or away from the fuselage, and/or repositioning one or more propulsion mechanisms toward or away from the fuselage.

Moreover, although aerial vehicle reconfigurations of one or more propulsion mechanisms are described herein generally in the context of degraded functional or operational states of aerial vehicles, in some example embodiments, various of the aerial vehicle reconfigurations may be performed even in fully functional states or other operational states of aerial vehicles. In this manner, the propulsion mechanisms may be modified as described herein to improve or increase controllability of aerial vehicles even in the absence of any particular faults or failures of one or more components of aerial vehicles.

In addition, responsive to degraded functional states of aerial vehicles such as motor out situations, the aerial vehicles described herein may implement one or more reconfigurations to maintain control of the aerial vehicles and land the aerial vehicles at safe landing locations. In one example embodiment, an aerial vehicle that has detected a failed propulsion mechanism may reconfigure angles of one or more propellers of propulsion mechanisms. In other example embodiments, an aerial vehicle that has detected a failed propulsion mechanism may reconfigure orientations of one or more control surfaces, trim tabs, and/or sections of propeller blades of one or more propulsion mechanisms. In further example embodiments, an aerial vehicle that has detected a failed propulsion mechanism may reconfigure lengths of one or more sections of propeller blades of one or more propulsion mechanisms. In still further example embodiments, various combinations of reconfigurations may be implemented, and some of the various combinations may include planarizing propellers of two or more propulsion mechanisms, changing orientations of propellers, propeller blades, and/or sections of propeller blades of one or more propulsion mechanisms, and/or changing lengths of propellers, propeller blades, and/or sections of propeller blades of one or more propulsion mechanisms.

Moreover, although aerial vehicle reconfigurations of one or more propellers are described herein generally in the context of degraded functional or operational states of aerial vehicles, in some example embodiments, various of the aerial vehicle reconfigurations may be performed even in fully functional states or other operational states of aerial vehicles. In this manner, the propellers may be modified as described herein to improve or increase controllability of aerial vehicles even in the absence of any particular faults or failures of one or more components of aerial vehicles.

In addition, responsive to degraded functional states of aerial vehicles such as motor out situations, the aerial vehicles described herein may implement one or more reconfigurations to maintain control of the aerial vehicles and land the aerial vehicles at safe landing locations. In one example embodiment, an aerial vehicle that has detected a failed propulsion mechanism may reconfigure positions of one or more wing sections of a ring wing. In other example embodiments, an aerial vehicle that has detected a failed propulsion mechanism may reconfigure angular orientations of one or more wing sections of a ring wing. In further example embodiments, an aerial vehicle that has detected a failed propulsion mechanism may reconfigure pitches of one or more wing sections of a ring wing. In still further example embodiments, various combinations of reconfigurations may be implemented, and some of the various combinations may include extending or retracting wing sections, angling wing sections upward or downward, and/or changing pitches of wing sections to alter lift generated by the wing sections.

Moreover, although aerial vehicle reconfigurations of one or more wing sections are described herein generally in the context of degraded functional or operational states of aerial vehicles, in some example embodiments, various of the aerial vehicle reconfigurations may be performed even in fully functional states or other operational states of aerial vehicles. In this manner, the wing sections may be modified as described herein to improve or increase controllability of aerial vehicles even in the absence of any particular faults or failures of one or more components of aerial vehicles.

In addition, the ring wing may include one or more wing sections that are pivotable relative to a remainder of the ring wing. A pivotable wing section may pivot about a pivot axis that extends substantially parallel to a span of the wing section. In some example embodiments, a pivotable wing section may be freely pivotable based at least in part on airflow around the wing section, e.g., to reduce vibrations or forces experienced by the aerial vehicle as a result of airflow or air resistance, and/or to prevent stall or minimize turbulence during operation. In other example embodiments, a pivotable wing section may include a bias element to bias the wing section toward a nominal or home position, and/or a pivotable wing section may include a dampening element to control or slow movement of the wing section, e.g., to prevent continuous or rapid movement or oscillation.

In further example embodiments, a pivotable wing section may including a locking element that may either hold or prevent pivoting of the wing section, or release or allow pivoting of the wing section. The locking or unlocking of a pivotable wing section may be based on various factors, such as aerial vehicle orientation (e.g., horizontal flight orientation or VTOL flight orientation), environmental factors (e.g., wind, gusts, temperature, pressure, precipitation, or others), operating parameters of the aerial vehicle (e.g., speed, altitude, weight, power, range, vibration, flight plan, or others), location factors (e.g., urban, rural, densely populated, sparsely populated, potential obstacles, people, or objects, acceptable noise level, or others), and/or various other factors. Various types of locking elements may be used, such as clutches, switches, bias elements, servos, solenoids, linear actuators, rotary actuators, piezoelectric actuators, magnetic actuators, or combinations thereof.

In still further example embodiments, a pivotable wing section may include an actuator that may actively modify an orientation of the wing section. The orientation of the wing section may be modified based on various factors, such as those described herein, including aerial vehicle orientation, environmental factors, operating parameters of the aerial vehicle, location factors, or various other factors. Various types of actuators may be used, such as servos, solenoids, motors, screw actuators, geared actuators, magnetic actuators, linear actuators, rotary actuators, or combinations thereof.

As used herein, a "materials handling facility" may include, but is not limited to, warehouses, distribution centers, cross-docking facilities, order fulfillment facilities, packaging facilities, shipping facilities, rental facilities, libraries, retail stores, wholesale stores, museums, or other facilities or combinations of facilities for performing one or more functions of materials (inventory) handling. A "delivery location," as used herein, refers to any location at which one or more inventory items (also referred to herein as a payload) may be delivered. For example, the delivery location may be a person's residence, a place of business, a location within a materials handling facility (e.g., packing station, inventory storage), or any location where a user or inventory is located, etc. Inventory or items may be any physical goods that can be transported using an aerial vehicle. For example, an item carried by a payload of an aerial vehicle discussed herein may be ordered by a customer of an electronic commerce website and aerially delivered by the aerial vehicle to a delivery location.

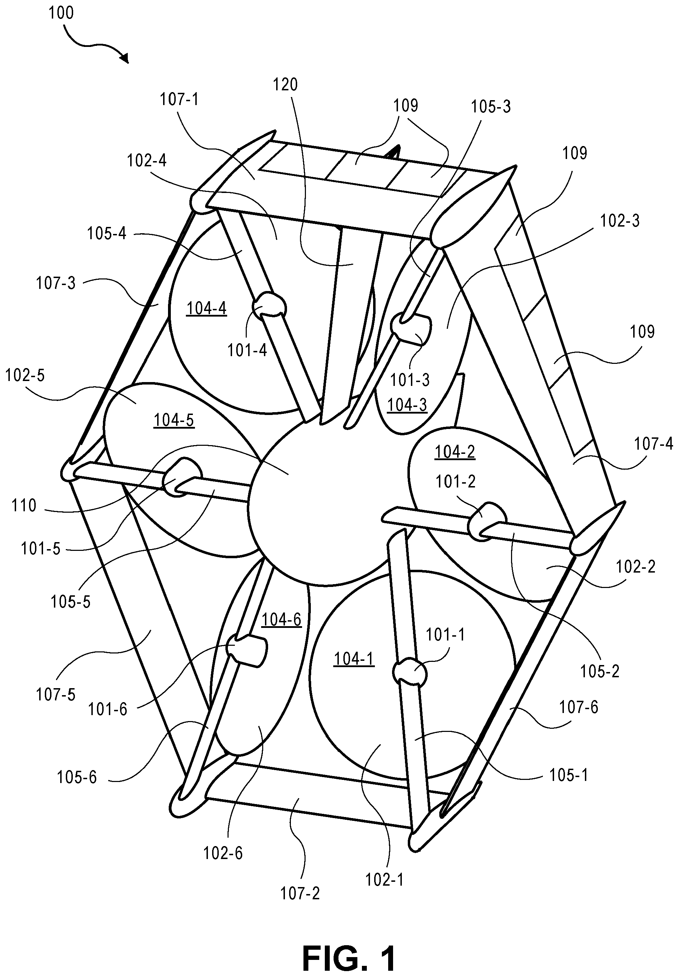

FIG. 1 illustrates a view of an aerial vehicle 100 with a ring wing that is substantially hexagonal in shape and that surrounds a plurality of propulsion mechanisms, according to disclosed implementations. The aerial vehicle 100 includes six propulsion mechanisms 102-1, 102-2, 102-3, 102-4, 102-5, and 102-6 spaced about the fuselage 110 of the aerial vehicle 100. As discussed above, while the propulsion mechanisms 102 may include motors 101-1, 101-2, 101-3, 101-4, 101-5, and 101-6 and propellers 104-1, 104-2, 104-3, 104-4, 104-5, and 104-6, in other implementations, other forms of propulsion may be utilized as the propulsion mechanisms 102. For example, one or more of the propulsion mechanisms 102 of the aerial vehicle 100 may utilize fans, jets, turbojets, turbo fans, jet engines, and/or the like to maneuver the aerial vehicle. Generally described, a propulsion mechanism 102, as used herein, includes any form of propulsion mechanism that is capable of generating a force sufficient to maneuver the aerial vehicle, alone and/or in combination with other propulsion mechanisms. Furthermore, in selected implementations, propulsion mechanisms (e.g., 102-1, 102-2, 102-3, 102-4, 102-5, and 102-6) may be configured such that their individual orientations may be dynamically modified (e.g., change from vertical to horizontal flight orientation or any position therebetween).

Likewise, while the examples herein describe the propulsion mechanisms being able to generate force in either direction, in some implementations, the propulsion mechanisms may only generate force in a single direction. However, the orientation of the propulsion mechanism may be adjusted so that the force can be oriented in a positive direction, a negative direction, and/or any other direction.

In this implementation, the aerial vehicle 100 also includes a ring wing 107 having a substantially hexagonal shape that extends around and forms the perimeter of the aerial vehicle 100. In the illustrated example, the ring wing has six sections or segments 107-1, 107-2, 107-3, 107-4, 107-5, and 107-6 that are joined at adjacent ends to form the ring wing 107 around the aerial vehicle 100. Each segment of the ring wing 107 has an airfoil shape to produce lift when the aerial vehicle is oriented as illustrated in FIG. 1 and moving in a direction that is substantially horizontal. As illustrated, and discussed further below, the ring wing is positioned at an angle with respect to the fuselage 110 such that the lower segment 107-2 of the ring wing acts as a front wing as it is toward the front of the aerial vehicle when oriented as shown and moving in a horizontal direction. The upper segment 107-1 of the ring wing, which has a longer chord length than the lower segment 107-2 of the ring wing 107, is farther back and thus acts as a rear wing.

The ring wing 107 is secured to the fuselage 110 by motor arms 105. In this example, all six motor arms 105-1, 105-2, 105-3, 105-4, 105-5, and 105-6 are coupled to the fuselage at one end, extend from the fuselage 110 and couple to the ring wing 107 at a second end, thereby securing the ring wing 107 to the fuselage 110. In other implementations, less than all of the motor arms may extend from the fuselage 110 and couple to the ring wing 107. For example, motor arms 105-2 and 105-5 may be coupled to the fuselage 110 at one end and extend outward from the fuselage but not couple to the ring wing 107.

In some implementations, the aerial vehicle may also include one or more stabilizer fins 120 that extend from the fuselage 110 to the ring wing 107. The stabilizer fin 120 may also have an airfoil shape. In the illustrated example, the stabilizer fin 120 extends vertically from the fuselage 110 to the ring wing 107. In other implementations, the stabilizer fin may be at other positions. For example, the stabilizer fin may extend downward from the fuselage between motor arm 105-1 and motor arm 105-6.

In general, one or more stabilizer fins may extend from the fuselage 110, between any two motor arms 105 and couple to an interior of the ring wing 107. For example, stabilizer fin 120 may extend upward between motor arms 105-3 and 105-4, a second stabilizer fin may extend from the fuselage and between motor arms 105-5 and 105-6, and a third stabilizer fin may extend from the fuselage and between motor arms 105-1 and 105-2.

Likewise, while the illustrated example shows the motor arm extending from the fuselage 110 at one end and coupling to the interior of the ring wing 107 at a second end, in other implementations, one or more of the stabilizer fin(s) may extend from the fuselage and not couple to the ring wing or may extend from the ring wing and not couple to the fuselage. In some implementations, one or more stabilizer fins may extend from the exterior of the ring wing 107, one or more stabilizer fins may extend from the interior of the ring wing 107, one or more stabilizer fins may extend from the fuselage 110, and/or one or more stabilizer fins may extend from the fuselage 110 and couple to the interior of the ring wing 107.

The fuselage 110, motor arms 105, stabilizer fin 120, and ring wing 107 of the aerial vehicle 100 may be formed of any one or more suitable materials, such as graphite, carbon fiber, and/or aluminum.

Each of the propulsion mechanisms 102 are coupled to a respective motor arm 105 (or propulsion mechanism arm) such that the propulsion mechanism 102 is substantially contained within the perimeter of the ring wing 107. For example, propulsion mechanism 102-1 is coupled to motor arm 105-1, propulsion mechanism 102-2 is coupled to motor arm 105-2, propulsion mechanism 102-3 is coupled to motor arm 105-3, propulsion mechanism 102-4 is coupled to motor arm 105-4, propulsion mechanism 102-5 is coupled to motor arm 105-5, and propulsion mechanism 102-6 is coupled to motor arm 105-6. In the illustrated example, each propulsion mechanism 102-1, 102-2, 102-3, 102-4, 102-5, and 102-6 is coupled at an approximate mid-point of the respective motor arm 105-1, 105-2, 105-3, 105-4, 105-5, and 105-6 between the fuselage 110 and the ring wing 107. In other embodiments, some propulsion mechanisms 102 may be coupled toward an end of the respective motor arm 105. In other implementations, the propulsion mechanisms may be coupled at other locations along the motor arm. Likewise, in some implementations, some of the propulsion mechanisms may be coupled to a mid-point of the motor arm and some of the propulsion mechanisms may be coupled at other locations along respective motor arms (e.g., closer toward the fuselage 110 or closer toward the ring wing 107).

As illustrated, the propulsion mechanisms 102 may be oriented at different angles with respect to each other. For example, propulsion mechanisms 102-2 and 102-5 are aligned with the fuselage 110 such that the force generated by each of propulsion mechanisms 102-2 and 102-5 is in-line or in the same direction or orientation as the fuselage. In the illustrated example, the aerial vehicle 100 is oriented for horizontal flight such that the fuselage is oriented horizontally in the direction of travel. In such an orientation, the propulsion mechanisms 102-2 and 102-5 provide horizontal forces, also referred to herein as thrusting forces and act as thrusting propulsion mechanisms.

In comparison to propulsion mechanisms 102-2 and 102-5, each of propulsion mechanisms 102-1, 102-3, 102-4, and 102-6 are offset or angled with respect to the orientation of the fuselage 110. When the aerial vehicle 100 is oriented horizontally as shown in FIG. 1 for horizontal flight, the propulsion mechanisms 102-1, 102-3, 102-4, and 102-6 may be used as propulsion mechanisms, providing thrust in a non-horizontal direction to cause the aerial vehicle to pitch, yaw, roll, heave and/or sway. In other implementations, during horizontal flight, the propulsion mechanisms 102-1, 102-3, 102-4, and 102-6 may be disabled such that they do not produce any forces and the aerial vehicle 100 may be propelled aerially in a horizontal direction as a result of the lifting force from the aerodynamic shape of the ring wing 107 and the horizontal thrust produced by the thrusting propulsion mechanisms 102-2 and 102-5.

In some implementations, one or more segments of the ring wing 107 may include ailerons, control surfaces, and/or trim tabs 109 that may be adjusted to control the aerial flight of the aerial vehicle 100. For example, one or more ailerons, control surfaces, and/or trim tabs 109 may be included on the upper segment 107-1 of the ring wing 107 and/or one or more ailerons, control surfaces, and/or trim tabs 109 may be included on the side segments 107-4 and/or 107-3. Further, one or more ailerons, control surfaces, and/or trim tabs 109 may also be included on one or more of the remaining segments 107-2, 107-5, and 107-6. The ailerons, control surfaces, and/or trim tabs 109 may be operable to control the pitch, yaw, and/or roll of the aerial vehicle during horizontal flight when the aerial vehicle 100 is oriented as illustrated in FIG. 1.

The angle of orientation of each of the propulsion mechanism 102-1, 102-2, 102-3, 102-4, 102-5, and 102-6 may vary for different implementations. Likewise, in some implementations, the offset of the propulsion mechanisms 102-1, 102-2, 102-3, 102-4, 102-5, and 102-6 may each be the same, with some oriented in one direction and some oriented in another direction, may each be oriented different amounts, and/or in different directions.

In the illustrated example of FIG. 1, each propulsion mechanism 102-1, 102-2, 102-3, 102-4, 102-5, and 102-6 may be oriented approximately thirty degrees with respect to the position of each respective motor arm 105-1, 105-2, 105-3, 105-4, 105-5, and 105-6. In addition, the direction of orientation of the propulsion mechanisms is such that pairs of propulsion mechanisms are oriented toward one another. For example, propulsion mechanism 102-1 is oriented approximately thirty degrees toward propulsion mechanism 102-6. Likewise, propulsion mechanism 102-2 is oriented approximately thirty degrees in a second direction about the second motor arm 105-2 and oriented toward propulsion mechanism 102-3. Finally, propulsion mechanism 102-4 is oriented approximately thirty degrees in the first direction about the fourth motor arm 105-4 and toward propulsion 102-5. As illustrated, propulsion mechanisms 102-2 and 102-5, which are on opposing sides of the fuselage 110, are aligned and oriented in a same first direction (in this example, horizontal). Propulsion mechanisms 102-3 and 102-6, which are on opposing sides of the fuselage 110, are aligned and oriented in a same second direction, which is angled compared to the first direction. Propulsion mechanisms 102-1 and 102-4, which are on opposing sides of the fuselage 110, are aligned and oriented in a same third direction, which is angled compared to the first direction and the second direction.

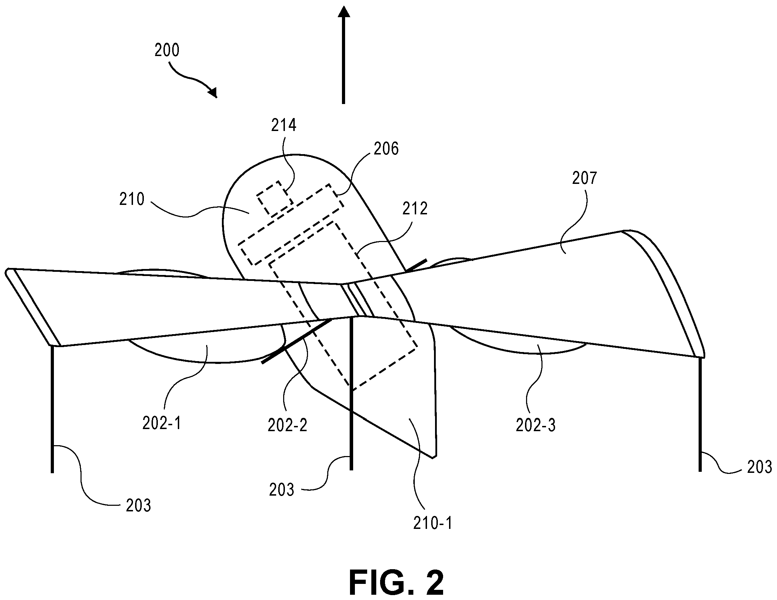

FIG. 2 illustrates a side view of the aerial vehicle 200 oriented for vertical takeoff and landing (VTOL), in accordance with disclosed implementations. The aerial vehicle 200 corresponds to the aerial vehicle 100 discussed above with respect to FIG. 1. When oriented as illustrated in FIG. 2, the aerial vehicle may maneuver in any of the six degrees of freedom (pitch, yaw, roll, heave, surge, and sway), thereby enabling VTOL and high maneuverability.

As illustrated, when the aerial vehicle is oriented for VTOL, the motor arms and the ring wing 207 are aligned approximately horizontally and in the same plane. In this orientation, each of the propulsion mechanisms are offset or angled with respect to the horizontal and/or vertical direction. As such, each propulsion mechanism 202, when generating a force, generates a force that includes both a horizontal component and a vertical component. In the illustrated example, each propulsion mechanism is angled approximately thirty degrees with respect to vertical. Likewise, as discussed above, adjacent propulsion mechanisms are angled in opposing directions to form pairs of propulsion mechanisms. For example, propulsion mechanism 202-2 is oriented toward propulsion mechanism 202-3. As discussed further below, angling adjacent propulsion mechanisms toward one another to form pairs of propulsion mechanisms allows horizontal forces from each propulsion mechanism to cancel out such that the pair of propulsion mechanisms can produce a net vertical force. Likewise, if one of the propulsion mechanisms of a pair of propulsion mechanisms is producing a larger force than the other propulsion mechanism of the pair, a net horizontal force will result from the pair of propulsion mechanisms. Accordingly, when the aerial vehicle 200 is oriented for VTOL with angled propulsion mechanisms, as illustrated in FIG. 2, the aerial vehicle can move independently in any of the six degrees of freedom. For example, if the aerial vehicle is to surge in the X direction, it can do so by altering the forces produced by the propulsion mechanisms to generate a net horizontal force in the X direction without having to pitch forward to enable a surge in the X direction.

To enable the fuselage to be oriented horizontally with an offset ring wing 207 during horizontal flight, as illustrated in FIG. 1, the fuselage is rotated at an angle when the aerial vehicle 200 is oriented for VTOL, as illustrated in FIG. 2. In this example the fuselage 210 is angled at approximately thirty degrees from vertical. In other implementations, the amount of rotation from vertical may be greater or less depending on the amount of offset desired for the ring wing 207 when the aerial vehicle 200 is oriented for horizontal flight.

The aerial vehicle may also include one or more landing gears 203 that are extendable to a landing position, as illustrated in FIG. 2. During flight, the landing gear 203 may be retracted into the interior of the ring wing 207 and/or may be rotated up and remain along the trailing edge of the ring wing. In still other examples, the landing gear may be permanently affixed.

The fuselage 210 may be used to house or store one or more components of the aerial vehicle, such as the aerial vehicle control system 214, a power module 206, and/or a payload 212 that is transported by the aerial vehicle. The aerial vehicle control system is discussed further below. The power module(s) 206 may be removably mounted to the aerial vehicle 200. The power module(s) 206 for the aerial vehicle may be, for example, in the form of battery power, solar power, gas power, super capacitor, fuel cell, alternative power generation source, or a combination thereof. The power module(s) 206 are coupled to and provide power for the aerial vehicle control system 214, the propulsion mechanisms 202, and the payload engagement module 210-1.

In some implementations, one or more of the power modules may be configured such that it can be autonomously removed and/or replaced with another power module. For example, when the aerial vehicle lands at a delivery location, relay location and/or materials handling facility, the aerial vehicle may engage with a charging member at the location that will recharge the power module.

The payload 212 may be any payload that is to be transported by the aerial vehicle. In some implementations, the aerial vehicle may be used to aerially deliver items ordered by customers for aerial delivery and the payload may include one or more customer ordered items. For example, a customer may order an item from an electronic commerce website and the item may be delivered to a customer specified delivery location using the aerial vehicle 200.

In some implementations, the fuselage 210 may include a payload engagement module 210-1. For example, the payload engagement module 210-1 may be a hinged portion of the fuselage 210 that can rotate between an open position, in which the interior of the fuselage is accessible so that the payload 212 may be added to or removed from the fuselage, and a closed position, as illustrated in FIG. 2, so that the payload 212 is secured within the interior of the fuselage.

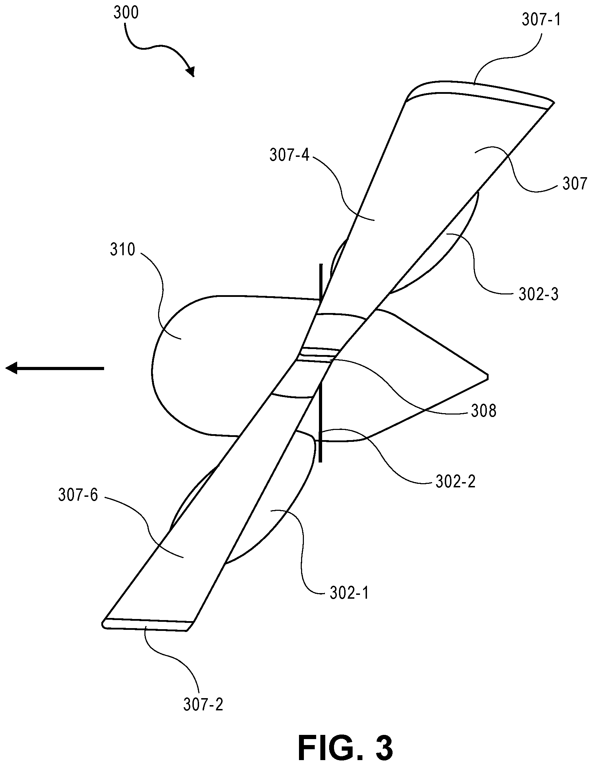

FIG. 3 is a side view of an aerial vehicle 300 with a ring wing 307, in accordance with disclosed implementations. The aerial vehicle 300 corresponds to the aerial vehicle 100 discussed in FIG. 1 and aerial vehicle 200 discussed in FIG. 2. As illustrated, when the aerial vehicle is oriented for horizontal flight, as illustrated in FIG. 3, the fuselage 310 is oriented horizontally and two of the propulsion mechanisms, propulsion mechanism 302-2 and the propulsion mechanism on the opposing side of the fuselage and illustrated in FIG. 1, are oriented to produce thrust in a substantially horizontal direction. In comparison, the other propulsion mechanisms, such as propulsion mechanisms 302-1 and 302-3, are not oriented to produce forces in substantially the horizontal direction. During horizontal flight, the propulsion mechanisms, such as propulsion mechanism 302-1 and 302-3, may be disabled and/or used to produce maneuverability forces that will cause the aerial vehicle to pitch, yaw, and/or roll as it aerially navigates in a substantially horizontal direction. In some implementations, the propulsion mechanisms that are not aligned to produce substantially horizontal forces may be allowed to freely rotate in the wind and energy produced from the rotation may be used to charge the power module of the aerial vehicle 300.

The ring wing 307 is angled such that the lower segment 307-2 of the ring wing is positioned ahead of the upper segment 307-1 of the ring wing 307. The leading wing, lower segment 307-2 produces a much higher lift per square meter than the rear wing, upper segment 307-1, and the chord length of the lower segment 307-2 is less than the chord length of the upper segment 307-1. Likewise, as illustrated, the upper segment 307-1 of the ring wing has a different camber than the lower segment 307-2. The chord length and camber transition from that illustrated along the upper segment 307-1 to the lower segment 307-2. In implementations that include one or more stabilizer fins, such as stabilizer fin 120 (FIG. 1), the difference between the chord lengths of the lower segment 307-2 and the upper segment 307-1 may be less and/or the difference between the cambers of the lower segment 307-2 and the upper segment 307-1 may be less.

While the side segments, such as side segment 307-4 and segment 307-6 of the ring wing provide some lift, at the midpoint 308 of each side segment there is minimal lift produced by the ring wing 307. Because there is minimal lift produced at the midpoint 308, the segments may be tapered to reduce the overall weight of the aerial vehicle. In this example, the side segments, such as side segments 307-4 and 307-6, are tapered toward the mid-point but retain some dimension for structural integrity and to operate as a protective barrier around the propulsion mechanisms 302. While the illustrated examples show both side segments 307-4 and 307-6 tapering to a smaller end at the midpoint 308, in other implementations, the taper may be consistent from the larger top segment 307-1 to the smaller lower segment 307-2.

In addition to providing lift, the ring wing 307 provides a protective barrier or shroud that surrounds the propulsion mechanisms of the aerial vehicle 300. The protective barrier of the ring wing 307 increases the safety of the aerial vehicle. For example, if the aerial vehicle comes into contact with another object, there is a higher probability that the object will contact the ring wing, rather than a propulsion mechanism.

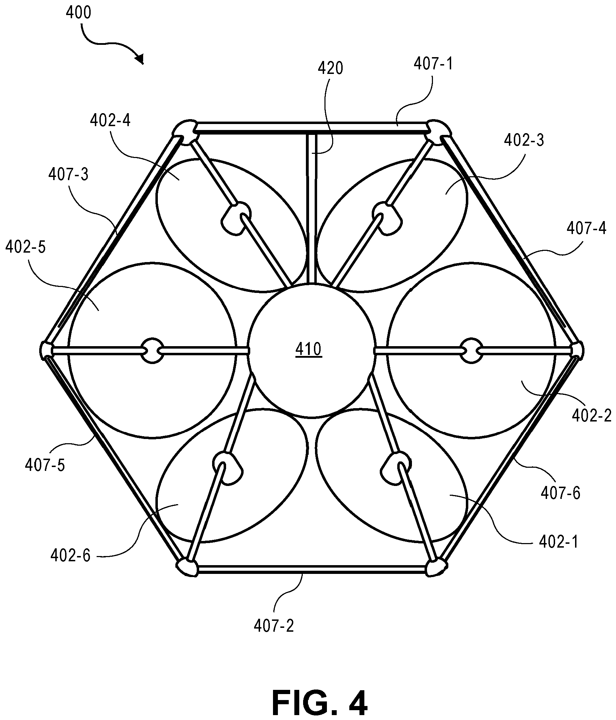

FIG. 4 is a front-on view of an aerial vehicle 400 with a ring wing 407 having a substantially hexagonal shape, according to disclosed implementations. The aerial vehicle 400 corresponds to aerial vehicle 100 of FIG. 1, aerial vehicle 200 of FIG. 2, and aerial vehicle 300 of FIG. 3. As discussed above with respect to FIG. 3, when the aerial vehicle is oriented for horizontal flight, as illustrated in FIGS. 3 and 4, the fuselage 410 is oriented in the direction of travel, the ring wing 407 is oriented in the direction of travel such that it will produce a lifting force, and propulsion mechanisms 402-2 and 402-5, which are on opposing sides of the fuselage 410, are aligned to produce forces in the substantially horizontal direction to propel or thrust the aerial vehicle horizontally. The other propulsion mechanisms 402-1, 402-3, 402-4, and 402-6 are offset and may be disabled, used to produce maneuverability forces, and/or allowed to freely rotate and produce energy that is used to charge a power module of the aerial vehicle 400. By increasing the thrust produced by each of the propulsion mechanisms 402-2 and 402-5, the horizontal speed of the aerial vehicle increases. Likewise, the lifting force from the ring wing 407 also increases. In some implementations, one or more ailerons, such as those discussed above with respect to FIG. 1, may be included on the surface of the ring wing and used to control the aerial navigation of the aerial vehicle during horizontal flight. Likewise, one or more stabilizer fins 420 may be included to stabilize the aerial vehicle during horizontal flight.

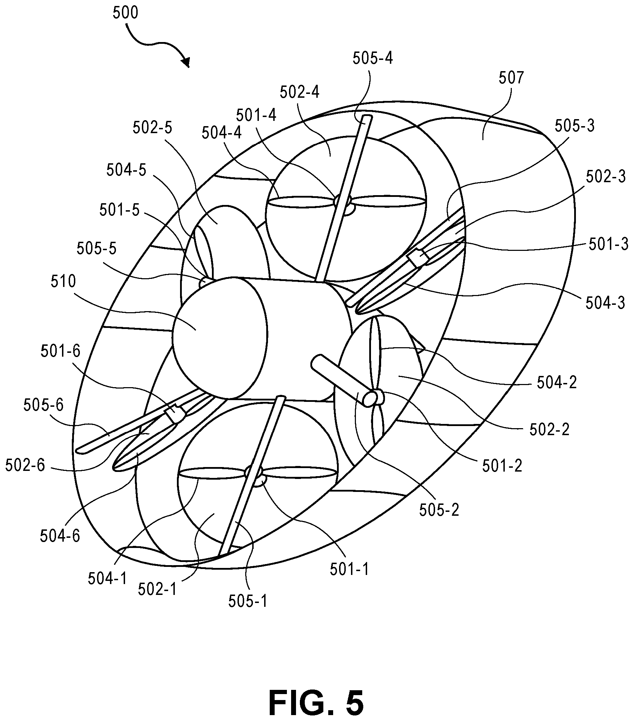

In some implementations, the hexagonal shaped ring wing may decrease manufacturing costs, provide for more stable flight, and provide flatter surfaces upon which control elements, such as ailerons, may be included, in comparison to a substantially circular shaped ring wing as described herein with respect to FIG. 5. Likewise, other components may be coupled to the surface of the ring wing. Other components include, but are not limited to, sensors, imaging elements, range finders, identifying markers, navigation components, such as global positioning satellite antennas, antennas, etc.

As discussed below, to transition the aerial vehicle from a VTOL orientation, as illustrated in FIG. 2, to a horizontal flight orientation, as illustrated in FIGS. 3 and 4, forces generated by each of the propulsion mechanisms 402 will cause the aerial vehicle to pitch forward and increase in speed in the horizontal direction. As the horizontal speed increases and the pitch increases, the lifting force produced by the airfoil shape of the ring wing will increase which will further cause the aerial vehicle to pitch into the horizontal flight orientation and allow the aerial vehicle to remain airborne.

In contrast, as discussed below, when the aerial vehicle is to transition from a horizontal flight orientation to a VTOL orientation, forces from the propulsion mechanisms may cause the aerial vehicle to decrease pitch and reduce horizontal speed. As the pitch of the aerial vehicle decreases, the lift produced by the airfoil shape of the ring wing decreases and the thrust produced by each of the six propulsion mechanisms 402 are utilized to maintain flight of the aerial vehicle 400.

As illustrated in FIGS. 1-4, each of the propulsion mechanisms 402 are positioned in approximately the same plane that is substantially aligned with the ring wing. Likewise, each propulsion mechanism 402 is spaced approximately sixty degrees from each other around the fuselage 410, such that the propulsion mechanisms are positioned at approximately equal distances with respect to one another and around the fuselage 410 of the aerial vehicle 400. For example, the second propulsion mechanism 402-2 and the fifth propulsion mechanism 402-5 may each be positioned along the X axis. The third propulsion mechanism 402-3 may be positioned at approximately sixty degrees from the X axis and the fourth propulsion mechanism 402-4 may be positioned approximately one-hundred and twenty degrees from the X axis. Likewise, the first propulsion mechanism 402-1 and the sixth propulsion mechanism 402-6 may likewise be positioned approximately sixty and one-hundred and twenty degrees from the X axis in the negative direction.

In other implementations, the spacing between the propulsion mechanisms may be different. For example, propulsion mechanisms 402-1, 402-3, and 402-5, which are oriented in the first direction, may each be approximately equally spaced 120 degrees apart and propulsion mechanisms 402-2, 402-4, and 402-6, which are oriented in the second direction, may also be approximately equally spaced 120 degrees apart. However, the spacing between propulsion mechanisms oriented in the first direction and propulsion mechanisms oriented in the second direction may not be equal. For example, the propulsion mechanisms 402-1, 402-3, and 402-5, oriented in the first direction, may be positioned at approximately zero degrees, approximately 120 degrees, and approximately 240 degrees around the perimeter of the aerial vehicle with respect to the X axis, and the propulsion mechanisms 402-2, 402-4, and 402-6, oriented in the second direction, may be positioned at approximately 10 degrees, approximately 130 degrees, and approximately 250 degrees around the perimeter of the aerial vehicle 400 with respect to the X axis.

In other implementations, the propulsion mechanisms may have other alignments. Likewise, in other implementations, there may be fewer or additional propulsion mechanisms. Likewise, in some implementations, the propulsion mechanisms may not all be aligned in the same plane and/or the ring wing may be in a different plane than some or all of the propulsion mechanisms.

While the examples discussed above and illustrated in FIGS. 1-4 discuss rotating the propulsion mechanisms approximately thirty degrees about each respective motor arm and that the ring wing is offset approximately thirty degrees with respect to the fuselage, in other implementations, the orientation of the propulsion mechanisms and/or the ring wing may be greater or less than thirty degrees and the angle of the ring wing may be different than the angle of one or more propulsion mechanisms. In some implementations, if maneuverability of the aerial vehicle when the aerial vehicle is in VTOL orientation is of higher importance, the orientation of the propulsion mechanisms may be higher than thirty degrees. For example, each of the propulsion mechanisms may be oriented approximately forty-five degrees about each respective motor arm, in either the first or second direction. In comparison, if the lifting force of the aerial vehicle when the aerial vehicle is in the VTOL orientation is of higher importance, the orientation of the propulsion mechanisms may be less than thirty degrees. For example, each propulsion mechanism may be oriented approximately ten degrees from a vertical orientation about each respective motor arm.

In some implementations, the orientations of some propulsion mechanisms may be different than other propulsion mechanisms. For example, propulsion mechanisms 402-1, 402-3, and 402-5 may each be oriented approximately fifteen degrees in the first direction and propulsion mechanisms 402-2, 402-4, and 402-6 may be oriented approximately twenty-five degrees in the second direction. In still other examples, pairs of propulsion mechanisms may have different orientations than other pairs of propulsion mechanisms. For example, propulsion mechanisms 402-1 and 402-6 may each be oriented approximately thirty degrees in the first direction and second direction, respectively, toward one another, propulsion mechanisms 402-3 and 402-2 may each be oriented approximately forty-five degrees in the first direction and second direction, respectively, toward one another, and propulsion mechanisms 402-5 and 402-4 may each be oriented approximately forty-five degrees in the first direction and second direction, respectively, toward one another.

As discussed below, by orienting propulsion mechanisms partially toward one another in pairs, as illustrated, the lateral or horizontal forces generated by the pairs of propulsion mechanisms, when producing the same amount of force, will cancel out such that the sum of the forces from the pair is only in a substantially vertical direction (Z direction), when the aerial vehicle is in the VTOL orientation. Likewise, as discussed below, if one propulsion mechanism of the pair produces a force larger than a second propulsion mechanism, a lateral or horizontal force will result in the X direction and/or the Y direction, when the aerial vehicle is in the VTOL orientation. A horizontal force produced from one or more of the pairs of propulsion mechanisms enables the aerial vehicle to translate in a horizontal direction and/or yaw without altering the pitch of the aerial vehicle, when the aerial vehicle is in the VTOL orientation. Producing lateral forces by multiple pairs of propulsion mechanisms 402 enables the aerial vehicle 400 to operate independently in any of the six degrees of freedom (surge, sway, heave, pitch, yaw, and roll). As a result, the stability and maneuverability of the aerial vehicle 400 is increased.

While the implementations illustrated in FIGS. 1-4 include six arms that extend radially from a central portion of the aerial vehicle and are coupled to the ring wing, in other implementations, there may be fewer or additional arms. For example, the aerial vehicle may include support arms that extend between the motor arms and provide additional support to the aerial vehicle. As another example, not all of the motor arms may extend to and couple with the ring wing.

FIG. 5 illustrates a view of an aerial vehicle 500 with a ring wing that is substantially cylindrical or circular in shape and that surrounds a plurality of propulsion mechanisms, in accordance with disclosed implementations. The aerial vehicle 500 includes six motors 501-1, 501-2, 501-3, 501-4, 501-5, and 501-6 and corresponding propellers 504-1, 504-2, 504-3, 504-4, 504-5, and 504-6 spaced about the fuselage 510 of the aerial vehicle 500. The propellers 504 may be any form of propeller (e.g., graphite, carbon fiber) and of any size. For example, the propellers may be 25.4 cm (10 inch) - 30.5 cm (12 inch) diameter carbon fiber propellers.

The form and/or size of some of the propellers may be different than other propellers. Likewise, the motors 501 may be any form of motor, such as a DC brushless motor, and may be of a size sufficient to rotate the corresponding propeller. Likewise, in some implementations, the size and/or type of some of the motors 501 may be different than other motors 501. In some implementations, the motors may be rotated in either direction such that the force generated by the propellers may be either a positive force, when rotating in a first direction, or a negative force, when rotating in the second direction. Alternatively, or in addition thereto, the pitch of the blades of a propeller may be variable. By varying the pitch of the blades, the force generated by the propeller may be altered to either be in a positive direction or a negative direction. Still further, in some implementations, the pitch of the blades may be adjusted such that they are aligned with the direction of travel of the aerial vehicle and thus provide significantly less drag if they are not rotating.

Each pair of motors 501 and corresponding propellers 504 will be referred to herein collectively as a propulsion mechanism 502, such as propulsion mechanisms 502-1, 502-2, 502-3, 502-4, 502-5, and 502-6. Likewise, while the example illustrated in FIG. 5 describes the propulsion mechanisms 502 as including motors 501 and propellers 504, in other implementations, other forms of propulsion may be utilized as the propulsion mechanisms 502. For example, one or more of the propulsion mechanisms 502 of the aerial vehicle 500 may utilize fans, jets, turbojets, turbo fans, jet engines, and/or the like to maneuver the aerial vehicle. Generally described, a propulsion mechanism 502, as used herein, includes any form of propulsion mechanism that is capable of generating a force sufficient to maneuver the aerial vehicle, alone and/or in combination with other propulsion mechanisms. Furthermore, in selected implementations, propulsion mechanisms (e.g., 502-1, 502-2, 502-3, 502-4, 502-5, and 502-6) may be configured such that their individual orientations may be dynamically modified (e.g., change from vertical to horizontal flight orientation or any position therebetween).

Likewise, while the examples herein describe the propulsion mechanisms being able to generate force in either direction, in some implementations, the propulsion mechanisms may only generate force in a single direction. However, the orientation of the propulsion mechanism may be adjusted so that the force can be oriented in a positive direction, a negative direction, and/or any other direction.

The aerial vehicle 500 also includes a ring wing 507 having a substantially cylindrical or circular shape that extends around and forms the perimeter of the aerial vehicle 500. In the illustrated example, the ring wing is substantially circular in shape and tapers toward the bottom of the aerial vehicle. The ring wing 507 has an airfoil shape to produce lift when the aerial vehicle is oriented as illustrated in FIG. 5 and moving in a direction that is substantially horizontal. As illustrated, and discussed further below, the ring wing is positioned at an angle with respect to the fuselage 510 such that the lower part of the ring wing acts as a front wing as it is positioned toward the front of the aerial vehicle when oriented as shown and moving in a horizontal direction. The top of the ring wing, which has a longer chord length than the bottom portion of the ring wing 507, is positioned farther back and thus acts as a rear wing.

The ring wing is secured to the fuselage 510 by motor arms 505. In the illustrated example, each of motors arms 505-1, 505-3, 505-4, and 505-6 are coupled to the fuselage 510 at one end, extend from the fuselage 510 and couple to the ring wing 507 at a second end, thereby securing the ring wing 507 to the fuselage 510.

The fuselage 510, motor arms 505, and ring wing 507 of the aerial vehicle 500 may be formed of any one or more suitable materials, such as graphite, carbon fiber, and/or aluminum.

Each of the propulsion mechanisms 502 are coupled to a respective motor arm 505 (or propulsion mechanism arm) such that the propulsion mechanism 502 is substantially contained within the perimeter of the ring wing 507. For example, propulsion mechanism 502-1 is coupled to motor arm 505-1, propulsion mechanism 502-2 is coupled to motor arm 505-2, propulsion mechanism 502-3 is coupled to motor arm 505-3, propulsion mechanism 502-4 is coupled to motor arm 505-4, propulsion mechanism 502-5 is coupled to motor arm 505-5, and propulsion mechanism 502-6 is coupled to motor arm 505-6. In the illustrated example, propulsion mechanisms 502-1, 502-3, 502-4, and 502-6 are coupled at an approximate mid-point of the respective motor arm 505 between the fuselage 510 and the ring wing 507. In other implementations, the propulsion mechanisms (such as propulsion mechanisms 502-2 and 502-5 illustrated in FIG. 5) may be coupled at other locations along the motor arm. Likewise, in some implementations, some of the propulsion mechanisms may be coupled to a mid-point of the motor arm and some of the propulsion mechanisms may be coupled at other locations along respective motor arms (e.g., closer toward the fuselage 510 or closer toward the ring wing 507).

As illustrated, the propulsion mechanisms 502 may be oriented at different angles with respect to each other. For example, propulsion mechanisms 502-2 and 502-5 are aligned with the fuselage 510 such that the force generated by each of propulsion mechanisms 502-2 and 502-5 is in-line or in the same direction or orientation as the fuselage. In the illustrated example, the aerial vehicle 500 is oriented for horizontal flight such that the fuselage is oriented horizontally in the direction of travel. In such an orientation, the propulsion mechanisms 502-2 and 502-5 provide horizontal forces, also referred to herein as thrusting forces, and act as thrusting propulsion mechanisms.

In comparison to propulsion mechanisms 502-2 and 502-5, each of propulsion mechanisms 502-1, 502-3, 502-4, and 502-6 are offset or angled with respect to the orientation of the fuselage 510. When the aerial vehicle 500 is oriented horizontally as shown in FIG. 5 for horizontal flight, the propulsion mechanisms 502-1, 502-3, 502-4, and 502-6 may be used as propulsion mechanisms, providing thrust in a non-horizontal direction to cause the aerial vehicle to pitch, yaw, roll, heave and/or sway. In other implementations, during horizontal flight, the propulsion mechanisms 502-1, 502-3, 502-4, and 502-6 may be disabled such that they do not produce any forces and the aerial vehicle 500 may be propelled aerially in a horizontal direction as a result of the lifting force from the aerodynamic shape of the ring wing 507 and the horizontal thrust produced by the thrusting propulsion mechanisms 502-2 and 502-5.

The angle of orientation of each of the propulsion mechanisms 502-1, 502-3, 502-4, and 502-6 may vary for different implementations. Likewise, in some implementations, the offset of the propulsion mechanisms 502-1, 502-3, 502-4, and 502-6 may each be the same, with some oriented in one direction and some oriented in another direction, may each be oriented different amounts, and/or in different directions.

In the illustrated example of FIG. 5, each propulsion mechanism 502-1, 502-2, 502-3, 502-4, 502-5, and 502-6 may be oriented approximately thirty degrees with respect to the position of each respective motor arm 505-1, 505-2, 505-3, 505-4, 505-5, and 505-6. In addition, the direction of orientation of the propulsion mechanisms is such that pairs of propulsion mechanisms are oriented toward one another. For example, propulsion mechanism 502-1 is oriented approximately thirty degrees toward propulsion mechanism 502-6. Likewise, propulsion mechanism 502-2 is oriented approximately thirty degrees in a second direction about the second motor arm 505-2 and oriented toward propulsion mechanism 502-3. Finally, propulsion mechanism 502-4 is oriented approximately thirty degrees in the first direction about the fourth motor arm 505-4 and toward propulsion mechanism 502-5. As illustrated, propulsion mechanisms 502-2 and 502-5, which are on opposing sides of the fuselage 110, are aligned and oriented in a same first direction (in this example, horizontal). Propulsion mechanisms 502-3 and 502-6, which are on opposing sides of the fuselage 510, are aligned and oriented in a same second direction, which is angled compared to the first direction. Propulsion mechanisms 502-1 and 502-4, which are on opposing sides of the fuselage 510, are aligned and oriented in a same third direction, which is angled compared to the first direction and the second direction.

Various other features, variations, modifications, and/or example embodiments described herein with respect to FIGs. 1-4 may also be combined and/or incorporated into the aerial vehicle 500 as illustrated in FIG. 5.

While the examples discussed above in FIGS. 1-5 describe a ring wing in either a substantially hexagonal shape (FIGs. 1-4) or a substantially circular shape (FIG. 5), in other implementations, the ring wing may have other shapes. For example, the ring wing may be substantially square, rectangular, pentagonal, octagonal, etc. Further, while the examples discussed above include six propulsion mechanism arms, six propulsion mechanisms, and six propellers, in other example embodiments, the aerial vehicle reconfigurations described herein may be implemented on various other types of aerial vehicles, such as aerial vehicles having fewer than six propulsion mechanism arms, motors, and propellers, aerial vehicles having greater than six propulsion mechanism arms, motors, and propellers, and/or aerial vehicles having configurations different from those described herein, such as quad-copters, octa-copters, or other configurations.

During operation of example aerial vehicles, such as those illustrated and described with respect to FIGs. 1-5, various types of faults or failure modes may arise that result in degraded operational states of the aerial vehicles. For example, one or more of the propulsion mechanisms may no longer operate normally due to various types of faults, which may be referred to as motor out situations. In order to improve the reliability, safety, and operational capability of the aerial vehicles, the aerial vehicles may implement one or more reconfigurations in response to such faults in order to maintain flight of the aerial vehicles and land at safe landing locations.

The various types of faults that may result in motor out situations may include damage or loss of function of one or more propellers or propeller blades, damage or loss of function of one or more motors, damage or loss of function of one or more motor controllers that are each in communication with a corresponding motor and propeller, damage or loss of function between one or more motor controllers and a flight controller that is in communication with each of the motor controllers, loss of power or other electrical signals between two or more components of the aerial vehicle, or various other types of faults.

In addition, the various types of faults may be detected in various manners. For example, damage or loss of function of one or more propellers or propeller blades may be detected by comparison of actual values of motor revolutions per minute (rpm) and applied current with expected values of motor rpm and applied current, since a motor rotating with damaged or missing propellers or blades may draw different values of current than expected values while rotating at a particular motor rpm. In addition, damage or loss of function of one or more motors may be detected by comparison of measured rpm versus commanded rpm, or by measurements and/or calculations related to motor efficiency. Further, various faults of one or more propellers, blades, and/or motors may be detected by one or more motor controllers, which may be provided as feedback to the flight controller. Moreover, various faults of one or more motor controllers may be detected by the flight controller.

In further example embodiments, various other types of sensors may be used to detect one or more of the various types of faults that result in motor out situations. For example, the sensors may include imaging devices or cameras that can capture images of portions of propellers, blades, and/or motors, which images may be processed to determine damage or loss of function of one or more components. In addition, the sensors may include inertial measurement units, accelerometers, gyroscopes, or similar types of sensors that may detect changes to flight operations or navigation of the aerial vehicle that may be caused by one or more faults that result in motor out situations. Various other types of sensors may also detect aspects of flight, navigation, movement, or operation of various components of the aerial vehicles to identify one or more faults. Moreover, the various types of faults may be detected by various combinations of methods described herein.

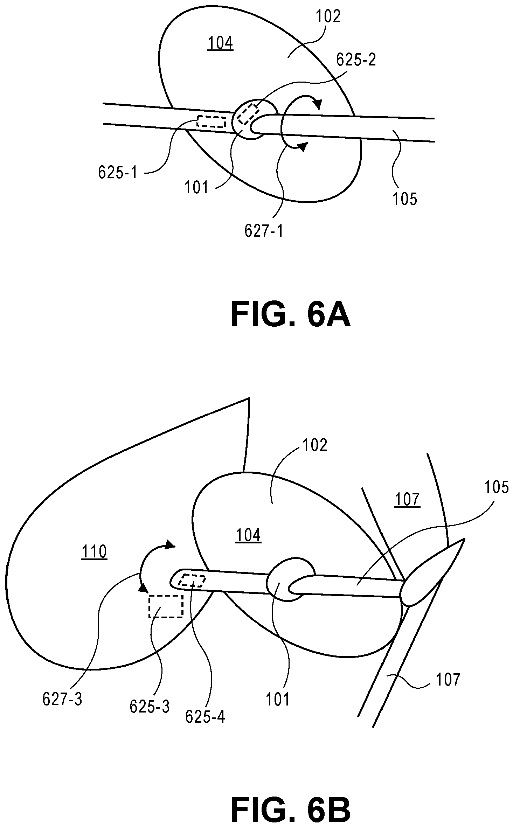

FIGs. 6A and 6B illustrate views of a propulsion mechanism 102 having an adjustable cant angle, in accordance with disclosed implementations.

As shown in FIG. 6A, the propulsion mechanism 102 may include a motor 101 and a propeller 104. In example embodiments, the motor 101 may be rotatably or movably mounted to the motor arm 105. For example, an actuator 625-1 may be associated with the motor arm 105, and/or an actuator 625-2 may be associated with the motor 101. Each of the actuators 625 may be connected via electrical lines or wirelessly (not shown) to an aerial vehicle control system, a part thereof, or another component in communication with the aerial vehicle control system, in order to receive power and/or instructions or commands. One or more of the actuators 625 may be configured to modify the cant angle 627-1 of the motor 101 relative to the motor arm 105, such that the motor 101 may rotate substantially around an axis of the motor arm 105.

The actuators 625 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 625 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 6A, the actuators 625 may include a clutch, a switch, or a spring-loaded actuator that moves the motor 101 relative to the motor arm 105 between two or more cant angles. In addition, the actuators 625 may include a servo or a magnetic actuator that moves the motor 101 relative to the motor arm 105 between two or more cant angles. Further, the actuators 625 may include a solenoid and a bias element that move the motor 101 relative to the motor arm 105 between two or more cant angles. Moreover, the actuators 625 may include a motor, a rotary actuator, a screw actuator, or a geared actuator that moves the motor 101 relative to the motor arm 105 between two or more cant angles. Various other actuators or combinations of actuators may be used to effect rotational movement of the motor 101 relative to the motor arm 105.

As shown in FIG. 6B, the propulsion mechanism 102 may include a motor 101 and a propeller 104. In example embodiments, the motor 101 and motor arm 105 may be rotatably or movably mounted to the fuselage 110 and wing 107. For example, an actuator 625-3 may be associated with the fuselage 110, an actuator 625-4 may be associated with the motor arm 105, and/or an actuator (not shown) may be associated with the wing 107. Each of the actuators 625 may be connected via electrical lines or wirelessly (not shown) to an aerial vehicle control system, a part thereof, or another component in communication with the aerial vehicle control system, in order to receive power and/or instructions or commands. One or more of the actuators 625 may be configured to modify the cant angle 627-3 of the motor 101 and motor arm 105 relative to the fuselage 110 and wing 107, such that the motor 101 and motor arm 105 may rotate substantially around an axis of the motor arm 105.

The actuators 625 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 625 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 6B, the actuators 625 may include a clutch, a switch, or a spring-loaded actuator that moves the motor 101 and motor arm 105 relative to the fuselage 110 and wing 107 between two or more cant angles. In addition, the actuators 625 may include a servo or a magnetic actuator that moves the motor 101 and motor arm 105 relative to the fuselage 110 and wing 107 between two or more cant angles. Further, the actuators 625 may include a solenoid and a bias element that move the motor 101 and motor arm 105 relative to the fuselage 110 and wing 107 between two or more cant angles. Moreover, the actuators 625 may include a motor, a rotary actuator, a screw actuator, or a geared actuator that moves the motor 101 and motor arm 105 relative to the fuselage 110 and wing 107 between two or more cant angles. Various other actuators or combinations of actuators may be used to effect rotational movement of the motor 101 and motor arm 105 relative to the fuselage 110 and wing 107.

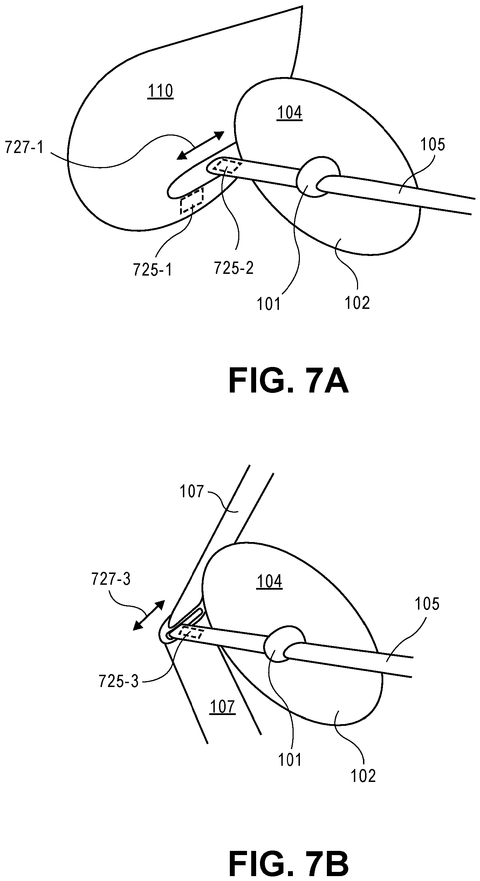

FIGs. 7A and 7B illustrate views of a propulsion mechanism 102 having an adjustable toe angle, in accordance with disclosed implementations.

As shown in FIG. 7A, the propulsion mechanism 102 may include a motor 101 and a propeller 104. In example embodiments, the motor 101 and motor arm 105 may be movably mounted to the fuselage 110. For example, an actuator 725-1 may be associated with the fuselage 110, and/or an actuator 725-2 may be associated with the motor arm 105. Each of the actuators 725 may be connected via electrical lines or wirelessly (not shown) to an aerial vehicle control system, a part thereof, or another component in communication with the aerial vehicle control system, in order to receive power and/or instructions or commands. One or more of the actuators 725 may be configured to modify the toe angle 727-1 of the motor 101 and motor arm 105 relative to the fuselage 110, such that the motor 101 and motor arm 105 may rotate or pivot toward or away from the fuselage 110.

The actuators 725 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 725 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 7A, the actuators 725 may include a clutch, a switch, or a spring-loaded actuator that moves the motor 101 and motor arm 105 relative to the fuselage 110 between two or more toe angles. In addition, the actuators 725 may include a servo or a magnetic actuator that moves the motor 101 and motor arm 105 relative to the fuselage 110 between two or more toe angles. Further, the actuators 725 may include a solenoid and a bias element that move the motor 101 and motor arm 105 relative to the fuselage 110 between two or more toe angles. Moreover, the actuators 725 may include a motor, a rotary actuator, a linear actuator, a screw actuator, or a geared actuator (such as a rack and pinion) that moves the motor 101 and motor arm 105 relative to the fuselage 110 between two or more toe angles. Various other actuators or combinations of actuators may be used to effect movement of the motor 101 and motor arm 105 relative to the fuselage 110.

As shown in FIG. 7B, the propulsion mechanism 102 may include a motor 101 and a propeller 104. In example embodiments, the motor 101 and motor arm 105 may be movably mounted to the wing 107. For example, an actuator 725-3 may be associated with the motor arm 105, and/or an actuator (not shown) may be associated with the wing 107. Each of the actuators 725 may be connected via electrical lines or wirelessly (not shown) to an aerial vehicle control system, a part thereof, or another component in communication with the aerial vehicle control system, in order to receive power and/or instructions or commands. One or more of the actuators 725 may be configured to modify the toe angle 727-3 of the motor 101 and motor arm 105 relative to the wing 107, such that the motor 101 and motor arm 105 may rotate or pivot toward or away from the wing 107.

The actuators 725 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 725 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 7B, the actuators 725 may include a clutch, a switch, or a spring-loaded actuator that moves the motor 101 and motor arm 105 relative to the wing 107 between two or more toe angles. In addition, the actuators 725 may include a servo or a magnetic actuator that moves the motor 101 and motor arm 105 relative to the wing 107 between two or more toe angles. Further, the actuators 725 may include a solenoid and a bias element that move the motor 101 and motor arm 105 relative to the wing 107 between two or more toe angles. Moreover, the actuators 725 may include a motor, a rotary actuator, a linear actuator, a screw actuator, or a geared actuator (such as a rack and pinion) that moves the motor 101 and motor arm 105 relative to the wing 107 between two or more toe angles. Various other actuators or combinations of actuators may be used to effect movement of the motor 101 and motor arm 105 relative to the wing 107.

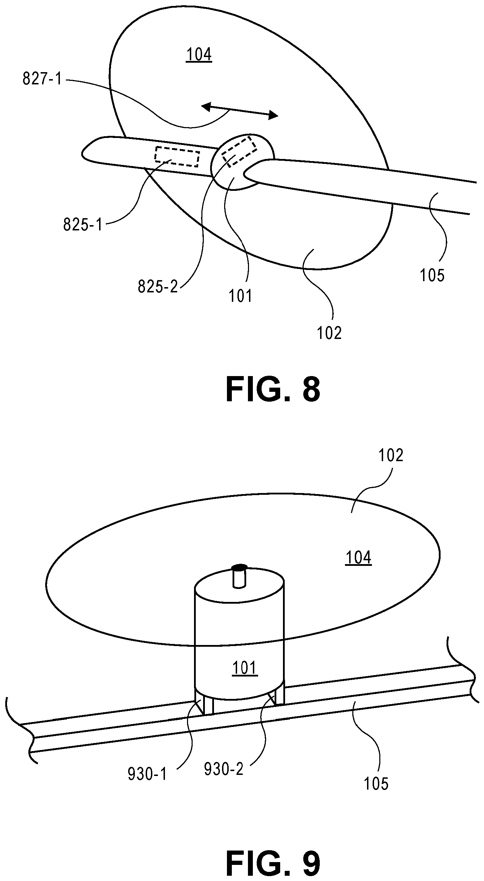

FIG. 8 illustrates a view of a propulsion mechanism 102 having an adjustable position, in accordance with disclosed implementations.

As shown in FIG. 8, the propulsion mechanism 102 may include a motor 101 and a propeller 104. In example embodiments, the motor 101 may be movably mounted to the motor arm 105. For example, an actuator 825-1 may be associated with the motor arm 105, and/or an actuator 825-2 may be associated with the motor 101. Each of the actuators 825 may be connected via electrical lines or wirelessly (not shown) to an aerial vehicle control system, a part thereof, or another component in communication with the aerial vehicle control system, in order to receive power and/or instructions or commands. One or more of the actuators 825 may be configured to modify the position 827-1 of the motor 101 relative to the motor arm 105, such that the motor 101 may move or translate toward or away from the fuselage 110. In some example embodiments, in order to move or translate the motor 101 relative to the motor arm 105 away from the fuselage 110 and toward the wing 107 of the aerial vehicle, one or more sections of the wing 107 of the aerial vehicle may be moved, released, or disconnected, in order to provide clearance for the propulsion mechanism 102, e.g., the propeller 104 rotated by the motor 101.

The actuators 825 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 825 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 8, the actuators 825 may include a clutch, a switch, or a spring-loaded actuator that moves the motor 101 relative to the motor arm 105 between two or more positions. In addition, the actuators 825 may include a servo or a magnetic actuator that moves the motor 101 relative to the motor arm 105 between two or more positions. Further, the actuators 825 may include a solenoid and a bias element that move the motor 101 relative to the motor arm 105 between two or more positions. Moreover, the actuators 825 may include a motor, a rotary actuator, a linear actuator, a screw actuator, or a geared actuator (such as a rack and pinion) that moves the motor 101 relative to the motor arm 105 between two or more positions. Various other actuators or combinations of actuators may be used to effect movement or translation of the motor 101 relative to the motor arm 105.

FIG. 9 illustrates a view of a propulsion mechanism 102 having an adjustable orientation using variable elasticity, in accordance with disclosed implementations.

As shown in FIG. 9, the propulsion mechanism 102 may include a motor 101 and a propeller 104. In example embodiments, the motor 101 may be movably or pivotably mounted to the motor arm 105. For example, one or more actuators 930 having variable elasticity may be mounted or coupled between the motor 101 and the motor arm 105, such as actuators 930-1 and 930-2. Each of the actuators 930 may be connected via electrical lines or wirelessly (not shown) to an aerial vehicle control system, a part thereof, or another component in communication with the aerial vehicle control system, in order to receive power and/or instructions or commands. One or more of the actuators 930 may be configured to modify the position and/or orientation of the motor 101 relative to the motor arm 105, such that the motor 101 may move or pivot relative to the motor arm 105. Although FIG. 9 shows two actuators 930-1 and 930-2 having variable elasticity, other numbers or arrangements of actuators may also be mounted or coupled between the motor 101 and the motor arm 105.

The actuators 930 may include one or more of a tunable or variable bias element or spring, a magnetic actuator, a piezoelectric actuator, a solenoid, a linear actuator, or other types of actuators that may permit active or passive control of elasticity or springiness. In addition, the actuators 930 may be configured for one-time actuation, e.g., upon detection of a propulsion mechanism failure or other aerial vehicle fault or failure, may be configured for one-way or two-way actuation, may be configured for binary actuation between two different levels of elasticity or springiness, and/or may be configured for variable actuation between a plurality of different levels of elasticity or springiness.

For example, as shown in FIG. 9, the actuators 930 may include a tunable or variable bias element or spring or a magnetic actuator that may be controlled to change its elasticity or springiness. In response to altering the elasticity or springiness of one or more actuators 930, a direction of thrust generated by the propulsion mechanism 102 may be dependent upon a magnitude of thrust generated by the propulsion mechanism 102 and the modified elasticity of the one or more actuators 930. In the example embodiment of FIG. 9, if the actuator 930-1 is modified to have greater elasticity than actuator 930-2, the direction of thrust generated by the propulsion mechanism 102 may rotate or pivot toward actuator 930-2 as actuator 930-1 extends or lengthens due to its greater elasticity, dependent upon the magnitude of thrust generated by the propulsion mechanism 102. Likewise, if the actuator 930-2 is modified to have greater elasticity than actuator 930-1, the direction of thrust generated by the propulsion mechanism 102 may rotate or pivot toward actuator 930-1 as actuator 930-2 extends or lengthens due to its greater elasticity, dependent upon the magnitude of thrust generated by the propulsion mechanism 102. Thus, a greater magnitude of thrust of a propulsion mechanism combined with a change in elasticity of one or more actuators may result in a greater change in a direction of thrust of the propulsion mechanism.

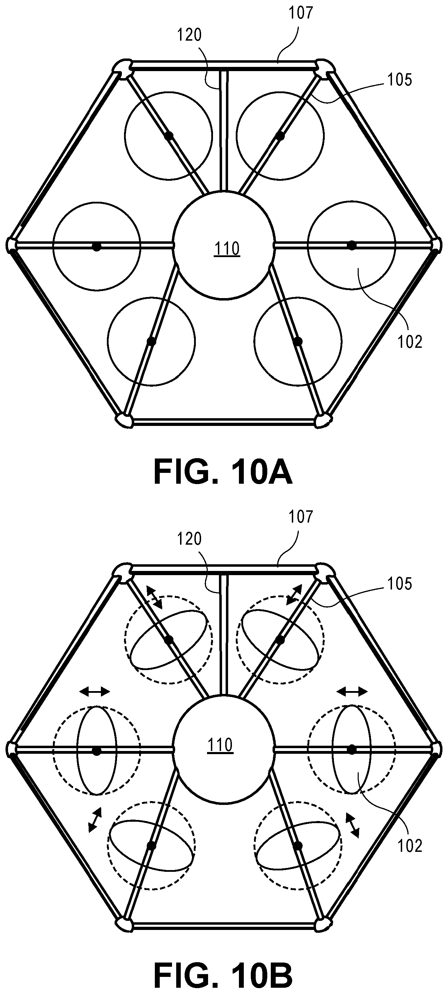

FIGs. 10A-10C illustrate various views of an aerial vehicle with adjustable propulsion mechanisms, in accordance with disclosed implementations.

As shown in FIG. 10A, one or more of the propulsion mechanisms 102, e.g., all propulsion mechanisms 102 or all except any faulty or failed propulsion mechanisms 102, may be reconfigured such that the propellers associated with the propulsion mechanisms 102 may have modified cant angles to rotate within the same plane, or within parallel planes. That is, the propellers associated with the propulsion mechanisms 102 may be planarized. In example embodiments in which one or more of the propulsion mechanisms do not include propellers, directions of thrust of each of the propulsion mechanisms may be aligned in a same direction. By planarizing the operational propellers of the propulsion mechanisms 102, control of an aerial vehicle that has experienced a fault or failure of a propulsion mechanism may be simplified or improved.

As shown in FIG. 10B, one or more of the propulsion mechanisms 102, e.g., all propulsion mechanisms 102 or all except any faulty or failed propulsion mechanisms 102, may be reconfigured such that the propellers and motors associated with the propulsion mechanisms 102 may have modified toe angles toward or away from the fuselage 110. That is, the propellers and motors associated with the propulsion mechanisms 102 may be rotated or pivoted radially inward and/or radially outward relative to the fuselage 110. In example embodiments in which one or more of the propulsion mechanisms do not include propellers, directions of thrust of each of the propulsion mechanisms may be rotated or pivoted radially inward and/or radially outward relative to the fuselage 110. By rotating or pivoting the operational propellers and motors of the propulsion mechanisms 102 toward or away from the fuselage 110, control of an aerial vehicle that has experienced a fault or failure of a propulsion mechanism may be simplified or improved.

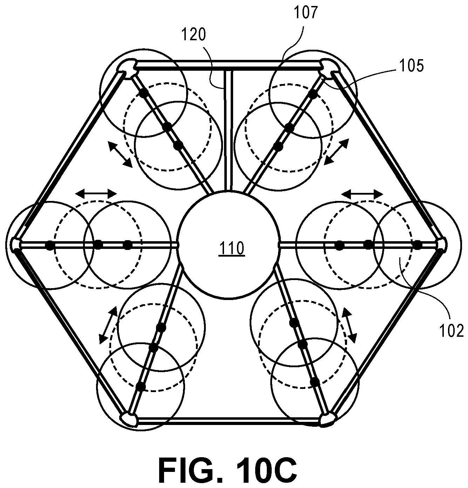

As shown in FIG. 10C, one or more of the propulsion mechanisms 102, e.g., all propulsion mechanisms 102 or all except any faulty or failed propulsion mechanisms 102, may be reconfigured such that the propellers and motors associated with the propulsion mechanisms 102 may have modified positions toward or away from the fuselage 110. That is, the propellers and motors associated with the propulsion mechanisms 102 may be moved or translated radially inward and/or radially outward relative to the fuselage 110. In example embodiments in which one or more of the propulsion mechanisms do not include propellers, directions of thrust of each of the propulsion mechanisms may be unchanged but moved or translated radially inward and/or radially outward relative to the fuselage 110. By moving or translating the operational propellers and motors of the propulsion mechanisms 102 toward or away from the fuselage 110, control of an aerial vehicle that has experienced a fault or failure of a propulsion mechanism may be simplified or improved.

Although FIGs. 6A-10C describe various individual reconfigurations of propulsion mechanisms of an aerial vehicle such as modifications to cant angles, toe angles, positions, or orientations, in various example embodiments, each propulsion mechanism of an aerial vehicle may be modified with any combination of changes to cant angles, toe angles, positions, and/or orientations. Further, although FIGs. 10A-10C generally describe the same or similar modifications to cant angles, toe angles, positions, or orientations of each of the propulsion mechanisms of an aerial vehicle, in various example embodiments, each propulsion mechanism of an aerial vehicle may be modified differently from other propulsion mechanisms of the aerial vehicle. By various combinations of modifications to cant angles, toe angles, positions, and/or orientations of one or more propulsion mechanisms of an aerial vehicle, control and safety of the aerial vehicle may be improved or increased responsive to various potential faults or failures associated with one or more propulsion mechanisms of an aerial vehicle.

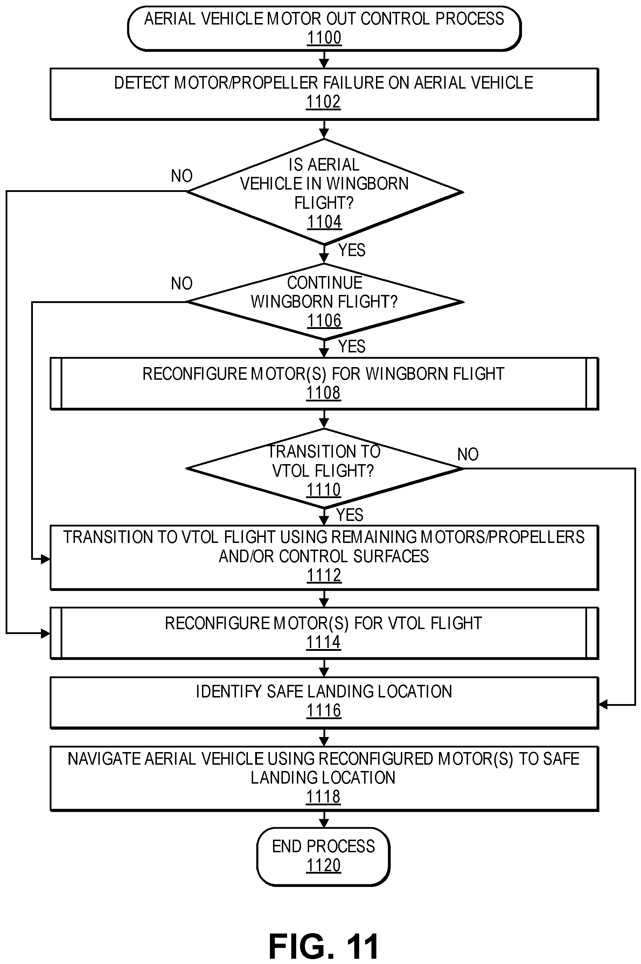

FIG. 11 illustrates a flow diagram of an example aerial vehicle motor out control process 1100, in accordance with disclosed implementations.

The process 1100 may begin by detecting a motor/propeller failure on an aerial vehicle, as at 1102. For example, the motor/propeller failure may be a propulsion mechanism failure. In addition, the detected failure may be any of the various types of faults that may result in motor out situations, as described herein.

The process 1100 may continue by determining whether the aerial vehicle is currently in wingborn flight, as at 1104. For example, wingborn flight may be synonymous with navigation of the aerial vehicle in a substantially horizontal direction, as described with reference to FIGs. 1 and 3-5. This may be determined based on data associated with the flight controller and/or one or more motor controllers. In addition, this may be determined based on a flight plan of the aerial vehicle. Further, this may be determined based on data associated with one or more sensors, such as an inertial measurement unit, accelerometers, and/or gyroscopes.

If it is determined that the aerial vehicle is currently in wingborn flight, it may then be determined whether the aerial vehicle is to continue wingborn flight, as at 1106. This may be determined based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to continue wingborn flight, then the process 1100 may proceed by reconfiguring one or more motors for wingborn flight, as at 1108. For example, one or more motors (or propulsion mechanisms) may be reconfigured to have modified cant angles, toe angles, positions, and/or orientations in order to maintain control and safety of the aerial vehicle in wingborn flight responsive to the motor out situation. For example, cant angles or toe angles of one or more motors may be modified to provide additional thrust in the direction of travel to maintain wingborn flight. In addition, cant angles, toe angles, and/or positions of one or more motors may be modified to provide additional stability to the aerial vehicle in wingborn flight. The determination of whether to continue with wingborn flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

After reconfiguring the motors and continuing wingborn flight, as at 1108, the process 1100 may then continue by determining whether to transition to VTOL flight, as at 1110. The determination of whether to transition to VTOL flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to transition to VTOL flight, as at 1110, or after determining that the aerial vehicle is not to continue in wingborn flight, as at 1106, then the process 1100 may proceed to transition the aerial vehicle from wingborn flight to VTOL flight using any control surfaces and/or any remaining propulsion mechanisms, as at 1112. As described herein, the aerial vehicle may transition from wingborn flight to VTOL flight by reducing pitch and/or speed of the aerial vehicle such that the ring wing produces less lift and the aerial vehicle pitches rearward to a VTOL flight orientation, as described with respect to FIG. 2.

After transitioning to VTOL flight, as at 1112, or after determining that the aerial vehicle is not currently in wingborn flight, as at 1104, the process 1100 may continue by reconfiguring one or more motors for VTOL flight, as at 1114. For example, one or more motors (or propulsion mechanisms) may be reconfigured to have modified cant angles, toe angles, positions, and/or orientations in order to maintain control and safety of the aerial vehicle in VTOL flight responsive to the motor out situation. For example, cant angles and/or toe angles of one or more motors may be modified to provide additional hovering thrust to maintain VTOL flight. In some examples, cant angles and/or toe angles of one or more motors may be modified to planarize the propellers and simplify or improve control in VTOL flight. In addition, toe angles of one or more motors may be modified to pivot radially inward or radially outward relative to the fuselage to improve control and safety of the aerial vehicle in VTOL flight. Further, positions of one or more motors may be modified to move radially inward or radially outward relative to the fuselage to provide additional stability to the aerial vehicle in VTOL flight.

After reconfiguring one or more motors for VTOL flight, as at 1114, or after determining that the aerial vehicle is not to transition to VTOL flight and instead continue with wingborn flight, as at 1110, the process 1100 may proceed by identifying a safe landing location, as at 1116. For example, the safe landing location may be predetermined and stored by or provided to the aerial vehicle. Various safe landing locations may be identified and stored beforehand, and the aerial vehicle may identify a closest available safe landing location responsive to the motor out situation. In other examples, the aerial vehicle may use one or more sensors, such as imaging devices, radar, LIDAR, proximity sensors, inertial measurement units, navigation sensors such as global positioning sensors, and/or other types of sensors, to identify a safe landing location responsive to the motor out situation. Various other types of sensors, beacons, or communication devices may also be used to identify a safe landing location for the aerial vehicle.

The process 1100 may then continue to control the aerial vehicle using the reconfigured one or more motors to the safe landing location, as at 1118. For example, the aerial vehicle may reconfigure one or more motors for wingborn flight and/or may reconfigure one or more motors for VTOL flight, and the aerial vehicle may navigate to the identified safe landing location using the reconfigured one or more motors, as well as based on data from one or more sensors, such as imaging devices and navigation sensors. The process 1100 may then end, as at 1120.

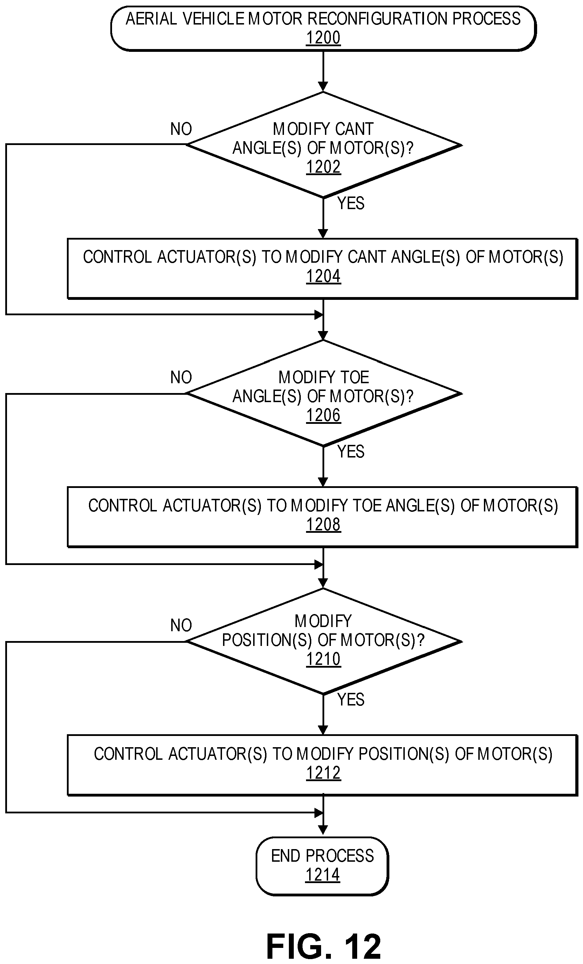

FIG. 12 illustrates a flow diagram of an example aerial vehicle motor reconfiguration process 1200, in accordance with disclosed implementations.

The process 1200 may begin by determining whether to modify cant angles of one or more motors, as at 1202. If it is determined that cant angles of one or more motors are to be modified responsive to a motor out situation, then the process 1200 may continue to control one or more actuators to modify cant angles of associated motors, as at 1204. As described herein, various types, numbers, or arrangements of actuators may be associated with each of the one or more motors, and one or more of such actuators may be actuated to effect changes to cant angles of the associated motors, e.g., around axes of respective motor arms to which the motors are coupled or mounted.

The process 1200 may then proceed by determining whether to modify toe angles of one or more motors, as at 1206. If it is determined that toe angles of one or more motors are to be modified responsive to a motor out situation, then the process 1200 may continue to control one or more actuators to modify toe angles of associated motors, as at 1208. As described herein, various types, numbers, or arrangements of actuators may be associated with each of the one or more motors, and one or more of such actuators may be actuated to effect changes to toe angles of the associated motors, e.g., relative to portions of the fuselage and/or portions of the wing to which the motors and motor arms are coupled or mounted.

The process 1200 may then proceed by determining whether to modify positions of one or more motors, as at 1210. If it is determined that positions of one or more motors are to be modified responsive to a motor out situation, then the process 1200 may continue to control one or more actuators to modify positions of associated motors, as at 1212. As described herein, various types, numbers, or arrangements of actuators may be associated with each of the one or more motors, and one or more of such actuators may be actuated to effect changes to positions of the associated motors, e.g., relative to portions of the fuselage and/or portions of the wing and along motor arms to which the motors are coupled or mounted. The process 1200 may then end, as at 1214.

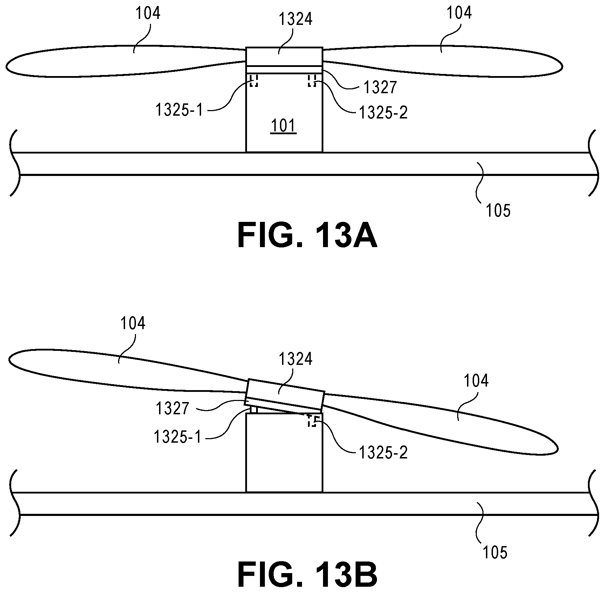

FIGs. 13A and 13B illustrate views of a propeller 104 of a propulsion mechanism having an adjustable orientation, in accordance with disclosed implementations.

As shown in FIG. 13A, the propeller (or propeller blades) 104 may be coupled to a propeller hub 1324 that is coupled to and rotated by a motor 101. In addition, the propeller hub 1324 may be connected to a shaft or rotating part (not shown) of the motor 101 via a ball joint or other pivotable connection. The motor 101 may also be mounted or coupled to a motor arm 105. In example embodiments, a propeller cam 1327 may be positioned between the motor 101 and the propeller hub 1324. The propeller cam 1327 may be associated with the motor 101, and may include an interfacing surface, track, and/or bearing along which the propeller hub 1324 rotates. One or more actuators 1325 may be associated with the motor 101 and/or the propeller cam 1327, and may be operable to alter an orientation of the propeller cam 1327 relative to the motor 101. Each of the actuators 1325 may be connected via electrical lines or wirelessly (not shown) to an aerial vehicle control system, a part thereof, or another component in communication with the aerial vehicle control system, in order to receive power and/or instructions or commands. Although FIG. 13A shows two actuators 1325-1 and 1325-2 associated with the motor 101 and/or the propeller cam 1327, other numbers or arrangements of actuators may also be mounted or coupled between the motor 101 and the propeller cam 1327.

The actuators 1325 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 1325 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 13A, the actuators 1325 may include a clutch, a switch, or a spring-loaded actuator that moves the propeller cam 1327 relative to the motor 101 between two or more angular orientations. In addition, the actuators 1325 may include a servo or a magnetic actuator that moves the propeller cam 1327 relative to the motor 101 between two or more angular orientations. Further, the actuators 1325 may include a solenoid and a bias element that move the propeller cam 1327 relative to the motor 101 between two or more angular orientations. Moreover, the actuators 1325 may include a motor, a rotary actuator, a screw actuator, or a geared actuator that moves the propeller cam 1327 relative to the motor 101 between two or more angular orientations. Various other actuators or combinations of actuators may be used to effect movement, pivoting, or rotation of the propeller cam 1327 relative to the motor 101.

As shown in the example illustrated embodiment in FIG. 13B, upon actuation of one actuator 1325-1, the propeller cam 1327 may change its angular orientation, e.g., rotate or pivot as a result of the extended actuator 1325-1. Because the propeller hub 1324 interfaces with a surface, track, or bearing of the propeller cam 1327, the propeller hub 1324 may also change its angular orientation in a manner similar to the propeller cam 1327. As a result, the angular orientation of the propeller 104 may be changed by actuation of the propeller cam 1327, such that a direction of thrust generated by the propeller 104 and motor 101 may be correspondingly modified.

Moreover, although FIGs. 13A and 13B describe a propeller cam that may alter an angular orientation of a propeller hub relative to a motor, other physical mechanisms may be utilized in place of or in addition to the propeller cam. For example, one or more bars or linkages and associated actuators may be coupled to a propeller hub and used to change an angular orientation of the propeller hub relative to a motor. In addition, a shaft of the motor may include a ball joint or other pivotable connection between the motor and the propeller hub, and one or more actuators, bars, or linkages and associated actuators may modify the angular orientation of the ball joint or other pivotable connection to change the angular orientation of the propeller hub and propeller. Various other physical mechanisms may also be used to modify the angular orientation of the propeller hub relative to the motor.

In further example embodiments, the one or more actuators 1325 associated with the motor 101 and/or the propeller cam 1327 may have variable elasticity. One or more of the actuators 1325 may be configured to modify the position and/or orientation of the propeller cam 1327 relative to the motor 101, such that the propeller cam 1327 may move or pivot relative to the motor 101. Other numbers or arrangements of actuators having variable elasticity may also be mounted or coupled between the motor 101 and the propeller cam 1327.

In the further example embodiments, the actuators 1325 may include one or more of a tunable or variable bias element or spring, a magnetic actuator, a piezoelectric actuator, a solenoid, a linear actuator, or other types of actuators that may permit active or passive control of elasticity or springiness. In addition, the actuators 1325 may be configured for one-time actuation, e.g., upon detection of a propulsion mechanism failure or other aerial vehicle fault or failure, may be configured for one-way or two-way actuation, may be configured for binary actuation between two different levels of elasticity or springiness, and/or may be configured for variable actuation between a plurality of different levels of elasticity or springiness.

For example, in the further example embodiment with respect to FIG. 13B, the actuators 1325 having variable elasticity may include a tunable or variable bias element or spring, or a magnetic actuator, that may be controlled to change its elasticity or springiness. In response to altering the elasticity or springiness of one or more actuators 1325, a direction of thrust generated by the propeller 104 and motor 101 may be dependent upon a magnitude of thrust generated by the propeller 104 and motor 101 and the modified elasticity of the one or more actuators 1325. In the further example embodiment of FIG. 13B, if the actuator 1325-1 is modified to have greater elasticity than actuator 1325-2, the direction of thrust generated by the propeller 104 and motor 101 may rotate or pivot as actuator 1325-1 extends or lengthens due to its greater elasticity, dependent upon the magnitude of thrust generated by the propeller 104 and motor 101. Likewise, if the actuator 1325-2 is modified to have greater elasticity than actuator 1325-1, the direction of thrust generated by the propeller 104 and motor 101 may rotate or pivot as actuator 1325-2 extends or lengthens due to its greater elasticity, dependent upon the magnitude of thrust generated by the propeller 104 and motor 101. Thus, a greater magnitude of thrust generated by a propeller and motor combined with a change in elasticity of one or more actuators may result in a greater change in a direction of thrust of the propeller and motor.

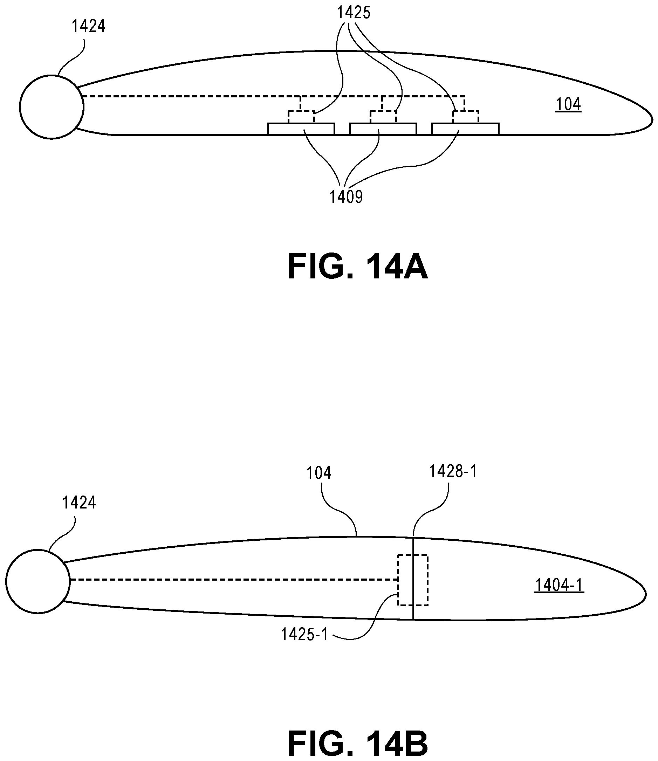

FIG. 14A illustrates a view of a propeller blade 104 of a propulsion mechanism having adjustable control surfaces and/or trim tabs 1409, in accordance with disclosed implementations.

As shown in FIG. 14A, the propeller blade 104 extending from propeller hub 1424 may include one or more control surfaces and/or trim tabs 1409 that are movably or pivotably connected to the propeller blade 104. For example, the propeller blade 104 may include three control surfaces or trim tabs 1409 along a trailing edge of the blade 104. Each of the control surfaces or trim tabs 1409 may be associated with one or more actuators 1425, and each of the actuators 1425 may be connected via electrical lines or wirelessly (shown as dashed lines) to an aerial vehicle control system, a part thereof, or another component in communication with the aerial vehicle control system, in order to receive power and/or instructions or commands. Although FIG. 14A shows three control surfaces or trim tabs in a particular arrangement and orientation, other numbers, arrangements, or orientations of control surfaces and/or trim tabs may be included on the propeller blade 104. In addition, although FIG. 14A shows each control surface or trim tab 1409 associated with a respective actuator 1425, other numbers or arrangements of control surfaces or trim tabs and associated actuators may be included on the propeller blade 104. For example, one actuator 1425 may control actuation of all control surfaces or trim tabs 1409 of a propeller blade 104.

The actuators 1425 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 1425 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 14A, the actuators 1425 may include a clutch, a switch, or a spring-loaded actuator that moves the control surfaces or trim tabs 1409 relative to the blade 104 between two or more angular orientations. In addition, the actuators 1425 may include a servo or a magnetic actuator that moves the control surfaces or trim tabs 1409 relative to the blade 104 between two or more angular orientations. Further, the actuators 1425 may include a solenoid and a bias element that move the control surfaces or trim tabs 1409 relative to the blade 104 between two or more angular orientations. Moreover, the actuators 1425 may include a motor, a rotary actuator, a linear actuator, a screw actuator, or a geared actuator (such as a rack and pinion) that moves the control surfaces or trim tabs 1409 relative to the blade 104 between two or more angular orientations. Various other actuators or combinations of actuators may be used to effect movement or rotation of the control surfaces or trim tabs 1409 relative to the blade 104.

FIG. 14B illustrates a view of a propeller blade 104 of a propulsion mechanism having an adjustable blade section 1404-1 using variable elasticity, in accordance with disclosed implementations.

As shown in FIG. 14B, the propeller blade 104 extending from propeller hub 1424 may include an adjustable blade section 1404-1, e.g., a tip section, that is movably or pivotably connected to the propeller blade 104 at a hinge or pivotable connection 1428-1. For example, an actuator 1425-1 may be coupled between the blade section 1404-1 and the blade 104 at or around the pivotable connection 1428-1, and the actuator 1425-1 may be connected via electrical lines or wirelessly (shown as dashed lines) to an aerial vehicle control system, a part thereof, or another component in communication with the aerial vehicle control system, in order to receive power and/or instructions or commands. Further, the actuator 1425-1 associated with the pivotable connection 1428-1 and/or the blade section 1404-1 may have variable elasticity. The actuator 1425-1 may be configured to modify the angular orientation of the blade section 1404-1 relative to the blade 104, such that the blade section 1404-1 may rotate or pivot upward and/or downward relative to a plane of the blade 104, e.g., similar to a dihedral or anhedral angle. Other numbers or arrangements of actuators having variable elasticity may also be mounted or coupled between the blade section 1404-1 and blade 104.

The actuator 1425-1 may include one or more of a tunable or variable bias element or spring, a magnetic actuator, a piezoelectric actuator, a solenoid, a linear actuator, or other types of actuators that may permit active or passive control of elasticity or springiness. In addition, the actuator 1425-1 may be configured for one-time actuation, e.g., upon detection of a propulsion mechanism failure or other aerial vehicle fault or failure, may be configured for one-way or two-way actuation, may be configured for binary actuation between two different levels of elasticity or springiness, and/or may be configured for variable actuation between a plurality of different levels of elasticity or springiness.

For example, as shown in FIG. 14B, the actuator 1425-1 having variable elasticity may include a tunable or variable bias element or spring, or a magnetic actuator, that may be controlled to change its elasticity or springiness. In response to altering the elasticity or springiness of the actuator 1425-1, a direction of thrust generated by the propeller 104 and associated motor may be modified and/or may be dependent upon a magnitude of thrust generated by the propeller 104 and associated motor and the modified elasticity of the actuator 1425-1. In the further example embodiment of FIG. 14B, if the actuator 1425-1 is modified to have greater elasticity during a first arc of travel of the blade section 1404-1 during a single revolution and is modified to have lesser elasticity during a second arc of travel of the blade section 1404-1 during the single revolution, the direction of thrust generated by the propeller 104 and associated motor may be modified due to the differential elasticity of the actuator 1425-1 during the single revolution, which may also be dependent upon the magnitude of thrust generated by the propeller 104 and associated motor. In addition, a greater magnitude of thrust generated by a propeller and motor combined with a change in elasticity of one or more actuators may result in a greater change in a direction of thrust of the propeller and motor.

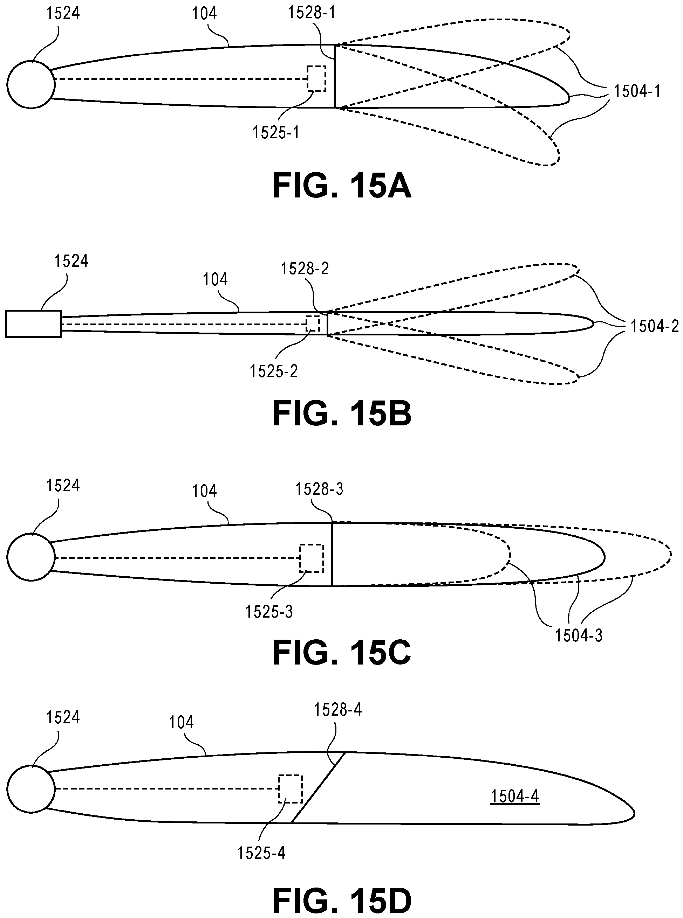

FIGs. 15A-15D illustrate views of a propeller blade 104 of a propulsion mechanism having an adjustable orientation and/or adjustable length, in accordance with disclosed implementations.

As shown in FIG. 15A, the propeller blade 104 extending from propeller hub 1524 may include an adjustable blade section 1504-1, e.g., a tip section, that is movably or pivotably connected to the propeller blade 104 at a hinge or pivotable connection 1528-1. For example, an actuator 1525-1 may be coupled between the blade section 1504-1 and the blade 104 at or around the pivotable connection 1528-1, and the actuator 1525-1 may be connected via electrical lines or wirelessly (shown as dashed lines) to an aerial vehicle control system, a part thereof, or another component in communication with the aerial vehicle control system, in order to receive power and/or instructions or commands. The actuator 1525-1 may be configured to modify the angular orientation of the blade section 1504-1 relative to the blade 104, such that the blade section 1504-1 may rotate or pivot forward and/or rearward within a plane of the blade 104. Rotating, or sweeping, the blade section 1504-1 forward or rearward within a plane of the blade 104 may alter a magnitude and/or a direction of thrust or lift generated by the blade section 1504-1. Other numbers or arrangements of actuators may also be mounted or coupled between the blade section 1504-1 and blade 104.

The actuator 1525-1 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuator 1525-1 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 15A, the actuator 1525-1 may include a clutch, a switch, or a spring-loaded actuator that moves the blade section 1504-1 relative to the blade 104 between two or more angular orientations. In addition, the actuator 1525-1 may include a servo or a magnetic actuator that moves the blade section 1504-1 relative to the blade 104 between two or more angular orientations. Further, the actuator 1525-1 may include a solenoid and a bias element that move the blade section 1504-1 relative to the blade 104 between two or more angular orientations. Moreover, the actuator 1525-1 may include a motor, a rotary actuator, a linear actuator, a screw actuator, or a geared actuator that moves the blade section 1504-1 relative to the blade 104 between two or more angular orientations. Various other actuators or combinations of actuators may be used to effect movement or rotation of the blade section 1504-1 relative to the blade 104.

As shown in FIG. 15B, the propeller blade 104 extending from propeller hub 1524 may include an adjustable blade section 1504-2, e.g., a tip section, that is movably or pivotably connected to the propeller blade 104 at a hinge or pivotable connection 1528-2. For example, an actuator 1525-2 may be coupled between the blade section 1504-2 and the blade 104 at or around the pivotable connection 1528-2, and the actuator 1525-2 may be connected via electrical lines or wirelessly (shown as dashed lines) to an aerial vehicle control system, a part thereof, or another component in communication with the aerial vehicle control system, in order to receive power and/or instructions or commands. The actuator 1525-2 may be configured to modify the angular orientation of the blade section 1504-2 relative to the blade 104, such that the blade section 1504-2 may rotate or pivot upward and/or downward relative to a plane of the blade 104, e.g., similar to a dihedral or anhedral angle. Rotating or pivoting the blade section 1504-2 upward or downward relative to a plane of the blade 104 may alter a magnitude and/or a direction of thrust or lift generated by the blade section 1504-2. Other numbers or arrangements of actuators may also be mounted or coupled between the blade section 1504-2 and blade 104.

The actuator 1525-2 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuator 1525-2 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 15B, the actuator 1525-2 may include a clutch, a switch, or a spring-loaded actuator that moves the blade section 1504-2 relative to the blade 104 between two or more angular orientations. In addition, the actuator 1525-2 may include a servo or a magnetic actuator that moves the blade section 1504-2 relative to the blade 104 between two or more angular orientations. Further, the actuator 1525-2 may include a solenoid and a bias element that move the blade section 1504-2 relative to the blade 104 between two or more angular orientations. Moreover, the actuator 1525-2 may include a motor, a rotary actuator, a linear actuator, a screw actuator, or a geared actuator that moves the blade section 1504-2 relative to the blade 104 between two or more angular orientations. Various other actuators or combinations of actuators may be used to effect movement or rotation of the blade section 1504-2 relative to the blade 104.

As shown in FIG. 15C, the propeller blade 104 extending from propeller hub 1524 may include an adjustable blade section 1504-3, e.g., a tip section, that is movably connected to the propeller blade 104 at a movable connection 1528-3. For example, an actuator 1525-3 may be coupled between the blade section 1504-3 and the blade 104 at or around the movable connection 1528-3, and the actuator 1525-3 may be connected via electrical lines or wirelessly (shown as dashed lines) to an aerial vehicle control system, a part thereof, or another component in communication with the aerial vehicle control system, in order to receive power and/or instructions or commands. The actuator 1525-3 may be configured to modify the position or length of the blade section 1504-3 relative to the blade 104, such that the blade section 1504-3 may extend from and/or retract toward the blade 104. Moving, extending, or retracting the blade section 1504-3 radially outward or inward relative to the blade 104 may alter a magnitude and/or a direction of thrust or lift generated by the blade section 1504-3. Other numbers or arrangements of actuators may also be mounted or coupled between the blade section 1504-3 and blade 104.

The actuator 1525-3 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuator 1525-3 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 15C, the actuator 1525-3 may include a clutch, a switch, or a spring-loaded actuator that moves the blade section 1504-3 relative to the blade 104 between two or more positions or lengths. In addition, the actuator 1525-3 may include a servo or a magnetic actuator that moves the blade section 1504-3 relative to the blade 104 between two or more positions or lengths. Further, the actuator 1525-3 may include a solenoid and a bias element that move the blade section 1504-3 relative to the blade 104 between two or more positions or lengths. Moreover, the actuator 1525-3 may include a motor, a rotary actuator, a linear actuator, a screw actuator, or a geared actuator (such as a rack and pinion) that moves the blade section 1504-3 relative to the blade 104 between two or more positions or lengths. Various other actuators or combinations of actuators may be used to effect movement or translation of the blade section 1504-3 relative to the blade 104.

As shown in FIG. 15D, the propeller blade 104 extending from propeller hub 1524 may include an adjustable blade section 1504-4, e.g., a tip section, that is movably or pivotably connected to the propeller blade 104 at a hinge or pivotable connection 1528-4 that is disposed at an angle relative to a chord length of the blade 104. For example, an actuator 1525-4 may be coupled between the blade section 1504-4 and the blade 104 at or around the pivotable connection 1528-4, and the actuator 1525-4 may be connected via electrical lines or wirelessly (shown as dashed lines) to an aerial vehicle control system, a part thereof, or another component in communication with the aerial vehicle control system, in order to receive power and/or instructions or commands. The actuator 1525-4 may be configured to modify the angular orientation of the blade section 1504-4 relative to the blade 104, such that the blade section 1504-4 may rotate or pivot upward with a downward pitch change and/or rotate or pivot downward with an upward pitch change relative to a plane of the blade 104. Rotating or pivoting the blade section 1504-4 upward or downward relative to a plane of the blade 104 may alter a magnitude and/or a direction of thrust or lift generated by the blade section 1504-4. Other numbers or arrangements of actuators may also be mounted or coupled between the blade section 1504-4 and blade 104.

The actuator 1525-4 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuator 1525-4 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions.

As shown in FIG. 15D, the actuator 1525-4 may include a clutch, a switch, or a spring-loaded actuator that moves the blade section 1504-4 relative to the blade 104 between two or more angular orientations. In addition, the actuator 1525-4 may include a servo or a magnetic actuator that moves the blade section 1504-4 relative to the blade 104 between two or more angular orientations. Further, the actuator 1525-4 may include a solenoid and a bias element that move the blade section 1504-4 relative to the blade 104 between two or more angular orientations. Moreover, the actuator 1525-4 may include a motor, a rotary actuator, a linear actuator, a screw actuator, or a geared actuator that moves the blade section 1504-4 relative to the blade 104 between two or more angular orientations. Various other actuators or combinations of actuators may be used to effect movement or rotation of the blade section 1504-4 relative to the blade 104.

With respect to the descriptions of FIGs. 14A-15D herein, the changes in orientations, positions, and/or lengths of portions or sections of propeller blades may be used to modify a direction of thrust generated by the propeller blade and associated motor. That is, the propeller blade may generate thrust in a first direction over a first arc of its travel during a single revolution and may generate thrust in a second, different direction over a second arc of its travel during the single revolution. For example, if an actuator associated with a portion or section of a propeller blade is able to actuate the portion or section multiple times per revolution of the propeller blade, then the direction of thrust generated by the propeller blade and associated motor may be dynamically modified during a single revolution as a result of the actuation of the portion or section. For example, the control surfaces or trim tabs 1409 described with respect to FIG. 14A, the tip section 1404-1 described with respect to FIG. 14B, the tip section 1504-2 described with respect to FIG. 15B, and/or the tip section 1504-4 described with respect to FIG. 15D may be actuated multiple times, e.g., at least two times, per revolution of the propeller blade to thereby modify the direction of thrust generated by the propeller blade and associated motor.

In addition, with respect to the descriptions of FIGs. 14A-15D herein, the changes in orientations, positions, and/or lengths of portions or sections of propeller blades may be used to modify a magnitude of thrust generated by the propeller blade and associated motor during each revolution of the propeller blade. That is, the propeller blade may generate thrust with a first magnitude over a first arc of its travel during a single revolution and may generate thrust with a second, different magnitude over a second arc of its travel during the single revolution. For example, if an actuator associated with a portion or section of a propeller blade is able to actuate the portion or section multiple times per revolution of the propeller blade, then the magnitude of thrust generated by the propeller blade and associated motor may be dynamically modified during a single revolution as a result of the actuation of the portion or section. For example, the control surfaces or trim tabs 1409 described with respect to FIG. 14A, the tip section 1404-1 described with respect to FIG. 14B, and/or the tip sections 1504 described with respect to FIGs. 15A-15D may be actuated multiple times, e.g., at least two times, per revolution of the propeller blade to thereby modify the magnitude of thrust generated by the propeller blade and associated motor during each revolution of the propeller blade.

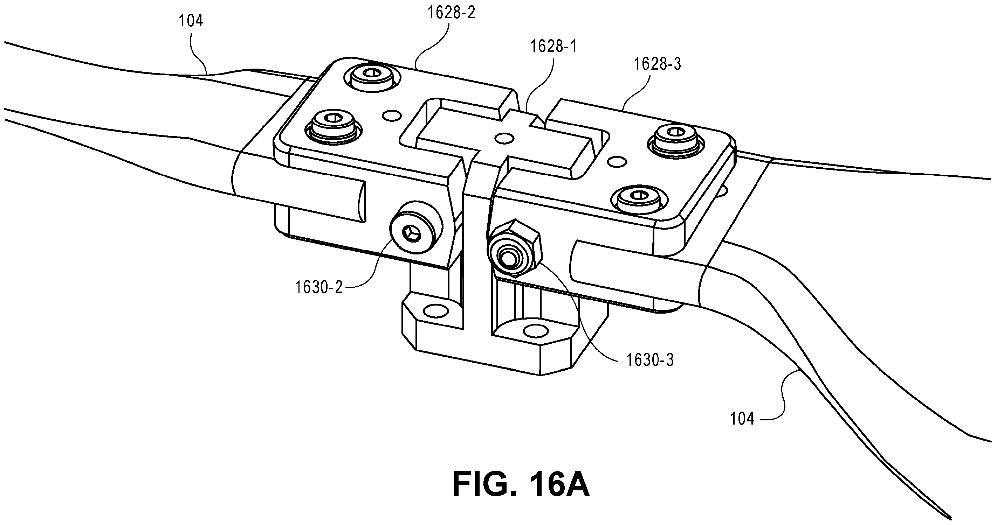

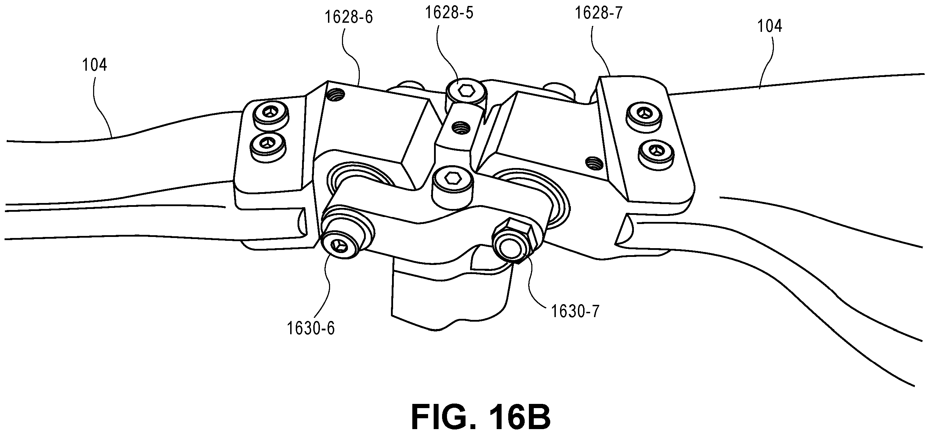

FIGs. 16A and 16B illustrate views of a propeller hub of a propulsion mechanism having hinged, flapping propeller blades, in accordance with disclosed implementations.

As shown in FIG. 16A, the propeller hub may include a base 1628-1 and two root sections 1628-2 and 1628-3. Each of the two root sections 1628-2, 1628-3 may be coupled to a respective propeller blade 104. In addition, each of the two root sections 1628-2, 1628-3 may be hingedly or pivotably coupled to the base 1628-1. For example, the root section 1628-2 may be hingedly or pivotably coupled to base 1628-1 at hinge axis 1630-2. In addition, the root section 1628-3 may be hinged or pivotably coupled to base 1628-1 at hinge axis 1630-3.

Each root section 1628-2, 1628-3 may be freely pivotable about the respective hinge axis 1630-2, 1630-3. In example embodiments, the base 1628-1 and root sections 1628-2, 1628-3 may include mechanical stops or interfaces that limit the range of pivoting movement of each root section 1628-2, 1628-3 relative to the base 1628-1. For example, each root section 1628-2, 1628-3 may be limited to approximately five degrees of pivoting movement relative to a nominal, centered position of the root sections 1628-2, 1628-3 relative to the base 1628-1. In other example embodiments, the limit of the range of pivoting movement may be less than or greater than five degrees relative to the nominal, centered position. In addition, the limit for pivoting upward may be different from the limit for pivoting downward. Further, the limits for each propeller blade may be different from the limits for other propeller blades.

By allowing the freely pivotable movement, e.g., flapping, of the root sections 1628-2, 1628-3 and associated blades 104 relative to the base 1628-1, vibrations generated or experienced by the propeller blades 104 that are transferred to other portions of an aerial vehicle via the propellers and propeller hub may be dampened or reduced.

In further example embodiments, instead of allowing freely pivotable movement of the root sections 1628-2, 1628-3 and associated blades 104 relative to the base 1628-1, various actuators or combinations of actuators as described herein may be included or associated with portions of the propeller hub to actuate changes in angular orientation of each of the root sections 1628-2, 1628-3 and associated blades 104 relative to the base 1628-1. In such embodiments, the modifications to and resultant effects of propeller reconfiguration may be similar to those described herein with respect to FIGs. 14B and 15B. Further, one or more of the root sections 1628-2, 1628-3 may include a spring, bias element, or other similar components to maintain the root sections 1628-2, 1628-3 in respective nominal positions relative to the base 1628-1 in the absence of external loads or forces.

As shown in FIG. 16B, the propeller hub may include a base 1628-5 and two root sections 1628-6 and 1628-7. Each of the two root sections 1628-6, 1628-7 may be coupled to a respective propeller blade 104. In addition, each of the two root sections 1628-6, 1628-7 may be hingedly or pivotably coupled to the base 1628-5. For example, the root section 1628-6 may be hingedly or pivotably coupled to base 1628-5 at hinge axis 1630-6. In addition, the root section 1628-7 may be hinged or pivotably coupled to base 1628-5 at hinge axis 1630-7.

Each root section 1628-6, 1628-7 may be freely pivotable about the respective hinge axis 1630-6, 1630-7. In example embodiments, the base 1628-5 and root sections 1628-6, 1628-7 may include mechanical stops or interfaces that limit the range of pivoting movement of each root section 1628-6, 1628-7 relative to the base 1628-5. For example, each root section 1628-6, 1628-7 may be limited to approximately five degrees of pivoting movement relative to a nominal, centered position of the root sections 1628-6, 1628-7 relative to the base 1628-5. In other example embodiments, the limit of the range of pivoting movement may be less than or greater than five degrees relative to the nominal, centered position. In addition, the limit for pivoting upward may be different from the limit for pivoting downward. Further, the limits for each propeller blade may be different from the limits for other propeller blades.

In contrast to the example embodiment described with respect to FIG. 16A, each of the hinge axes 1630-6, 1630-7 of respective root sections 1628-6, 1628-7 may be angled or pivoted so as not to be perpendicular with axes that run substantially along lengths of respective propeller blades 104. By incorporating such angles into the hinge axes 1630-6, 1630-7, the pivoting movement of each root section and associated propeller blade may also result in a pitch change of the propeller blade. For example, responsive to upward pivoting movement of a root section and associated propeller blade, the propeller blade may also experience a downward pitch change. Likewise, responsive to downward pivoting movement of a root section and associated propeller blade, the propeller blade may also experience an upward pitch change.

By allowing the freely pivotable movement, e.g., flapping, of the root sections 1628-6, 1628-7 and associated blades 104 relative to the base 1628-5, vibrations generated or experienced by the propeller blades 104 that are transferred to other portions of an aerial vehicle via the propellers and propeller hub may be dampened or reduced.

In further example embodiments, instead of allowing freely pivotable movement of the root sections 1628-6, 1628-7 and associated blades 104 relative to the base 1628-5, various actuators or combinations of actuators as described herein may be included or associated with portions of the propeller hub to actuate changes in angular orientation of each of the root sections 1628-6, 1628-7 and associated blades 104 relative to the base 1628-5. In such embodiments, the modifications to and resultant effects of propeller reconfiguration may be similar to those described herein with respect to FIG. 15D. Further, one or more of the root sections 1628-6, 1628-7 may include a spring, bias element, or other similar components to maintain the root sections 1628-6, 1628-7 in respective nominal positions relative to the base 1628-5 in the absence of external loads or forces.

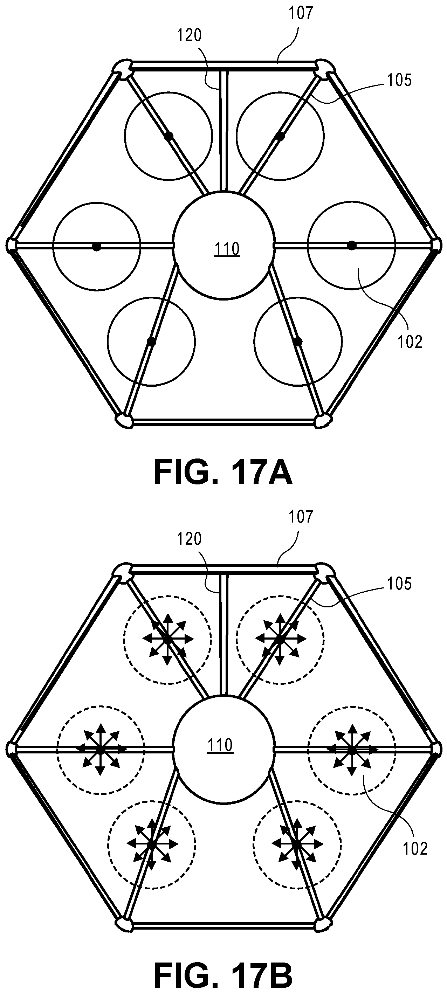

FIGs. 17A-17C illustrate various views of an aerial vehicle having propulsion mechanisms with adjustable propellers and/or adjustable propeller blades, in accordance with disclosed implementations.

As shown in FIG. 17A, one or more propellers and/or blades of the propulsion mechanisms 102, e.g., all propellers and/or blades or all except any faulty or failed propellers and/or blades, may be reconfigured such that the propellers associated with the propulsion mechanisms 102 may have modified cant angles to rotate within the same plane, or within parallel planes. That is, the propellers associated with the propulsion mechanisms 102 may be planarized, e.g., by modifying cants of propellers using propeller cams or similar mechanisms. By planarizing the operational propellers of the propulsion mechanisms 102, control of an aerial vehicle that has experienced a fault or failure of a propulsion mechanism may be simplified or improved.

As shown in FIG. 17B, one or more propellers and/or blades of the propulsion mechanisms 102, e.g., all propellers and/or blades or all except any faulty or failed propellers and/or blades, may be reconfigured such that the propellers and/or blades associated with the propulsion mechanisms 102 may have modified angular orientations in any direction. That is, the propellers and/or blades associated with the propulsion mechanisms 102 may be reconfigured with angular orientations and/or positions of the blades, or portions or sections thereof, to modify directions of thrust generated by the propellers and/or blades. By modifying angular orientations and/or positions of blades, or portions or sections thereof, control of an aerial vehicle that has experienced a fault or failure of a propulsion mechanism may be simplified or improved.

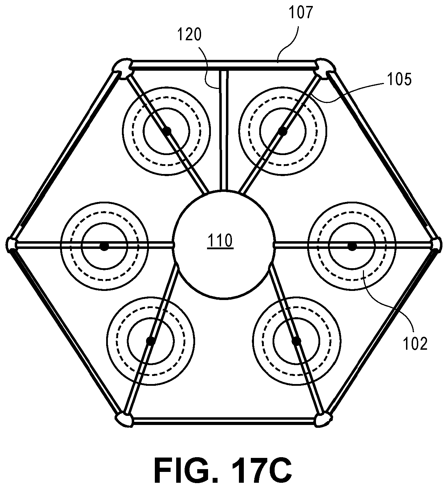

As shown in FIG. 17C, one or more propellers and/or blades of the propulsion mechanisms 102, e.g., all propellers and/or blades or all except any faulty or failed propellers and/or blades, may be reconfigured such that the propellers and/or blades associated with the propulsion mechanisms 102 may have modified positions and/or lengths to alter spans of the propellers and/or blades. That is, the propellers and/or blades associated with the propulsion mechanisms 102 may be reconfigured with positions and/or lengths of the blades, or portions or sections thereof, to modify magnitudes of thrust generated by the propellers and/or blades. By modifying positions and/or lengths of blades, or portions or sections thereof, control of an aerial vehicle that has experienced a fault or failure of a propulsion mechanism may be simplified or improved.

Although FIGs. 13A-17C describe various individual reconfigurations of propellers and/or blades of propulsion mechanisms of an aerial vehicle such as modifications to angular orientations, positions, and/or lengths, in various example embodiments, each propeller and/or blade of a propulsion mechanism of an aerial vehicle may be modified with any combination of changes to angular orientations, positions, and/or lengths. Further, although FIGs. 17A-17C generally describe the same or similar modifications to angular orientations, positions, and/or lengths of each of the propellers and/or blades of propulsion mechanisms of an aerial vehicle, in various example embodiments, each propeller and/or blade of a propulsion mechanism of an aerial vehicle may be modified differently from other propellers and/or blades of propulsion mechanisms of the aerial vehicle. By various combinations of modifications to angular orientations, positions, and/or lengths of one or more propellers and/or blades of propulsion mechanisms of an aerial vehicle, control and safety of the aerial vehicle may be improved or increased responsive to various potential faults or failures associated with one or more propulsion mechanisms of an aerial vehicle.

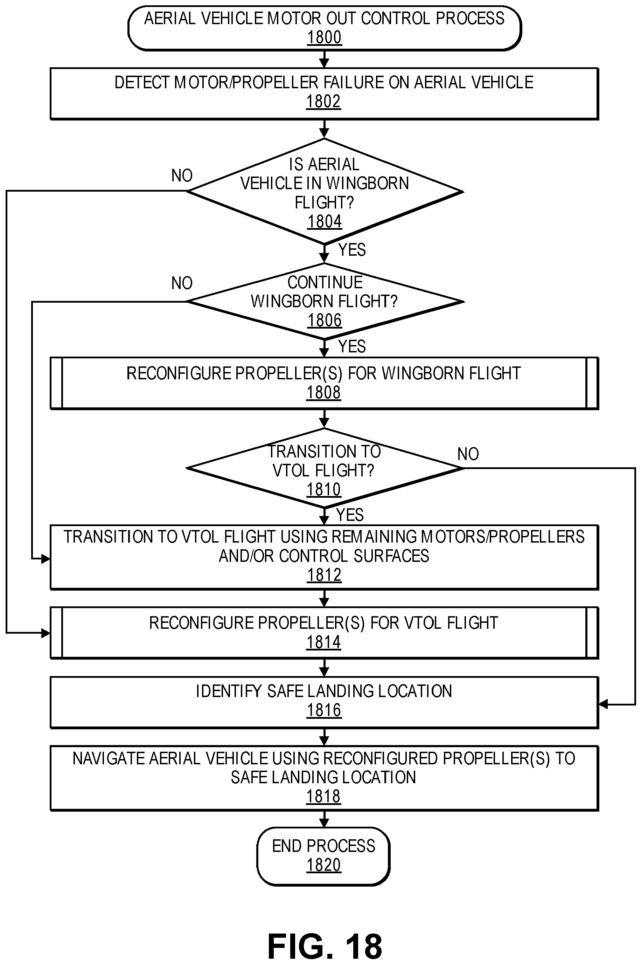

FIG. 18 illustrates a flow diagram of an example aerial vehicle motor out control process 1800, in accordance with disclosed implementations.

The process 1800 may begin by detecting a motor/propeller failure on an aerial vehicle, as at 1802. For example, the motor/propeller failure may be a propulsion mechanism failure. In addition, the detected failure may be any of the various types of faults that may result in motor out situations, as described herein.

The process 1800 may continue by determining whether the aerial vehicle is currently in wingborn flight, as at 1804. For example, wingborn flight may be synonymous with navigation of the aerial vehicle in a substantially horizontal direction, as described with reference to FIGs. 1 and 3-5. This may be determined based on data associated with the flight controller and/or one or more motor controllers. In addition, this may be determined based on a flight plan of the aerial vehicle. Further, this may be determined based on data associated with one or more sensors, such as an inertial measurement unit, accelerometers, and/or gyroscopes.

If it is determined that the aerial vehicle is currently in wingborn flight, it may then be determined whether the aerial vehicle is to continue wingborn flight, as at 1806. This may be determined based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to continue wingborn flight, then the process 1800 may proceed by reconfiguring one or more propellers and/or blades for wingborn flight, as at 1808. For example, one or more propellers and/or blades may be reconfigured to have modified angular orientations, positions, and/or lengths in order to maintain control and safety of the aerial vehicle in wingborn flight responsive to the motor out situation. For example, angular orientations of one or more propellers and/or blades may be modified to provide additional thrust in the direction of travel to maintain wingborn flight. In addition, positions and/or lengths of one or more propellers and/or blades may also be modified to provide additional thrust to the aerial vehicle to maintain wingborn flight. The determination of whether to continue with wingborn flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

After reconfiguring the propellers and/or blades and continuing wingborn flight, as at 1808, the process 1800 may then continue by determining whether to transition to VTOL flight, as at 1810. The determination of whether to transition to VTOL flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to transition to VTOL flight, as at 1810, or after determining that the aerial vehicle is not to continue in wingborn flight, as at 1806, then the process 1800 may proceed to transition the aerial vehicle from wingborn flight to VTOL flight using any control surfaces and/or any remaining propulsion mechanisms, as at 1812. As described herein, the aerial vehicle may transition from wingborn flight to VTOL flight by reducing pitch and/or speed of the aerial vehicle such that the ring wing produces less lift and the aerial vehicle pitches rearward to a VTOL flight orientation, as described with respect to FIG. 2.

After transitioning to VTOL flight, as at 1812, or after determining that the aerial vehicle is not currently in wingborn flight, as at 1804, the process 1800 may continue by reconfiguring one or more propellers and/or blades for VTOL flight, as at 1814. For example, one or more propellers and/or blades may be reconfigured to have modified angular orientations, positions, and/or lengths in order to maintain control and safety of the aerial vehicle in VTOL flight responsive to the motor out situation. For example, angular orientations and/or lengths of one or more propellers and/or blades may be modified to provide additional hovering thrust to maintain VTOL flight. In some examples, angular orientations of one or more propellers and/or blades may be modified to planarize the propellers and simplify or improve control in VTOL flight. In addition, angular orientations of one or more propellers and/or blades may be modified to pivot radially inward or radially outward relative to the fuselage to improve control and safety of the aerial vehicle in VTOL flight. Further, positions and/or lengths of one or more propellers and/or blades may be modified to provide additional thrust to the aerial vehicle in VTOL flight.

After reconfiguring one or more propellers and/or blades for VTOL flight, as at 1814, or after determining that the aerial vehicle is not to transition to VTOL flight and instead continue with wingborn flight, as at 1810, the process 1800 may proceed by identifying a safe landing location, as at 1816. For example, the safe landing location may be predetermined and stored by or provided to the aerial vehicle. Various safe landing locations may be identified and stored beforehand, and the aerial vehicle may identify a closest available safe landing location responsive to the motor out situation. In other examples, the aerial vehicle may use one or more sensors, such as imaging devices, radar, LIDAR, proximity sensors, inertial measurement units, navigation sensors such as global positioning sensors, and/or other types of sensors, to identify a safe landing location responsive to the motor out situation. Various other types of sensors, beacons, or communication devices may also be used to identify a safe landing location for the aerial vehicle.

The process 1800 may then continue to control the aerial vehicle using the reconfigured one or more propellers and/or blades to the safe landing location, as at 1818. For example, the aerial vehicle may reconfigure one or more propellers and/or blades for wingborn flight and/or may reconfigure one or more propellers and/or blades for VTOL flight, and the aerial vehicle may navigate to the identified safe landing location using the reconfigured one or more propellers and/or blades, as well as based on data from one or more sensors, such as imaging devices and navigation sensors. The process 1800 may then end, as at 1820.

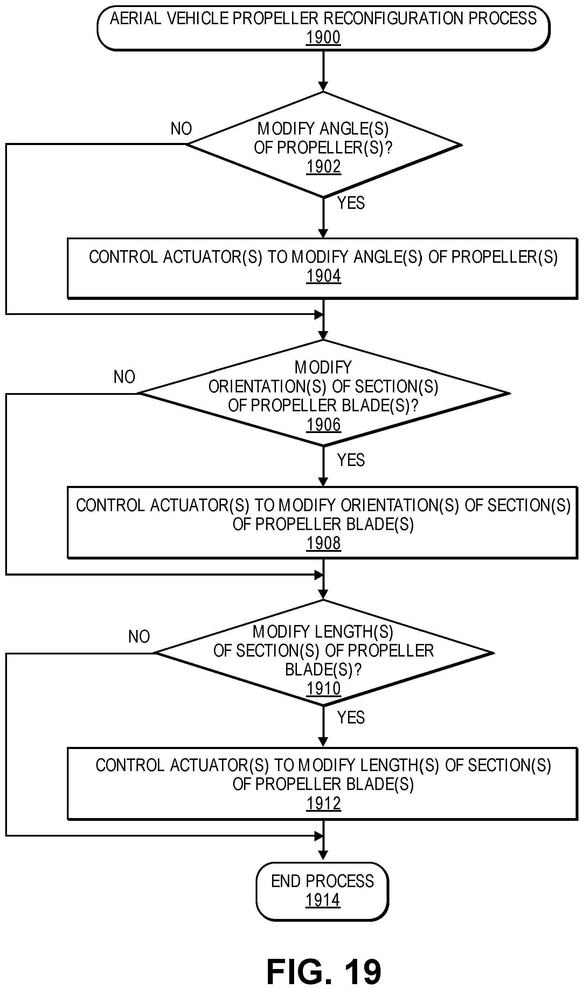

FIG. 19 illustrates a flow diagram of an example aerial vehicle propeller reconfiguration process 1900, in accordance with disclosed implementations.

The process 1900 may begin by determining whether to modify angular orientations of one or more propellers, as at 1902. If it is determined that angular orientations of one or more propellers are to be modified responsive to a motor out situation, then the process 1900 may continue to control one or more actuators to modify angular orientations of associated propellers, as at 1904. As described herein, various types, numbers, or arrangements of actuators may be associated with each of the one or more propellers, and one or more of such actuators may be actuated to effect changes to angular orientations of the associated propellers, e.g., actuators associated with propeller cams to modify angular orientations of associated propellers.

The process 1900 may then proceed by determining whether to modify angular orientations of one or more propellers, blades, and/or blade sections, as at 1906. If it is determined that angular orientations of one or more propellers, blades, and/or blade sections are to be modified responsive to a motor out situation, then the process 1900 may continue to control one or more actuators to modify angular orientations of associated propellers, blades, and/or blade sections, as at 1908. As described herein, various types, numbers, or arrangements of actuators may be associated with each of the one or more propellers, blades, and/or blade sections, and one or more of such actuators may be actuated to effect changes to angular orientations of the associated propellers, blades, and/or blade sections, which may result in changes to directions of thrust and/or magnitudes of thrust generated by the propellers, blades, and/or blade sections.

The process 1900 may then proceed by determining whether to modify lengths of one or more propellers, blades, and/or blade sections, as at 1910. If it is determined that positions and/or lengths of one or more propellers, blades, and/or blade sections are to be modified responsive to a motor out situation, then the process 1900 may continue to control one or more actuators to modify positions and/or lengths of associated propellers, blades, and/or blade sections, as at 1912. As described herein, various types, numbers, or arrangements of actuators may be associated with each of the one or more propellers, blades, and/or blade sections, and one or more of such actuators may be actuated to effect changes to positions and/or lengths of the associated propellers, blades, and/or blade sections, which may result in changes to magnitudes of thrust generated by the propellers, blades, and/or blade sections. The process 1900 may then end, as at 1914.

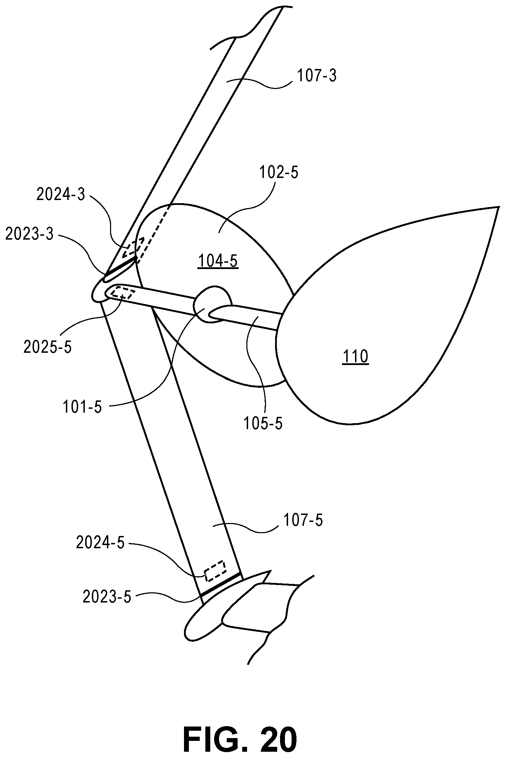

FIG. 20 illustrates a view of an adjustable wing section of an aerial vehicle, in accordance with disclosed implementations.

As shown in FIG. 20, an aerial vehicle similar to the aerial vehicles described with respect to FIGs. 1-4 is partially illustrated. FIG. 20 illustrates a fuselage 110, a motor arm 105-5, a propulsion mechanism 102-5 coupled to the motor arm 105-5 and including a motor 101-5 and a propeller 104-5, and a wing section 107-5 of a ring wing. In addition, FIG. 20 partially illustrates another wing section 107-3 adjacent to one end of wing section 107-5, and another wing section adjacent to an opposite end of wing section 107-5. Other portions of the aerial vehicle, including other motor arms, propulsion mechanisms, wing sections of the ring wing, and/or stabilizer fins are not illustrated for clarity.

The wing section 107-5 may be reconfigured between a position as illustrated in FIG. 20 in which the wing section 107-5 is connected to adjacent wing sections to form a ring wing as described herein, and one or more other positions in which at least one of an angular orientation, a position, and/or a pitch of the wing section may be modified from the position illustrated in FIG. 20.

For example, the wing section 107-5 includes a releasable or frangible connection 2023-3 to an adjacent wing section 107-3 adjacent one end of wing section 107-5, and may include a releasable or frangible connection 2023-5 to another wing section adjacent an opposite end of wing section 107-5. In example embodiments, the releasable or frangible connections 2023 may comprise one or more magnetic or electromagnetic connections, mechanically releasable connections (such as pin and groove connections, hook and loop connections, keyed connections, threaded connections, or other mechanically releasable connections), physically deformable connections (such as perforated connections, adhesive connections, separable connections that may be heated, melted, torn, or otherwise separated, or other physically deformable connections), or other types of releasable or frangible connections.

In addition, the releasable or frangible connections 2023-3, 2023-5 may have respective associated actuators 2024-3, 2024-5 that are configured to cause release or separation of adjacent wing sections. Each of the actuators 2024 may be connected via electrical lines or wirelessly (not shown) to an aerial vehicle control system, a part thereof, or another component in communication with the aerial vehicle control system, in order to receive power and/or instructions or commands. In example embodiments, the actuators 2024 may comprise one or more magnets or electromagnets to release magnetic or electromagnetic connections. In other example embodiments, the actuators 2024 may comprise one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators to release mechanically releasable connections. In further example embodiments, the actuators 2024 may comprise one or more of a heating element, a conductive element, or various of the other actuators described herein to release physically deformable connections. The actuators 2024 may be configured for one-time actuation, e.g., upon detection of a propulsion mechanism failure or other aerial vehicle fault or failure, may be configured for one-way or two-way actuation, may be configured for binary actuation between two different states or positions, and/or may be configured for variable actuation between a plurality of different states or positions. Various combinations of actuators may also be used to cause release or separation of a wing section from one or more adjacent wing sections.

As illustrated in FIG. 20, upon releasing or separating wing section 107-5 from adjacent wing sections at releasable or frangible connections 2023 using actuators 2024, the wing section 107-5 is reconfigured to have a different position, angular orientation, and/or pitch via a movable, pivotable, or rotatable connection to the motor arm 105-5 of the aerial vehicle. For example, the movable, pivotable, or rotatable connection may comprise one or more ball joints, gimbal connections, hinged connections, telescoping connections, geared connections, movable arms or linkages, or other movable connections.

In example embodiments, the wing section 107-5 may have one or more associated actuators 2025-5 that may move, pivot, or rotate the wing section 107-5 to a different position, e.g., extending the wing section 107-5 away from the fuselage or retracting the wing section 107-5 toward the fuselage. In addition, the one or more associated actuators 2025-5 may move, pivot, or rotate the wing section 107-5 to a different angular orientation, e.g., rotating the wing section 107-5 within a plane of the ring wing of the aerial vehicle or relative to a plane of the ring wing of the aerial vehicle, e.g., similar to a dihedral or anhedral angle. Further, the one or more associated actuators 2025-5 may pivot or rotate the wing section 107-5 to a different pitch, e.g., rotating the wing section 107-5 such that its leading edge (and trailing edge) have a particular orientation. Each of the actuators 2025 may be connected via electrical lines or wirelessly (not shown) to an aerial vehicle control system, a part thereof, or another component in communication with the aerial vehicle control system, in order to receive power and/or instructions or commands.

The actuators 2025 may include one or more of a clutch, a switch, a bias element or spring, a damper, a spring-loaded actuator, a servo, a solenoid, a motor, a screw actuator, a geared actuator, a magnetic actuator, a linear actuator, a rotary actuator, a piezoelectric actuator, or various other types of actuators. In addition, the actuators 2025 may be configured for one-time actuation, e.g., upon detection of a propulsion mechanism failure or other aerial vehicle fault or failure, may be configured for one-way or two-way actuation, may be configured for binary actuation between two different positions, and/or may be configured for variable actuation between a plurality of different positions. Various combinations of actuators may also be used to cause movement, pivoting, and/or rotation of a wing section relative to a motor arm and/or other portions of the aerial vehicle.

As shown in FIG. 20, the actuators 2025 may include a clutch, a switch, or a spring-loaded actuator that moves, pivots, or rotates the wing section 107-5 relative to the motor arm 105-5 between two or more positions, angular orientations, and/or pitches. In addition, the actuators 2025 may include a servo or a magnetic actuator that moves, pivots, or rotates the wing section 107-5 relative to the motor arm 105-5 between two or more positions, angular orientations, and/or pitches. Further, the actuators 2025 may include a solenoid and a bias element that move, pivot, or rotate the wing section 107-5 relative to the motor arm 105-5 between two or more positions, angular orientations, and/or pitches. Moreover, the actuators 2025 may include a motor, a rotary actuator, a screw actuator, a linear actuator, or a geared actuator that moves, pivots, or rotates the wing section 107-5 relative to the motor arm 105-5 between two or more positions, angular orientations, and/or pitches. Various other actuators or combinations of actuators may be used to effect movement, pivoting, and/or rotation of the wing section 107-5 relative to the motor arm 105-5 or other portions of the aerial vehicle.

Although the description here with respect to FIG. 20 relates to only a single wing section 107-5 of the ring wing for clarity, other wing sections of the ring wing of the aerial vehicle may include any and all of the features, components, and/or functions described herein with respect to wing section 107-5. In addition, although FIG. 20 shows particular numbers, arrangements, and orientations of releasable or frangible connections 2023, actuators 2024, and actuators 2025 of the aerial vehicle, various other numbers, arrangements, and orientations of these features may be possible while still providing the described functionality. For example, releasable or frangible connections may be located at other points along the wing sections, actuators to release or separate the releasable or frangible connections may be located in the fuselage or other portions of the aerial vehicle with cables, wires, or other components routed to the releasable or frangible connections to effect release or separation, e.g., by mechanical movement, heat, electrical current, or others, and actuators to reconfigure wing sections may also be located in the fuselage or other portions of the aerial vehicle with cables, wires, or other components routed to the movable connections to effect reconfiguration of the wing sections. Moreover, although FIG. 20 generally describes a single wing section that may be released and associated with a single respective motor arm or portion of the aerial vehicle, in other example embodiments, a single motor arm may be associated with two movable, pivotable, or rotatable wing sections, and/or a different motor arm may be associated with no movable, pivotable, or rotatable wing sections, such that the associations between wing sections and motor arms may not necessarily be rotationally symmetric around the aerial vehicle.

Accordingly, upon detection of a propulsion mechanism failure or other aerial vehicle fault or failure, one or more wing sections of a ring wing of an aerial vehicle may be released or separated from adjacent wing sections via releasable or frangible connections 2023 and associated actuators 2024. In addition, the one or more wing sections may be moved, pivoted, or rotated to a different position, angular orientation, and/or pitch via movable, pivotable, or rotatable connections of the one or more wing sections with other portions of the aerial vehicle and associated actuators 2025. As a result, one or more wing sections of an aerial vehicle may be reconfigured to a different position, angular orientation, and/or pitch to maintain control and safety of the aerial vehicle even in a degraded operational state.

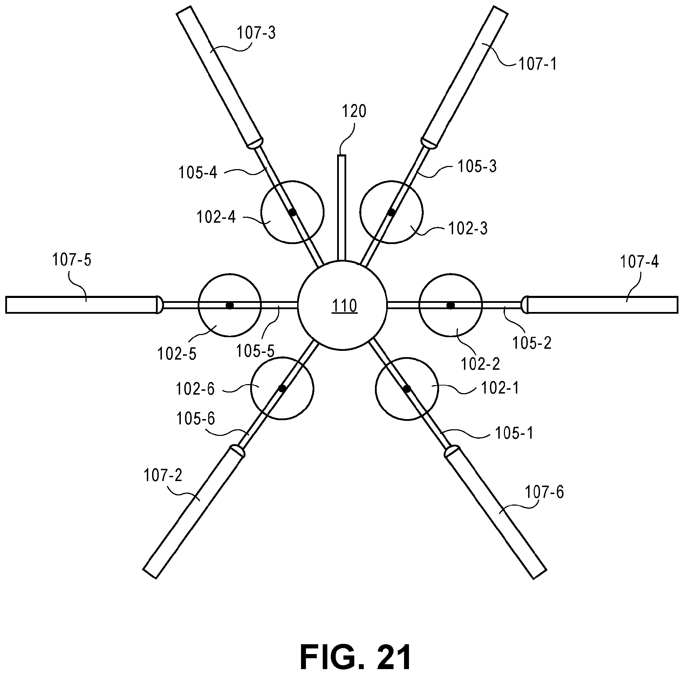

FIG. 21 illustrates a plan view of an aerial vehicle with adjustable wing sections in a first reconfiguration, in accordance with disclosed implementations.

As shown in FIG. 21, responsive to a detected failure or fault of a propulsion mechanism of the aerial vehicle, the wing sections 107-1, 107-2, 107-3, 107-4, 107-5, 107-6 of the ring wing 107 may be reconfigured to respective extended positions. For example, each wing section 107-1, 107-2, 107-3, 107-4, 107-5, 107-6 may release or separate from adjacent wing sections, and each wing section 107-1, 107-2, 107-3, 107-4, 107-5, 107-6 may move, pivot, or rotate to a respective extended position to maximize the overall size or span of the aerial vehicle. In addition, each wing section 107-1, 107-2, 107-3, 107-4, 107-5, 107-6 may pivot or rotate to a respective angular orientation and/or respective pitch.

In the extended or expanded reconfiguration shown in FIG. 21, the aerial vehicle as a whole may rotate or spin, e.g., approximately around a center of mass of the aerial vehicle. By positioning and/or orienting the wing sections 107-1, 107-2, 107-3, 107-4, 107-5, 107-6 with particular positions, angular orientations, and/or pitches, the spinning aerial vehicle may generate lift via the wing sections 107-1, 107-2, 107-3, 107-4, 107-5, 107-6 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

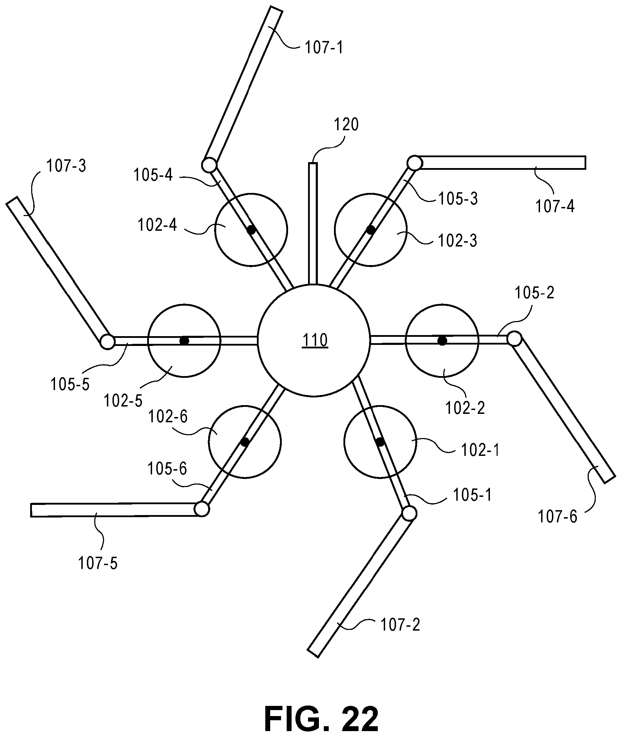

FIG. 22 illustrates a plan view of an aerial vehicle with adjustable wing sections in a second reconfiguration, in accordance with disclosed implementations.

As shown in FIG. 22, responsive to a detected failure or fault of a propulsion mechanism of the aerial vehicle, the wing sections 107-1, 107-2, 107-3, 107-4, 107-5, 107-6 of the ring wing 107 may be reconfigured to respective partially extended positions. For example, each wing section 107-1, 107-2, 107-3, 107-4, 107-5, 107-6 may release or separate from adjacent wing sections, and each wing section 107-1, 107-2, 107-3, 107-4, 107-5, 107-6 may move, pivot, or rotate to a respective partially extended position to increase the overall size or span of the aerial vehicle. In addition, each wing section 107-1, 107-2, 107-3, 107-4, 107-5, 107-6 may pivot or rotate to a respective angular orientation and/or respective pitch.

In the partially extended or expanded reconfiguration shown in FIG. 22, the aerial vehicle as a whole may rotate or spin, e.g., approximately around a center of mass of the aerial vehicle. By positioning and/or orienting the wing sections 107-1, 107-2, 107-3, 107-4, 107-5, 107-6 with particular positions, angular orientations, and/or pitches, the spinning aerial vehicle may generate lift via the wing sections 107-1, 107-2, 107-3, 107-4, 107-5, 107-6 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

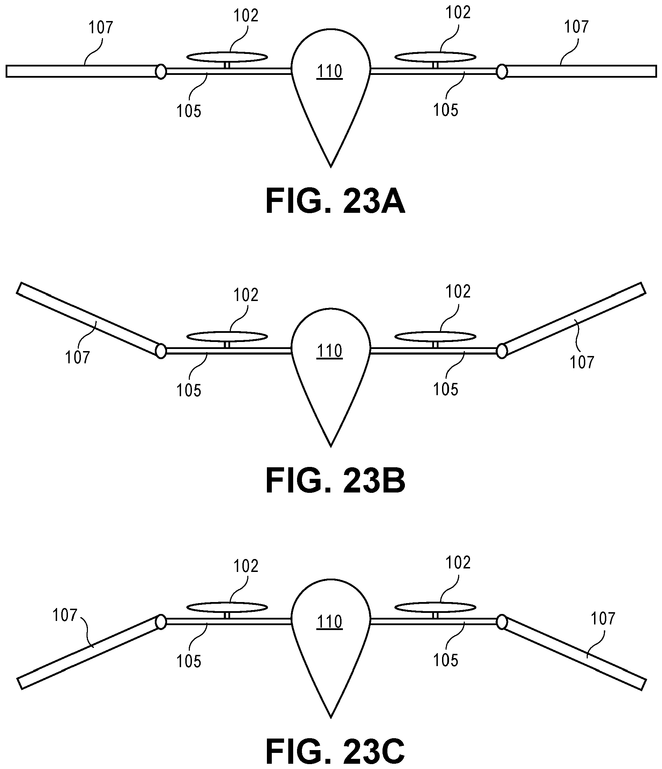

FIGs. 23A-23C illustrate various side views of an aerial vehicle with adjustable wing sections in various reconfigurations, in accordance with disclosed implementations.

As shown in FIGs. 23A-23C, responsive to a detected failure or fault of a propulsion mechanism of the aerial vehicle, the wing sections 107 of the ring wing may be reconfigured to respective extended positions with various angular orientations. For example, each wing section 107 may release or separate from adjacent wing sections, and each wing section 107 may move, pivot, or rotate to a respective extended position to increase the overall size or span of the aerial vehicle. As shown in FIG. 23A, the wing sections 107 may have an angular orientation that is within a plane of the aerial vehicle. As shown in FIG. 23B, the wing sections 107 may have an angular orientation that is rotated upward relative to a plane of the aerial vehicle, e.g., similar to a dihedral angle. As shown in FIG. 23C, the wing sections 107 may have an angular orientation that is rotated downward relative to a plane of the aerial vehicle, e.g., similar to an anhedral angle.

In the extended or expanded reconfigurations shown in FIGs. 23A-23C, the aerial vehicle as a whole may rotate or spin, e.g., approximately around a center of mass of the aerial vehicle. By positioning and/or orienting the wing sections 107 with particular positions, angular orientations, and/or pitches, the spinning aerial vehicle may generate lift via the wing sections 107 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

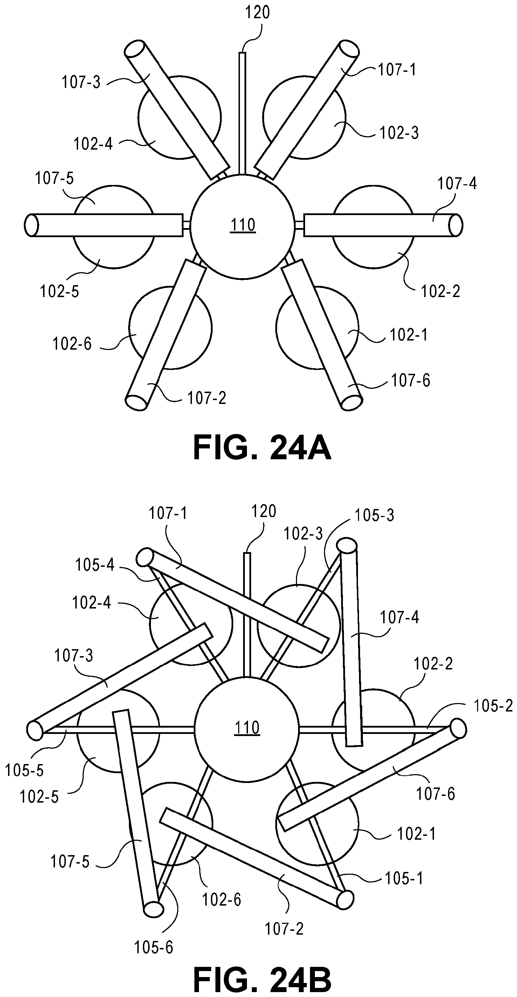

FIG. 24A illustrates a plan view of an aerial vehicle with adjustable wing sections in a third reconfiguration, in accordance with disclosed implementations.

As shown in FIG. 24A, responsive to a detected failure or fault of a propulsion mechanism of the aerial vehicle, the wing sections 107-1, 107-2, 107-3, 107-4, 107-5, 107-6 of the ring wing 107 may be reconfigured to respective retracted positions. For example, each wing section 107-1, 107-2, 107-3, 107-4, 107-5, 107-6 may release or separate from adjacent wing sections, and each wing section 107-1, 107-2, 107-3, 107-4, 107-5, 107-6 may move, pivot, or rotate to a respective retracted position to minimize the overall size or span of the aerial vehicle. In addition, each wing section 107-1, 107-2, 107-3, 107-4, 107-5, 107-6 may pivot or rotate to a respective angular orientation and/or respective pitch.

In the retracted reconfiguration shown in FIG. 24A, the aerial vehicle as a whole may rotate or spin, e.g., approximately around a center of mass of the aerial vehicle. By positioning and/or orienting the wing sections 107-1, 107-2, 107-3, 107-4, 107-5, 107-6 with particular positions, angular orientations, and/or pitches, the spinning aerial vehicle may generate lift via the wing sections 107-1, 107-2, 107-3, 107-4, 107-5, 107-6 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

FIG. 24B illustrates a plan view of an aerial vehicle with adjustable wing sections in a fourth reconfiguration, in accordance with disclosed implementations.

As shown in FIG. 24B, responsive to a detected failure or fault of a propulsion mechanism of the aerial vehicle, the wing sections 107-1, 107-2, 107-3, 107-4, 107-5, 107-6 of the ring wing 107 may be reconfigured to respective partially retracted positions. For example, each wing section 107-1, 107-2, 107-3, 107-4, 107-5, 107-6 may release or separate from adjacent wing sections, and each wing section 107-1, 107-2, 107-3, 107-4, 107-5, 107-6 may move, pivot, or rotate to a respective retracted position to reduce the overall size or span of the aerial vehicle. In addition, each wing section 107-1, 107-2, 107-3, 107-4, 107-5, 107-6 may pivot or rotate to a respective angular orientation and/or respective pitch.

In the partially retracted reconfiguration shown in FIG. 24B, the aerial vehicle as a whole may rotate or spin, e.g., approximately around a center of mass of the aerial vehicle. By positioning and/or orienting the wing sections 107-1, 107-2, 107-3, 107-4, 107-5, 107-6 with particular positions, angular orientations, and/or pitches, the spinning aerial vehicle may generate lift via the wing sections 107-1, 107-2, 107-3, 107-4, 107-5, 107-6 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

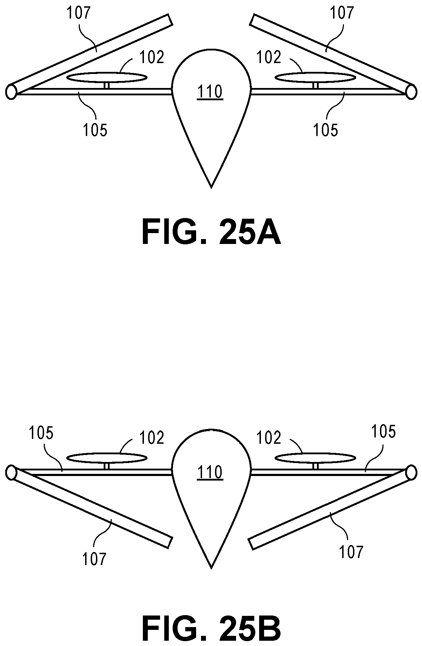

FIGs. 25A and 25B illustrate various side views of an aerial vehicle with adjustable wing sections in various reconfigurations, in accordance with disclosed implementations.

As shown in FIGs. 25A and 25B, responsive to a detected failure or fault of a propulsion mechanism of the aerial vehicle, the wing sections 107 of the ring wing may be reconfigured to respective retracted positions with various angular orientations. For example, each wing section 107 may release or separate from adjacent wing sections, and each wing section 107 may move, pivot, or rotate to a respective retracted position to decrease the overall size or span of the aerial vehicle. As shown in FIG. 25A, the wing sections 107 may have an angular orientation that is rotated upward relative to a plane of the aerial vehicle, e.g., similar to a dihedral angle. As shown in FIG. 25B, the wing sections 107 may have an angular orientation that is rotated downward relative to a plane of the aerial vehicle, e.g., similar to an anhedral angle.

In the retracted reconfigurations shown in FIGs. 25A and 25B, the aerial vehicle as a whole may rotate or spin, e.g., approximately around a center of mass of the aerial vehicle. By positioning and/or orienting the wing sections 107 with particular positions, angular orientations, and/or pitches, the spinning aerial vehicle may generate lift via the wing sections 107 that may slow a descent of the spinning aerial vehicle and may maintain control and safety of the aerial vehicle. In addition, one or more propulsion mechanisms may also be modified to various angular orientations to facilitate and/or control spinning of the aerial vehicle.

Although FIGs. 21-25B describe various individual reconfigurations of wing sections of an aerial vehicle such as modifications to positions, angular orientations, or pitches, in various example embodiments, each wing section of an aerial vehicle may be modified with any combination of changes to positions, angular orientations, and/or pitches. Further, although FIGs. 21-25B generally describe the same or similar modifications to positions, angular orientations, and/or pitches of each of the wing sections of an aerial vehicle, in various example embodiments, each wing section of an aerial vehicle may be modified differently from other wing sections of the aerial vehicle. By various combinations of modifications to positions, angular orientations, and/or pitches of one or more wing sections of an aerial vehicle, control and safety of the aerial vehicle may be improved or increased responsive to various potential faults or failures associated with one or more propulsion mechanisms of an aerial vehicle.

In addition, in some example embodiments as shown in FIGs. 21-25B, one or more remaining propulsion mechanisms 102-1, 102-2, 102-3, 102-4, 102-5, 102-6 that have not experienced a fault or failure may also be used to generate lift to further slow a descent of the spinning aerial vehicle. Further, one or more remaining propulsion mechanisms 102-1, 102-2, 102-3, 102-4, 102-5, 102-6 that have not experienced a fault or failure may also be used to generate thrust to allow control and maneuverability, e.g., translation or rotation about various axes, of the spinning aerial vehicle. For example, one or more remaining propulsion mechanisms 102-1, 102-2, 102-3, 102-4, 102-5, 102-6 that have not experienced a fault or failure may also be modified to various angular orientations to facilitate and/or control spinning of the aerial vehicle. Moreover, one or more remaining propulsion mechanisms 102-1, 102-2, 102-3, 102-4, 102-5, 102-6 that have not experienced a fault or failure may also be used to generate thrust as an aerodynamic braking force, e.g., to slow a descent and/or to slow a rate of spin, just prior to landing of the spinning aerial vehicle.

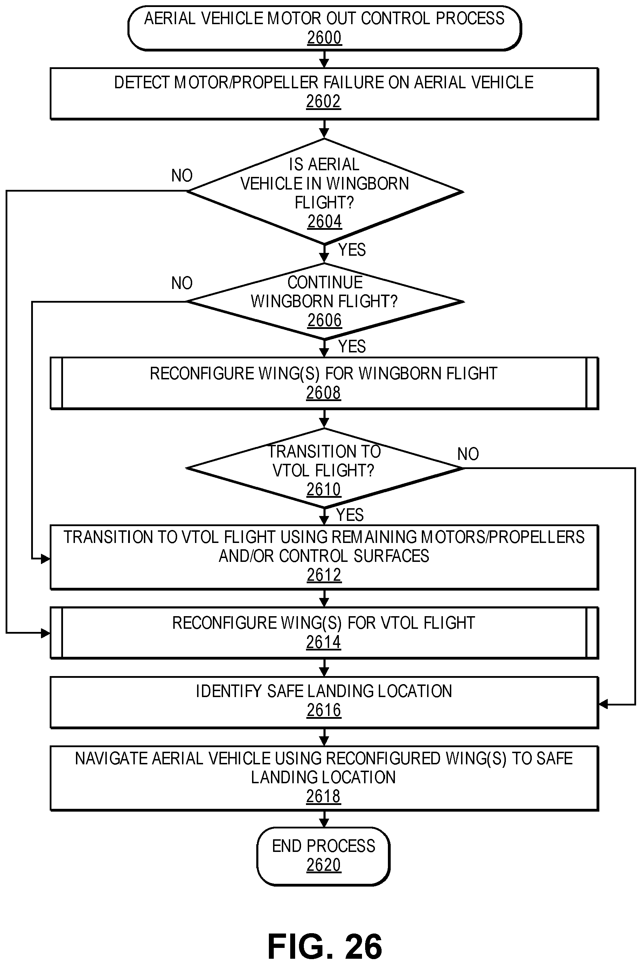

FIG. 26 illustrates a flow diagram of an example aerial vehicle motor out control process 2600, in accordance with disclosed implementations.

The process 2600 may begin by detecting a motor/propeller failure on an aerial vehicle, as at 2602. For example, the motor/propeller failure may be a propulsion mechanism failure. In addition, the detected failure may be any of the various types of faults that may result in motor out situations, as described herein.

The process 2600 may continue by determining whether the aerial vehicle is currently in wingborn flight, as at 2604. For example, wingborn flight may be synonymous with navigation of the aerial vehicle in a substantially horizontal direction, as described with reference to FIGs. 1, 3, and 4. This may be determined based on data associated with the flight controller and/or one or more motor controllers. In addition, this may be determined based on a flight plan of the aerial vehicle. Further, this may be determined based on data associated with one or more sensors, such as an inertial measurement unit, accelerometers, and/or gyroscopes.

If it is determined that the aerial vehicle is currently in wingborn flight, it may then be determined whether the aerial vehicle is to continue wingborn flight, as at 2606. This may be determined based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to continue wingborn flight, then the process 2600 may proceed by reconfiguring one or more wing sections for wingborn flight, as at 2608. For example, one or more wing sections may be reconfigured to have modified positions, angular orientations, and/or pitches in order to maintain control and safety of the aerial vehicle in wingborn flight responsive to the motor out situation. For example, positions, angular orientations, and/or pitches of one or more wing sections may be modified to provide additional lift to maintain wingborn flight. The determination of whether to continue with wingborn flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

In an example embodiment, referring to the aerial vehicle illustrated in FIG. 1, wing sections 107-1, 107-2 may be maintained in their positions as shown, wing sections 107-3, 107-4 may be extended to substantially form a line or plane with wing section 107-1, and wing sections 107-5, 107-6 may also be extended to substantially form a line or plane with wing section 107-2, such that the reconfigured aerial vehicle effectively includes one large upper wing and one large lower wing. In this manner, the aerial vehicle may be able to generate greater lift with the reconfigured wing sections 107-3, 107-4, 107-5, 107-6 and continue wingborn flight. In addition, angular orientations and/or pitches of the wing sections may also be modified to increase or adjust lift.

In another example embodiment, referring to the aerial vehicle illustrated in FIG. 1, wing sections 107-1, 107-2, 107-5, 107-6 may be maintained in their positions as shown, and wing sections 107-3, 107-4 may be extended from the far left and far right corners, respectively, of the aerial vehicle, such that the reconfigured aerial vehicle effectively includes one upper wing, one left wing, one right wing, and one lower wing. In this manner, the aerial vehicle may be able to generate greater lift with the reconfigured wing sections 107-3, 107-4 and continue wingborn flight. In addition, angular orientations and/or pitches of the wing sections may also be modified to increase or adjust lift.

In a further example embodiment, referring to the aerial vehicle illustrated in FIG. 1, wing sections 107-1, 107-2, 107-3, 107-4 may be maintained in their positions as shown, and wing sections 107-5, 107-6 may be extended from the far left and far right corners, respectively, of the aerial vehicle, such that the reconfigured aerial vehicle effectively includes one upper wing, one left wing, one right wing, and one lower wing. In this manner, the aerial vehicle may be able to generate greater lift with the reconfigured wing sections 107-5, 107-6 and continue wingborn flight. In addition, angular orientations and/or pitches of the wing sections may also be modified to increase or adjust lift.

After reconfiguring the wing sections and continuing wingborn flight, as at 2608, the process 2600 may then continue by determining whether to transition to VTOL flight, as at 2610. The determination of whether to transition to VTOL flight may also be based on a flight plan of the aerial vehicle, controllability of the aerial vehicle due to the motor out situation, remaining power or range of the aerial vehicle, additional drag due to the motor out situation, distance to a safe landing location for the aerial vehicle, objects, people, and/or obstacles in an environment of the aerial vehicle, temperature, wind, precipitation, pressure, or other environmental factors, and/or various other factors.

If it is determined that the aerial vehicle is to transition to VTOL flight, as at 2610, or after determining that the aerial vehicle is not to continue in wingborn flight, as at 2606, then the process 2600 may proceed to transition the aerial vehicle from wingborn flight to VTOL flight using any control surfaces and/or any remaining propulsion mechanisms, as at 2612. As described herein, the aerial vehicle may transition from wingborn flight to VTOL flight by reducing pitch and/or speed of the aerial vehicle such that the ring wing produces less lift and the aerial vehicle pitches rearward to a VTOL flight orientation, as described with respect to FIG. 2.

After transitioning to VTOL flight, as at 2612, or after determining that the aerial vehicle is not currently in wingborn flight, as at 2604, the process 2600 may continue by reconfiguring one or more wing sections for VTOL flight, as at 2614. For example, one or more wing sections may be reconfigured to have modified positions, angular orientations, and/or pitches in order to maintain control and safety of the aerial vehicle in VTOL flight responsive to the motor out situation. For example, positions of one or more wing sections may be extended or retracted to modify the size of span of the aerial vehicle in VTOL flight. In addition, angular orientations of one or more wing sections may be modified to pivot or rotate relative to a plane of the aerial vehicle. Further, pitches of one or more wing sections may be modified to adjust orientations of their leading and trailing edges, e.g., angle of attack. The various reconfigurations of the wing sections may cause the aerial vehicle as a whole to rotate or spin, and the wing sections may be reconfigured to various positions, angular orientations, and/or pitches to generate lift to slow a descent of the aerial vehicle and maintain control and safety of the aerial vehicle.

After reconfiguring one or more wing sections for VTOL flight, as at 2614, or after determining that the aerial vehicle is not to transition to VTOL flight and instead continue with wingborn flight, as at 2610, the process 2600 may proceed by identifying a safe landing location, as at 2616. For example, the safe landing location may be predetermined and stored by or provided to the aerial vehicle. Various safe landing locations may be identified and stored beforehand, and the aerial vehicle may identify a closest available safe landing location responsive to the motor out situation. In other examples, the aerial vehicle may use one or more sensors, such as imaging devices, radar, LIDAR, proximity sensors, inertial measurement units, navigation sensors such as global positioning sensors, and/or other types of sensors, to identify a safe landing location responsive to the motor out situation. Various other types of sensors, beacons, or communication devices may also be used to identify a safe landing location for the aerial vehicle.

The process 2600 may then continue to control the aerial vehicle using the reconfigured one or more wing sections to the safe landing location, as at 2618. For example, the aerial vehicle may reconfigure one or more wing sections for wingborn flight and/or may reconfigure one or more wing sections for VTOL flight, and the aerial vehicle may navigate to the identified safe landing location using the reconfigured one or more wing sections, as well as based on data from one or more sensors, such as imaging devices and navigation sensors. The process 2600 may then end, as at 2620.

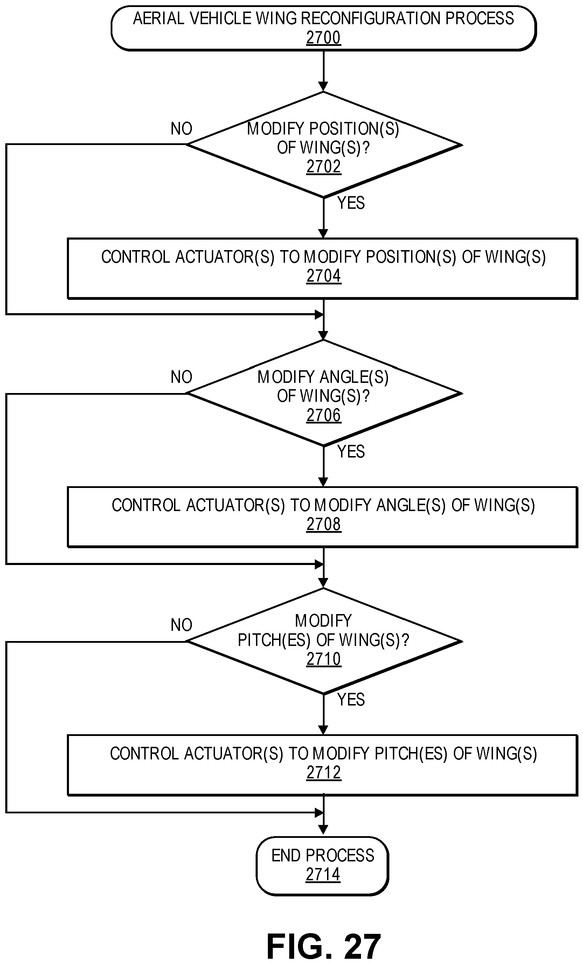

FIG. 27 illustrates a flow diagram of an example aerial vehicle wing reconfiguration process 2700, in accordance with disclosed implementations.

The process 2700 may begin by determining whether to modify positions of one or more wing sections, as at 2702. If it is determined that positions of one or more wing sections are to be modified responsive to a motor out situation, then the process 2700 may continue to control one or more actuators to modify positions of associated wing sections, as at 2704. As described herein, various types, numbers, or arrangements of actuators may be associated with each of the one or more wing sections, and one or more of such actuators may be actuated to effect changes to positions of the associated wing sections, e.g., extended away from the fuselage, or retracted toward the fuselage.

The process 2700 may then proceed by determining whether to modify angular orientations of one or more wing sections, as at 2706. If it is determined that angular orientations of one or more wing sections are to be modified responsive to a motor out situation, then the process 2700 may continue to control one or more actuators to modify angular orientations of associated wing sections, as at 2708. As described herein, various types, numbers, or arrangements of actuators may be associated with each of the one or more wing sections, and one or more of such actuators may be actuated to effect changes to angular orientations of associated wing sections, e.g., relative to a plane of the aerial vehicle.

The process 2700 may then proceed by determining whether to modify pitches of one or more wing sections, as at 2710. If it is determined that pitches of one or more wing sections are to be modified responsive to a motor out situation, then the process 2700 may continue to control one or more actuators to modify pitches of associated wing sections, as at 2712. As described herein, various types, numbers, or arrangements of actuators may be associated with each of the one or more wing sections, and one or more of such actuators may be actuated to effect changes to pitches of the associated wing sections, e.g., to affect an amount of lift generated by each wing section as part of the reconfigured aerial vehicle. The process 2700 may then end, as at 2714.

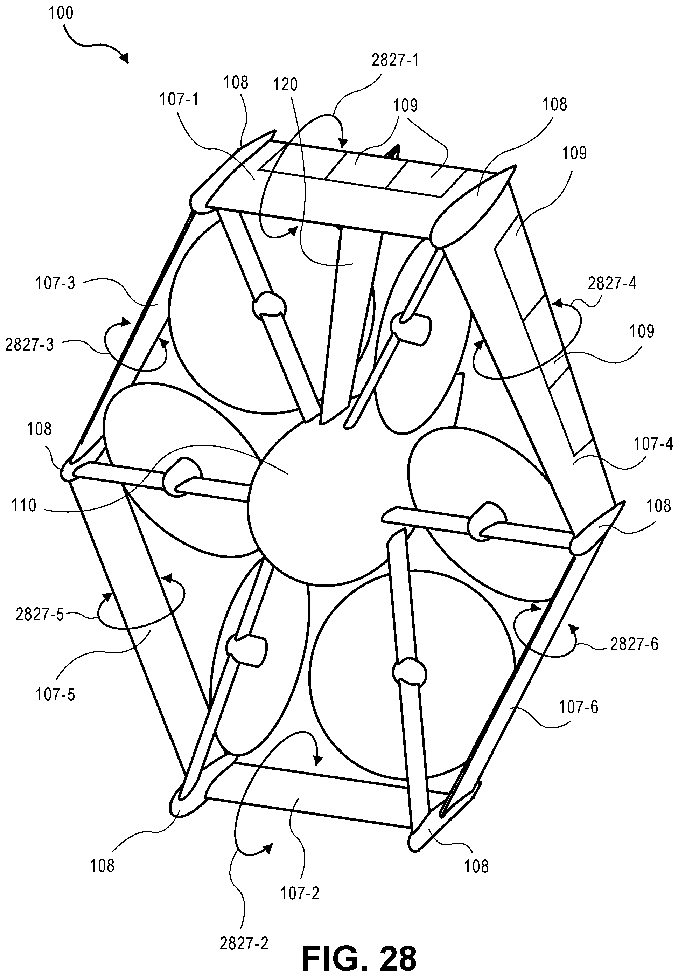

FIG. 28 illustrates another view of the aerial vehicle 100 illustrated in FIG. 1 with a ring wing that is substantially hexagonal in shape and that surrounds a plurality of propulsion mechanisms, according to disclosed implementations. The aerial vehicle 100 of FIG. 28 corresponds to aerial vehicle 100 of FIG. 1, aerial vehicle 200 of FIG. 2, aerial vehicle 300 of FIG. 3, and aerial vehicle 400 of FIG. 4.

As described herein, the ring wing 107 of the aerial vehicle 100 may include a plurality of wing sections 107-1, 107-2, 107-3, 107-4, 107-5, 107-6. In addition, each of the wing sections may be coupled or connected to adjacent wing sections via a joint 108, e.g., a pod, vessel, or other aerodynamically shaped component. As shown in FIG. 28, wing section 107-1 may be coupled to adjacent wing sections 107-3, 107-4 via respective joints 108. Likewise, wing section 107-2 may be coupled to adjacent wing sections 107-5, 107-6 via respective joints 108. Other wing sections may similarly be coupled to adjacent wing sections via respective joints 108.

Further, in example embodiments, one or more of the wing sections 107-1, 107-2, 107-3, 107-4, 107-5, 107-6 may be configured to pivot relative to a remainder of the ring wing 107, or relative to nominal or home positions of each wing section. For example, wing section 107-1 may pivot around a pivot axis extending substantially parallel to a span of wing section 107-1 between opposing joints 108 in directions indicated by arrow 2827-1, wing section 107-2 may pivot around a pivot axis extending substantially parallel to a span of wing section 107-2 between opposing joints 108 in directions indicated by arrow 2827-2, wing section 107-3 may pivot around a pivot axis extending substantially parallel to a span of wing section 107-3 between opposing joints 108 in directions indicated by arrow 2827-3, wing section 107-4 may pivot around a pivot axis extending substantially parallel to a span of wing section 107-4 between opposing joints 108 in directions indicated by arrow 2827-4, wing section 107-5 may pivot around a pivot axis extending substantially parallel to a span of wing section 107-5 between opposing joints 108 in directions indicated by arrow 2827-5, wing section 107-6 may pivot around a pivot axis extending substantially parallel to a span of wing section 107-6 between opposing joints 108 in directions indicated by arrow 2827-6.

In some example embodiments, only a subset of the wing sections may be configured to pivot, e.g., only upper and lower wing sections 107-1, 107-2 in a horizontal flight orientation may be configured to pivot relative to a remainder of the ring wing 107, or relative to nominal or home positions of each wing section. In other example embodiments, only one wing section, various combinations of two or more wing sections, or all wing sections may be configured to pivot relative to a remainder of the ring wing 107, or relative to nominal or home positions of each wing section.

By allowing one or more wing sections to pivot, e.g., freely pivot based at least in part on airflow around the wing sections, the wing sections may automatically, e.g., passively, actively, or combinations thereof, adjust their orientations based on the airflow, air resistance, or other environmental factors around the wing sections. As a result, vibrations or forces experienced by the aerial vehicle and various components of the aerial vehicle as a result of airflow or air resistance may be reduced or minimized. In addition, stall or turbulence conditions affecting the aerial vehicle during operation may be prevented or minimized.

While the examples discussed above in at least FIGS. 1-4 and 28 describe a ring wing having a substantially hexagonal shape, in other implementations, the ring wing may have other shapes. For example, the ring wing may be substantially circular, square, rectangular, pentagonal, octagonal, etc. Further, while the examples discussed above include six propulsion mechanism arms, six propulsion mechanisms, and six propellers, in other example embodiments, the aerial vehicle reconfigurations described herein may be implemented on various other types of aerial vehicles, such as aerial vehicles having fewer than six propulsion mechanism arms, motors, and propellers, aerial vehicles having greater than six propulsion mechanism arms, motors, and propellers, and/or aerial vehicles having configurations different from those described herein, such as quad-copters, octa-copters, or other configurations.

In addition, although FIG. 28 shows each of the wing sections coupled to adjacent wing sections via joints 108, in other example embodiments, one or more wing sections may be directly coupled to one or more adjacent wing sections, e.g., without intervening joints 108. Further, although FIG. 28 shows substantially an entire span of each wing section as being pivotable, in other example embodiments, less than an entire span of each wing section may be pivotable, and/or two or more portions of each wing section may be individually pivotable.

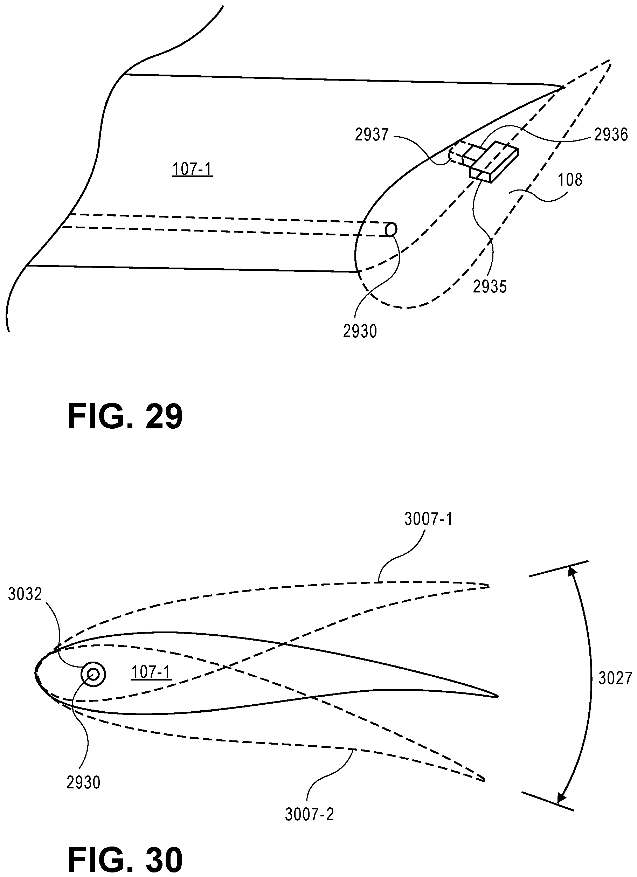

FIG. 29 illustrates a schematic, partial view of a pivoting wing section 107-1 and an example locking element, in accordance with disclosed implementations.

As shown in FIG. 29, the pivoting wing section 107-1 may be pivotably coupled or connected to a joint 108. In addition, the wing section 107-1 may be pivotable about pivot axis 2930. The pivot axis 2930 may comprise a shaft, pin, or other element that facilitates pivoting or rotation of the wing section 107-1 relative to joint 108. The shaft or pin associated with pivot axis 2930 may extend substantially parallel to a span of the wing section 107-1, and the shaft or pin may extend all or only a portion of the span of the wing section 107-1. Further, one or more bearings, rollers, lubricants, or other rotational elements may be associated with the shaft or pin at the pivot axis 2930 to facilitate pivoting or rotation of the wing section 107-1.

In addition, a locking element 2935 may be associated with wing section 107-1 to either hold or prevent pivoting of the wing section 107-1 relative to joint 108, or release or allow pivoting of the wing section 107-1 relative to joint 108. The locking element 2935 may be located at least partially within joint 108 and interface with at least a portion of the wing section 107-1, and when locked by locking element 2935, the wing section 107-1 may be held in a nominal (or home) position.

In one example embodiment, the locking element 2935 may comprise a pin or key 2936 that may be extended into or retracted from a hole, groove, or keyhole 2937 associated with wing section 107-1 via an actuator, in order to prevent or allow pivoting of wing section 107-1. In another example embodiment, the locking element 2935 may comprise a first magnetic or electromagnetic element 2936 that interfaces with a second magnetic or electromagnetic element 2937 associated with wing section 107-1, in order to prevent or allow pivoting of wing section 107-1. In a further example embodiment, the locking element 2935 may comprise a frictional element 2936 that interferes with another element 2937 associated with wing section 107-1 or a portion of the wing section 107-1, in order to prevent or allow pivoting of wing section 107-1.

Further, the locking element 2935 may comprise one or more actuators associated with wing section 107-1 to control locking or unlocking of the wing section 107-1 relative to a nominal or home position. Each of the actuators may be connected via electrical lines or wirelessly (not shown) to an aerial vehicle control system, a part thereof, or another component in communication with the aerial vehicle control system, in order to receive power and/or instructions or commands.

The one or more actuators may include one or more of a clutch, switch, bias element, servo, solenoid, screw actuator, geared actuator, linear actuator, rotary actuator, piezoelectric actuator, magnetic actuator, or various other types of actuators. In addition, the one or more actuators may be configured for one-time actuation, may be configured for one-way or two-way actuation, and/or may be configured for binary actuation between two different positions.

In example embodiments, various of the one or more actuators may be utilized to extend or retract a pin, key, or similar extending element into a hole, groove, keyhole, or similar receiving element to effect locking or unlocking of wing section 107-1, such as a spring-loaded actuator, a solenoid or servo, a screw actuator, a geared actuator (such as a rack and pinion arrangement), a magnetic actuator, a piezoelectric actuator, or other types of actuators. In addition, various types or combinations of magnetic and/or electromagnetic actuators may be utilized to create a magnetic locking and unlocking interface between wing section 107-1 and joint 108.

Although FIG. 29 shows a particular number, arrangement, and orientation of pivot axis 2930 and locking element 2935 with respect to wing section 107-1 and joint 108, in other embodiments, different numbers, arrangements, and/or orientations of a pivot axis and locking element may be included. For example, two or more locking elements may be included at an interface between a wing section 107-1 and joint 108, in which each locking element may lock the wing section 107-1 at a different pivoted or rotational position relative to joint 108. In addition, the relative positions or arrangements of the pivot axis and locking element may be modified from that shown in FIG. 29. Moreover, the locking element may be incorporated into the pivot axis, e.g., a pin or key may extend from a shaft associated with the pivot axis to lock or unlock the wing section 107-1, or one or more magnetic or frictional elements may be incorporated into a shaft associated with the pivot axis to lock or unlock the wing section 107-1.

Moreover, the one or more locking elements 2935 may lock a wing section 107-1 in one or more pivoted or rotational positions to achieve one or more additional purposes. For example, the wing section 107-1 may be locked in a pivoted or rotational position to increase or maximize protection afforded by the wing section 107-1 from a propulsion mechanism or other component of the aerial vehicle. In addition, the wing section 107-1 may be locked in a pivoted or rotational position to increase air resistance, e.g., to act as an air brake, to slow or stop the aerial vehicle. Further, the wing section 107-1 may be locked in a pivoted or rotational position to modify or adjust one or more other aspects or characteristics of the aerial vehicle, including aspects related to safety, flight dynamics, stability, control, or other characteristics.

FIG. 30 illustrates a schematic, cross-sectional view of a pivoting wing section 107-1, in accordance with disclosed implementations.

As shown in FIG. 30, the pivoting wing section 107-1 may be configured to pivot or rotate about pivot axis 2930. The pivot axis 2930 may comprise a shaft, pin, or other element that facilitates pivoting or rotation of the wing section 107-1 relative to a nominal or home position. The shaft or pin associated with pivot axis 2930 may extend substantially parallel to a span of the wing section 107-1, and the shaft or pin may extend all or only a portion of the span of the wing section 107-1. Further, one or more bearings, rollers, lubricants, or other rotational elements may be associated with the shaft or pin at the pivot axis 2930 to facilitate pivoting or rotation of the wing section 107-1.

In addition, the wing section 107-1 may be configured to pivot over an arc of travel 3027 between opposing, fully rotated positions 3007-1, 3007-2. In some example embodiments, the fully rotated positions 3007-1, 3007-2 may define ends of travel or rotation of the wing section 107-1, and the ends of travel or rotation may be defined by mechanical or physical stops, which may be integrated into the pivot axis 2930 or an interface between the wing section 107-1 and joint 108. In other example embodiments, the available arc of travel 3027 of the wing section 107-1 may not have any limits, such that the wing section 107-1 may rotate completely around the pivot axis 2930, in one or both rotational directions.

In example embodiments, the wing section 107-1 may be allowed to freely pivot or rotate based at least in part on airflow around the wing section 107-1. For example, depending upon environmental factors, such as wind, gusts, temperature, pressure, or others, as well as operational parameters of the aerial vehicle, the wing section 107-1 may freely pivot or rotate to any position. Generally, a freely pivoting wing section 107-1 may rotate to a position that may generate the least air resistance or drag on the aerial vehicle, while also reducing vibrations or forces that are transferred to other parts or components of the aerial vehicle via the wing section 107-1.

In other example embodiments, the wing section 107-1 may be allowed to freely pivot or rotate based at least in part on airflow around the wing section 107-1, and the wing section 107-1 may also include one or more bias elements or dampening elements 3032. For example, a bias element 3032 may be incorporated into a shaft or pin associated with the pivot axis 2930, e.g., a torsional spring element, or may be included at an interface between the wing section 107-1 and joint 108, such that the wing section 107-1 may be biased toward a nominal or home position, even in the absence of a locking element 2935 as described herein. Alternatively, the bias element 3032 may cooperate with a locking element 2935 to facilitate locking or unlocking of the wing section 107-1 relative to a nominal or home position. Alternatively or in addition, a dampening element 3032 may be incorporated into a shaft or pin associated with the pivot axis 2930, or may be included at an interface between the wing section 107-1 and joint 108, such that pivoting or rotation of the wing section 107-1 may be slowed, dampened, or otherwise controlled, thereby preventing continuous or rapid oscillation or vibrations of the wing section 107-1. In further example embodiments, one or more bias elements and dampening elements 3032 may be provided together to further control pivoting or rotation of the wing section 107-1 relative to a nominal or home position.

Although FIG. 30 shows a particular number, arrangement, and orientation of bias elements and dampening elements 3032 with respect to wing section 107-1 and joint 108, in other embodiments, different numbers, arrangements, and/or orientations of bias elements and/or dampening elements may be included. For example, two or more bias elements or dampening elements may be incorporated along pivot axis or included at an interface between a wing section 107-1 and joint 108.

In further example embodiments, as further described herein, the wing section 107-1 may include one or more actuators, and the wing section 107-1 may be actuated to pivot or rotate based at least in part on airflow around the wing section 107-1. For example, one or more actuators may be included, incorporated, or associated with the wing section 107-1 and/or joint 108. In addition, the one or more actuators may cooperate with a locking element 2935 to facilitate locking or unlocking of the wing section 107-1 relative to a nominal or home position. Further, the one or more actuators may also cooperate with bias elements and/or dampening elements 3032 to further control pivoting or rotation of the wing section 107-1 relative to a nominal or home position and/or to prevent continuous or rapid oscillation or vibrations of the wing section 107-1.

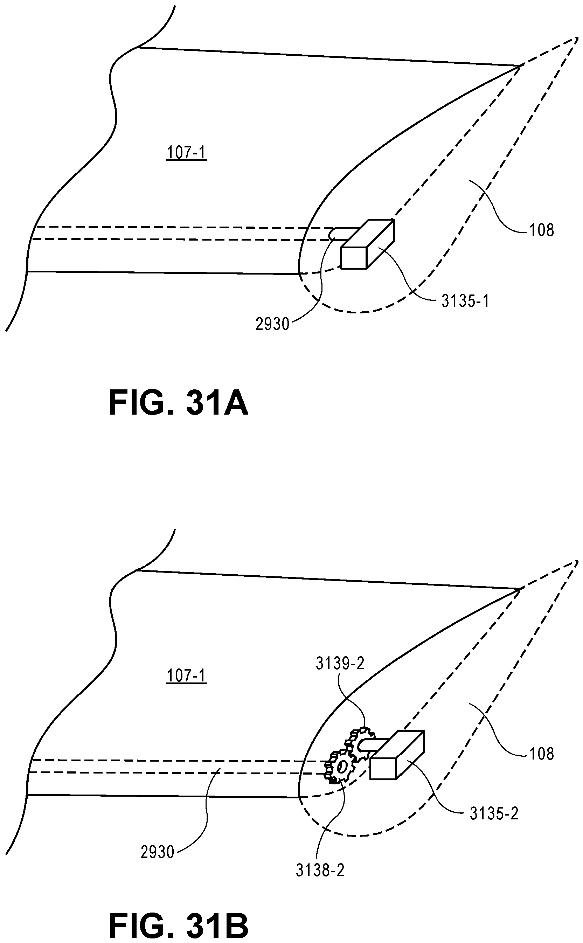

FIG. 31A illustrates a schematic, partial view of a pivoting wing section 107-1 and a first example actuator, in accordance with disclosed implementations.

As shown in FIG. 31A, the pivoting wing section 107-1 may be configured to pivot or rotate about pivot axis 2930. The pivot axis 2930 may comprise a shaft, pin, or other element that facilitates pivoting or rotation of the wing section 107-1 relative to a nominal or home position. The shaft or pin associated with pivot axis 2930 may extend substantially parallel to a span of the wing section 107-1, and the shaft or pin may extend all or only a portion of the span of the wing section 107-1.

In addition, the wing section 107-1 may be associated with an actuator 3135-1 that is directly coupled to the wing section 107-1, e.g., via a shaft, pin, or other element associated with the pivot axis 2930. By the direct coupling, pivoting or rotation of the actuator 3135-1 may cause corresponding pivoting or rotation of the wing section 107-1. The actuator 3135-1 may be connected via electrical lines or wirelessly (not shown) to an aerial vehicle control system, a part thereof, or another component in communication with the aerial vehicle control system, in order to receive power and/or instructions or commands.

In example embodiments, the actuator 3135-1 may comprise a clutch, switch, servo, solenoid, motor, rotary actuator, or other types of actuators. For example, an actuator 3135-1 comprising a clutch, switch, or solenoid may pivot or rotate the wing section 107-1 between two different positions or orientations. In addition, an actuator 3135-1 comprising a servo, motor, or rotary actuator may be able to pivot or rotate the wing section 107-1 between a plurality of different positions or orientations.

FIG. 31B illustrates a schematic, partial view of a pivoting wing section 107-1 and a second example actuator, in accordance with disclosed implementations.

As shown in FIG. 31B, the pivoting wing section 107-1 may be configured to pivot or rotate about pivot axis 2930. The pivot axis 2930 may comprise a shaft, pin, or other element that facilitates pivoting or rotation of the wing section 107-1 relative to a nominal or home position. The shaft or pin associated with pivot axis 2930 may extend substantially parallel to a span of the wing section 107-1, and the shaft or pin may extend all or only a portion of the span of the wing section 107-1.

In addition, the wing section 107-1 may be associated with an actuator 3135-2 that is coupled to the wing section 107-1 via a gear assembly, e.g., gears 3138-2 and 3139-2 connected to a shaft, pin, or other element associated with the pivot axis 2930. By the gear assembly, movement, pivoting, or rotation of the actuator 3135-2 may cause corresponding pivoting or rotation of the wing section 107-1. The actuator 3135-2 may be connected via electrical lines or wirelessly (not shown) to an aerial vehicle control system, a part thereof, or another component in communication with the aerial vehicle control system, in order to receive power and/or instructions or commands.

In example embodiments, the actuator 3135-2 may comprise a clutch, switch, servo, solenoid, motor, rotary actuator, linear actuator, screw actuator, geared actuator, or other types of actuators. For example, an actuator 3135-2 comprising a clutch, switch, or solenoid connected to a gear assembly may pivot or rotate the wing section 107-1 between two different positions or orientations. In addition, an actuator 3135-2 comprising a servo, motor, rotary actuator, linear actuator, screw actuator, or geared actuator connected to a gear assembly may be able to pivot or rotate the wing section 107-1 between a plurality of different positions or orientations. Further, although FIG. 31B illustrates a particular gear assembly including two spur gears, various other types, numbers, and arrangements of gears may also be used in a gear assembly, such as bevel gears, spiral gears, worm gears, herringbone gears, rack and pinion gear arrangements, other gear types or assemblies, or combinations thereof.

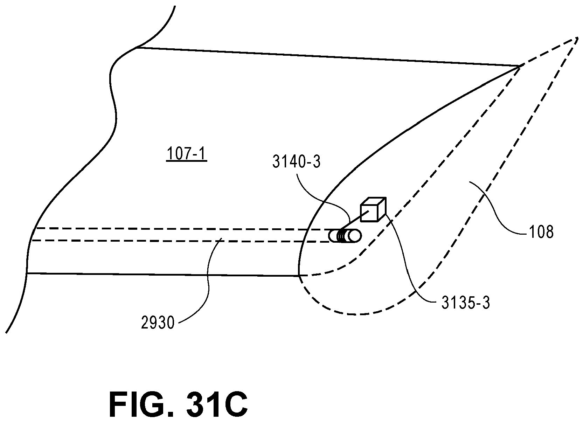

FIG. 31C illustrates a schematic, partial view of a pivoting wing section 107-1 and a third example actuator, in accordance with disclosed implementations.

As shown in FIG. 31C, the pivoting wing section 107-1 may be configured to pivot or rotate about pivot axis 2930. The pivot axis 2930 may comprise a shaft, pin, or other element that facilitates pivoting or rotation of the wing section 107-1 relative to a nominal or home position. The shaft or pin associated with pivot axis 2930 may extend substantially parallel to a span of the wing section 107-1, and the shaft or pin may extend all or only a portion of the span of the wing section 107-1.

In addition, the wing section 107-1 may be associated with an actuator 3135-3 that is coupled to the wing section 107-1 via a pulley assembly 3140-3, e.g., a rope, string, wire, filament, or other similar element, connected to a shaft, pin, or other element associated with the pivot axis 2930. By the pulley assembly, movement, pivoting, or rotation of the actuator 3135-3 may cause corresponding pivoting or rotation of the wing section 107-1. The actuator 3135-3 may be connected via electrical lines or wirelessly (not shown) to an aerial vehicle control system, a part thereof, or another component in communication with the aerial vehicle control system, in order to receive power and/or instructions or commands.

In example embodiments, the actuator 3135-3 may comprise a clutch, switch, servo, solenoid, motor, rotary actuator, linear actuator, screw actuator, geared actuator, or other types of actuators. For example, an actuator 3135-3 comprising a clutch, switch, or solenoid connected to a pulley assembly may pivot or rotate the wing section 107-1 between two different positions or orientations. In addition, an actuator 3135-3 comprising a servo, motor, rotary actuator, linear actuator, screw actuator, or geared actuator connected to a pulley assembly may be able to pivot or rotate the wing section 107-1 between a plurality of different positions or orientations. Further, although FIG. 31C illustrates a particular pulley assembly including one pulley rope, string, wire, filament, or other similar element, various other types, numbers, and arrangements of pulley assemblies may also be used, such as pulleys used in combination with bias elements, two-way or bidirectional pulleys, a plurality of pulleys, two or more pulleys in different arrangements or orientations, or combinations thereof.

Further, the one or more actuators 3135 may rotate a wing section 107-1 to one or more pivoted or rotational positions to achieve one or more additional purposes. For example, the wing section 107-1 may be rotated to a pivoted or rotational position to increase or maximize protection afforded by the wing section 107-1 from a propulsion mechanism or other component of the aerial vehicle. In addition, the wing section 107-1 may be rotated to a pivoted or rotational position to increase air resistance, e.g., to act as an air brake, to slow or stop the aerial vehicle. Further, the wing section 107-1 may be rotated to a pivoted or rotational position to modify or adjust one or more other aspects or characteristics of the aerial vehicle, including aspects related to safety, flight dynamics, stability, control, or other characteristics.

Although FIGs. 29-31C are described with reference to one wing section 107-1, it is understood that any and all features, elements, and variations described herein with reference to wing section 107-1 may also be incorporated into one or more other wing sections 107-2, 107-3, 107-4, 107-5, 107-6. In addition, the features, elements, and variations described herein individually with respect to each of FIGs. 29-31C may be combined in various combinations. Moreover, in further example embodiments that do not include joints 108 between wing sections, one or more of the various features, elements, and variations described herein, e.g., locking elements, bias elements, dampening elements, or actuators, may be incorporated into one or more portions of the wing sections, static or non-rotating portions of wing sections, adjacent wing sections, or any other components of the aerial vehicle that interface with the wing sections.

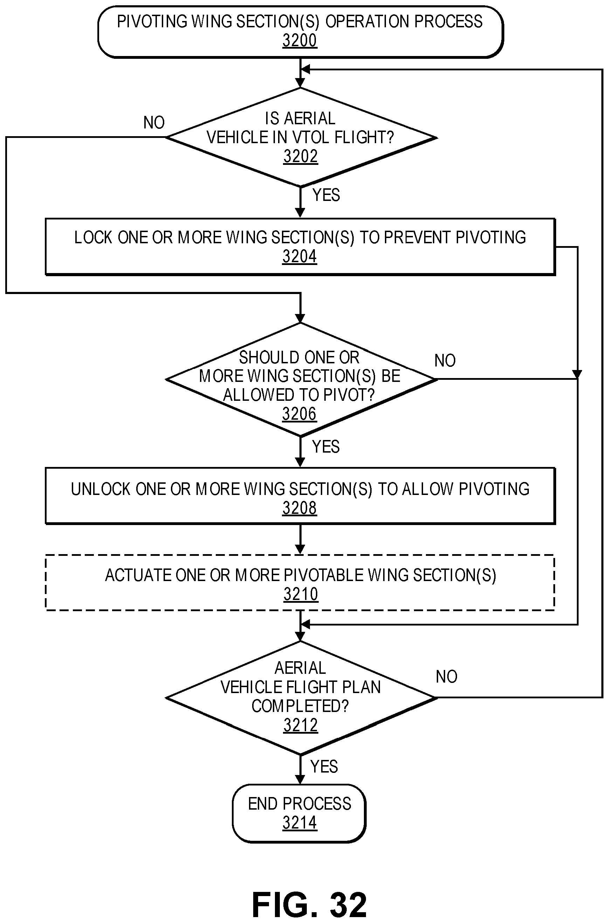

FIG. 32 is a flow diagram illustrating an example pivoting wing section(s) operation process 3200, according to an implementation.

The process 3200 may begin by determining whether the aerial vehicle is currently in VTOL flight, as at 3202. For example, VTOL flight may be synonymous with navigation of the aerial vehicle in a substantially vertical orientation, as described with reference to FIG. 2. This may be determined based on data associated with the flight controller and/or one or more motor controllers. In addition, this may be determined based on a flight plan of the aerial vehicle. Further, this may be determined based on data associated with one or more sensors, such as an inertial measurement unit, accelerometers, and/or gyroscopes.

If it is determined that the aerial vehicle is currently in VTOL flight, as at 3202, then the process 3200 may proceed to lock one or more wing sections to prevent pivoting, as at 3204. For example, in a substantially vertical orientation for VTOL flight, pivoting of wing sections may not be needed. Instead, it may be desirable to maintain the wing sections in fixed positions, e.g., nominal or home positions. Thus, in example embodiments in which one or more wing sections are associated with locking elements to maintain the wing sections relative to nominal or home positions, the locking elements may be actuated to hold the wing sections and prevent pivoting. This may maintain or improve stability and/or controllability of the aerial vehicle in VTOL flight. Moreover, as described herein, one or more wing sections may be rotated and/or locked in one or more pivoted or rotational positions to achieve one or more additional purposes, such as modifying or adjusting one or more aspects related to safety, flight dynamics, stability, control, or other characteristics.

If, however, it is determined that the aerial vehicle is not currently in VTOL flight, as at 3202, then the process 3200 may continue to determine whether one or more wing sections should be allowed to pivot, as at 3206. For example, the aerial vehicle may be in a substantially horizontal orientation for navigation in a substantially horizontal direction, as described with reference to FIGs. 1, 3, 4, and 28. In the substantially horizontal orientation, pivoting of one or more wing sections may reduce vibrations and forces transferred to parts of the aerial vehicle via the wing sections, and/or may prevent stall or minimize turbulence experienced by the aerial vehicle. Moreover, pivoting of one or more wing sections may improve stability and controllability of the aerial vehicle, e.g., in response to wind gusts or other environmental factors, or in various flight or navigation scenarios.

In other example embodiments, alternatively or in addition to the determination related to vertical flight orientation or horizontal flight orientation of the aerial vehicle, the determination of whether to allow pivoting of one or more wing sections may also be based on various other factors. For example, environmental factors (e.g., wind, gusts, temperature, pressure, precipitation, or others), operating parameters of the aerial vehicle (e.g., speed, altitude, weight, power, range, vibration, flight plan, or others), location factors (e.g., urban, rural, densely populated, sparsely populated, potential obstacles, people, or objects, acceptable noise level, or others), and/or various other factors may also be analyzed or considered to determine whether to allow pivoting of one or more wing sections. Data associated with these various factors may be sensed or detected by various sensors, such as imaging sensors, audio sensors, temperature sensors, pressure sensors, inertial measurement units, accelerometers, gyroscopes, altimeters, location sensors, or other sensors, and analyzed to determine whether to allow pivoting of one or more wing sections, potentially in combination with stored data related to the various factors.

If it is determined that one or more wing sections should be allowed to pivot, as at 3206, then the process 3200 may proceed by unlocking one or more wing sections to allow pivoting, as at 3208. As described herein, in example embodiments in which one or more wing sections are associated with locking elements to maintain the wing sections relative to nominal or home positions, the locking elements may be actuated to release the wing sections and allow pivoting. In response to releasing locking elements, the one or more wing sections may be allowed to freely pivot about respective pivot axes. In embodiments in which the one or more wing sections are associated with bias elements and/or dampening elements, the one or more wing sections may be allowed to freely pivot, and the bias elements and/or dampening elements may provide further control over the free pivoting of the wing sections as described herein.

In addition, for example embodiments in which the one or more wing sections are associated with one or more actuators, the process 3200 may continue by actuating one or more pivotable wing sections, as at 3210. In this manner, the wing sections may be actuated to desired pivoted or rotational positions or orientations using the one or more actuators. In addition, the desired pivoted or rotational positions or orientations may be determined based on various factors, such as environmental factors, operating parameters of the aerial vehicle, location factors, and/or various other factors, as described herein. Moreover, as described herein, one or more wing sections may be rotated and/or locked in one or more pivoted or rotational positions to achieve one or more additional purposes, such as modifying or adjusting one or more aspects related to safety, flight dynamics, stability, control, or other characteristics.

After locking one or more wing sections to prevent pivoting, as at 3204, or in response to determining that one or more wing sections should not be allowed to pivot, as at 3206, or after unlocking one or more wing sections to allow pivoting, as at 3208, or after actuating one or more pivotable wing sections, as at 3210, the process 3200 may proceed to determine whether the aerial vehicle flight plan is completed, as at 3212. If it is determined that the aerial vehicle flight plan is not completed, e.g., the aerial vehicle has not yet completed its mission or arrived at a destination location, the process 3200 may return to step 3202 and repeat the steps of process 3200 during remaining portions of the aerial vehicle flight plan.

If, however, it is determined that the aerial vehicle flight plan is completed, e.g., the aerial vehicle has completed its mission or arrived at a destination location, then the process 3200 may end, as at 3214.

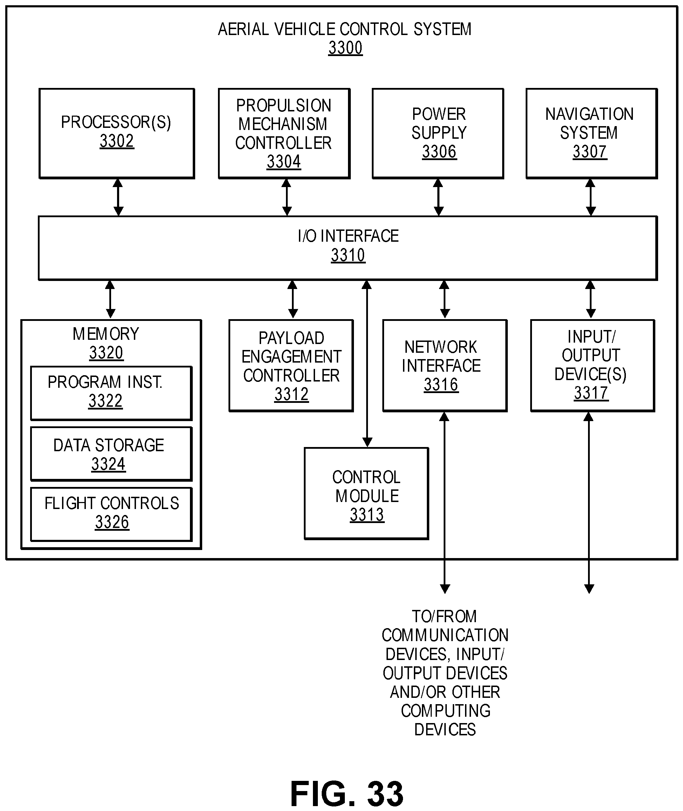

FIG. 33 is a block diagram illustrating various components of an example aerial vehicle control system 3300, in accordance with disclosed implementations.

In various examples, the block diagram may be illustrative of one or more aspects of the aerial vehicle control system 3300 that may be used to implement the various systems and methods discussed herein and/or to control operation of an aerial vehicle discussed herein. In the illustrated implementation, the aerial vehicle control system 3300 includes one or more processors 3302, coupled to a memory, e.g., a non-transitory computer readable storage medium 3320, via an input/output (I/O) interface 3310. The aerial vehicle control system 3300 also includes propulsion mechanism controllers 3304, such as electronic speed controls (ESCs) or motor controllers, power modules 3306 and/or a navigation system 3307. The aerial vehicle control system 3300 further includes a payload engagement controller 3312, a control module 3313 configured to implement one or more aerial vehicle reconfigurations described herein and/or configured to control functions and operations related to pivoting wing sections described herein, a network interface 3316, and one or more input/output devices 3317.

In various implementations, the aerial vehicle control system 3300 may be a uniprocessor system including one processor 3302, or a multiprocessor system including several processors 3302 (e.g., two, four, eight, or another suitable number). The processor(s) 3302 may be any suitable processor capable of executing instructions. For example, in various implementations, the processor(s) 3302 may be general-purpose or embedded processors implementing any of a variety of instruction set architectures (ISAs), such as the x86, PowerPC, SPARC, or MIPS ISAs, or any other suitable ISA. In multiprocessor systems, each processor(s) 3302 may commonly, but not necessarily, implement the same ISA.

The non-transitory computer readable storage medium 3320 may be configured to store executable instructions, data, flight paths, flight control parameters, center of gravity information, and/or data items accessible by the processor(s) 3302. In various implementations, the non-transitory computer readable storage medium 3320 may be implemented using any suitable memory technology, such as static random access memory (SRAM), synchronous dynamic RAM (SDRAM), nonvolatile/Flash-type memory, or any other type of memory. In the illustrated implementation, program instructions and data implementing desired functions, such as those described herein, are shown stored within the non-transitory computer readable storage medium 3320 as program instructions 3322, data storage 3324 and flight controls 3326, respectively. In other implementations, program instructions, data, and/or flight controls may be received, sent, or stored upon different types of computer-accessible media, such as non-transitory media, or on similar media separate from the non-transitory computer readable storage medium 3320 or the aerial vehicle control system 3300. Generally speaking, a non-transitory, computer readable storage medium may include storage media or memory media such as magnetic or optical media, e.g., disk or CD/DVD-ROM, coupled to the aerial vehicle control system 3300 via the I/O interface 3310. Program instructions and data stored via a non-transitory computer readable medium may be transmitted by transmission media or signals such as electrical, electromagnetic, or digital signals, which may be conveyed via a communication medium such as a network and/or a wireless link, such as may be implemented via the network interface 3316.

In one implementation, the I/O interface 3310 may be configured to coordinate I/O traffic between the processor(s) 3302, the non-transitory computer readable storage medium 3320, and any peripheral devices, the network interface or other peripheral interfaces, such as input/output devices 3317. In some implementations, the I/O interface 3310 may perform any necessary protocol, timing or other data transformations to convert data signals from one component (e.g., non-transitory computer readable storage medium 3320) into a format suitable for use by another component (e.g., processor(s) 3302). In some implementations, the I/O interface 3310 may include support for devices attached through various types of peripheral buses, such as a variant of the Peripheral Component Interconnect (PCI) bus standard or the Universal Serial Bus (USB) standard, for example. In some implementations, the function of the I/O interface 3310 may be split into two or more separate components, such as a north bridge and a south bridge, for example. Also, in some implementations, some or all of the functionality of the I/O interface 3310, such as an interface to the non-transitory computer readable storage medium 3320, may be incorporated directly into the processor(s) 3302.

The propulsion mechanism controllers 3304 may communicate with the navigation system 3307 and adjust the rotational speed, position, orientation, or other parameters of each propulsion mechanism to implement one or more aerial vehicle reconfigurations, to implement one or more aerial vehicle flight plans or operations, to stabilize the aerial vehicle, and/or to perform one or more maneuvers and guide the aerial vehicle along a flight path and/or to a safe landing location.

The navigation system 3307 may include a global positioning system (GPS), indoor positioning system (IPS), or other similar system and/or sensors that can be used to navigate the aerial vehicle to and/or from a location. The payload engagement controller 3312 communicates with the actuator(s) or motor(s) (e.g., a servo motor) used to engage and/or disengage items.

The control module 3313 may comprise or form a part of a flight controller that is configured to implement one or more aerial vehicle reconfigurations described herein, such as modifying cant angles of one or more propulsion mechanisms, modifying toe angles of one or more propulsion mechanisms, modifying positions of one or more propulsion mechanisms, modifying orientations of one or more propulsion mechanisms, modifying angular orientations of one or more propellers, blades, and/or blade sections, modifying positions of one or more propellers, blades, and/or blade sections, modifying lengths of one or more propellers, blades, and/or blade sections, or other reconfigurations of propellers, blades, and/or blade sections of the aerial vehicle, modifying positions of one or more wing sections, modifying angular orientations of one or more wing sections, modifying pitches of one or more wing sections, or other reconfigurations of the aerial vehicle. In addition, the control module 3313 may comprise or form a part of a flight controller that is configured to control functions or operations related to pivoting wing sections described herein, such as determining whether to allow pivoting of one or more wing sections, unlocking one or more wing sections, locking one or more wing sections, and/or actuating one or more wing sections, or other functions or operations related to pivoting wing sections of the aerial vehicle. Further, the control module 3313 may also be configured to control wingborn or horizontal flight of the aerial vehicle, VTOL flight of the aerial vehicle, and transitions between wingborn and VTOL flight orientations of the aerial vehicle. The control module 3313 may send and/or receive data to/from one or more sensors, such as imaging devices, an inertial measurement unit, accelerometers, gyroscopes, navigation sensors, or other sensors, and/or the control module 3313 may send and/or receive data to/from propulsion mechanism controllers 3304 associated with respective propulsion mechanisms. In some example embodiments, the control module 3313 may be integrated with or form a part of one or more of the processors 3302, the propulsion mechanism controllers 3304, and/or the navigation system 3307.

The network interface 3316 may be configured to allow data to be exchanged between the aerial vehicle control system 3300, other devices attached to a network, such as other computer systems (e.g., remote computing resources), and/or with aerial vehicle control systems of other aerial vehicles. For example, the network interface 3316 may enable wireless communication between the aerial vehicle and an aerial vehicle control system that is implemented on one or more remote computing resources. For wireless communication, an antenna of the aerial vehicle or other communication components may be utilized. As another example, the network interface 3316 may enable wireless communication between numerous aerial vehicles. In various implementations, the network interface 3316 may support communication via wireless general data networks, such as a Wi-Fi network. For example, the network interface 3316 may support communication via telecommunications networks, such as cellular communication networks, satellite networks, and the like.

Input/output devices 3317 may, in some implementations, include one or more displays, imaging devices, thermal sensors, infrared sensors, time of flight sensors, accelerometers, pressure sensors, weather sensors, etc. Multiple input/output devices 3317 may be present and controlled by the aerial vehicle control system 3300. One or more of these sensors may be utilized to implement the aerial vehicle reconfigurations described herein and/or to control functions or operations related to pivoting wing sections described herein, as well as to detect failures or faults, control wingborn or VTOL flight, effect transitions between wingborn and VTOL configurations, identify safe landing locations, and/or any other operations or functions described herein.

As shown in FIG. 33, the memory may include program instructions 3322, which may be configured to implement the example routines and/or sub-routines described herein. The data storage 3324 may include various data stores for maintaining data items that may be provided for aerial vehicle reconfigurations, pivoting wing sections, determining flight paths, landing, identifying locations for disengaging items, determining which propulsion mechanisms to utilize to execute a maneuver, etc. In various implementations, the parameter values and other data illustrated herein as being included in one or more data stores may be combined with other information not described or may be partitioned differently into more, fewer, or different data structures. In some implementations, data stores may be physically located in one memory or may be distributed among two or more memories.

Those skilled in the art will appreciate that the aerial vehicle control system 3300 is merely illustrative and is not intended to limit the scope of the present disclosure. In particular, the computing system and devices may include any combination of hardware or software that can perform the indicated functions. The aerial vehicle control system 3300 may also be connected to other devices that are not illustrated, or instead may operate as a stand-alone system. In addition, the functionality provided by the illustrated components may, in some implementations, be combined in fewer components or distributed in additional components. Similarly, in some implementations, the functionality of some of the illustrated components may not be provided and/or other additional functionality may be available.

Those skilled in the art will also appreciate that, while various items are illustrated as being stored in memory or storage while being used, these items or portions of them may be transferred between memory and other storage devices for purposes of memory management and data integrity. Alternatively, in other implementations, some or all of the software components may execute in memory on another device and communicate with the illustrated aerial vehicle control system 3300. Some or all of the system components or data structures may also be stored (e.g., as instructions or structured data) on a non-transitory, computer-accessible medium or a portable article to be read by an appropriate drive, various examples of which are described herein. In some implementations, instructions stored on a computer-accessible medium separate from the aerial vehicle control system 3300 may be transmitted to the aerial vehicle control system 3300 via transmission media or signals such as electrical, electromagnetic, or digital signals, conveyed via a communication medium such as a wireless link. Various implementations may further include receiving, sending, or storing instructions and/or data implemented in accordance with the foregoing description upon a computer-accessible medium. Accordingly, the techniques described herein may be practiced with other aerial vehicle control system configurations.

The above aspects of the present disclosure are meant to be illustrative. They were chosen to explain the principles and application of the disclosure and are not intended to be exhaustive or to limit the disclosure. Many modifications and variations of the disclosed aspects may be apparent to those of skill in the art. Persons having ordinary skill in the field of computers, communications, and speech processing should recognize that components and process steps described herein may be interchangeable with other components or steps, or combinations of components or steps, and still achieve the benefits and advantages of the present disclosure.

While the above examples have been described with respect to aerial vehicles, the disclosed implementations may also be used for other forms of vehicles, including, but not limited to, ground based vehicles and water based vehicles.

Aspects of the disclosed system may be implemented as a computer method or as an article of manufacture such as a memory device or non-transitory computer readable storage medium. The computer readable storage medium may be readable by a computer and may comprise instructions for causing a computer or other device to perform processes described in the present disclosure. The computer readable storage media may be implemented by a volatile computer memory, non-volatile computer memory, hard drive, solid-state memory, flash drive, removable disk and/or other media. In addition, components of one or more of the modules and engines may be implemented in firmware or hardware.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

Language of degree used herein, such as the terms "about," "approximately," "generally," "nearly" or "substantially" as used herein, represent a value, amount, or characteristic close to the stated value, amount, or characteristic that still performs a desired function or achieves a desired result. For example, the terms "about," "approximately," "generally," "nearly" or "substantially" may refer to an amount that is within less than 10% of, within less than 5% of, within less than 1% of, within less than 0.1% of, and within less than 0.01% of the stated amount.

As used throughout this application, the word "may" is used in a permissive sense (i.e., meaning having the potential to), rather than the mandatory sense (i.e., meaning must). Similarly, the words "include," "including," and "includes" mean including, but not limited to. Additionally, as used herein, the term "coupled" may refer to two or more components connected together, whether that connection is permanent (e.g., welded) or temporary (e.g., bolted), direct or indirect (e.g., through an intermediary), mechanical, chemical, optical, or electrical. Furthermore, as used herein, "horizontal" flight refers to flight traveling in a direction substantially parallel to the ground (e.g., sea level), and that "vertical" flight refers to flight traveling substantially radially outward from or inward toward the earth's center. It should be understood by those having ordinary skill that trajectories may include components of both "horizontal" and "vertical" flight vectors.

Implementations disclosed herein may include an aerial vehicle, comprising a fuselage; six motor arms coupled to and extending from the fuselage; six motors, each motor coupled to a respective motor arm and positioned around the fuselage; six propellers, each propeller coupled to and rotated by a respective motor; a ring wing coupled to outer ends of the six motor arms and positioned around the fuselage, the six motors, and the six propellers; and six actuators, each actuator coupled to a respective motor and configured to alter at least one of a cant angle, a toe angle, or a position of the respective motor relative to the respective motor arm.

Optionally, cant angles of each of the six motors may be configured to be altered to planarize the six motors with respect to each other. Optionally, toe angles of each of the six motors may be configured to be altered to angle the six motors at least one of toward or away from the fuselage. Optionally, positions of each of the six motors may be configured to be altered to move the six motors at least one of toward or away from the fuselage. Optionally, the aerial vehicle may further comprise a controller configured to at least: detect a failure of a first motor of the six motors; responsive to the detected failure, actuate at least one actuator of the six actuators to alter at least one of the cant angle, the toe angle, or the position of the respective motor relative to the respective motor arm; identify a safe landing location for the aerial vehicle; and navigate the aerial vehicle to the safe landing location.

Implementations disclosed herein may include an aerial vehicle, comprising a fuselage; a plurality of propulsion mechanism arms coupled to and extending from the fuselage; a plurality of propulsion mechanisms, each propulsion mechanism coupled to a respective propulsion mechanism arm and positioned around the fuselage; a ring wing coupled to outer ends of the plurality of propulsion mechanism arms and positioned around the fuselage and the plurality of propulsion mechanisms; and a first actuator coupled to a first propulsion mechanism and configured to alter at least one of a cant angle, a toe angle, or a position of the first propulsion mechanism.

Optionally, the first actuator may be configured to alter the cant angle of the first propulsion mechanism around an axis of a first propulsion mechanism arm to which the first propulsion mechanism is coupled. Optionally, the first actuator may be configured to alter the toe angle of the first propulsion mechanism by moving a connection of a first propulsion mechanism arm to which the first propulsion mechanism is coupled relative to the fuselage. Optionally, the first actuator may be configured to alter the toe angle of the first propulsion mechanism by moving a connection of a first propulsion mechanism arm to which the first propulsion mechanism is coupled relative to a portion of the ring wing. Optionally, the first actuator may comprise at least one of a tunable bias element or a magnetic actuator configured to alter a springiness of at least a portion of a coupling between the first propulsion mechanism and a first propulsion mechanism arm. Optionally, at least one of the cant angle or the toe angle may be configured to be altered by the first actuator based at least in part on a thrust generated by the first propulsion mechanism. Optionally, the first actuator may be configured to alter the position of the first propulsion mechanism along a first propulsion mechanism arm to which the first propulsion mechanism is coupled. Optionally, a first section of the ring wing may be configured to be at least one of moved or released to provide clearance for an altered position of the first propulsion mechanism. Optionally, the first actuator may comprise at least one of a clutch, a switch, a bias element, a servo, a solenoid, a motor, a screw actuator, a magnetic actuator, a linear actuator, or a rotary actuator. Optionally, the aerial vehicle may further comprise a controller configured to at least: detect a failure of a second propulsion mechanism of the plurality of propulsion mechanisms; responsive to the detected failure, actuate the first actuator to alter at least one of the cant angle, the toe angle, or the position of the first propulsion mechanism; identify a safe landing location for the aerial vehicle; and navigate the aerial vehicle to the safe landing location. Optionally, the aerial vehicle may further comprise a plurality of actuators, each actuator coupled to a respective propulsion mechanism and configured to alter at least one of a cant angle, a toe angle, or a position of the respective propulsion mechanism; wherein the plurality of actuators comprise the first actuator.

Implementations disclosed herein may include a method to control an aerial vehicle, comprising detecting a failure of a first propulsion mechanism, the aerial vehicle comprising a plurality of propulsion mechanisms and a plurality of actuators, each actuator associated with a respective propulsion mechanism; responsive to the detected failure, actuating at least one actuator of the plurality of actuators to alter at least one of a cant angle, a toe angle, or a position of a respective propulsion mechanism; identifying a safe landing location for the aerial vehicle; and navigating the aerial vehicle to the safe landing location.

Optionally, the method may further comprise responsive to the detected failure, actuating respective actuators associated with remaining propulsion mechanisms to alter cant angles of the remaining propulsion mechanisms such that the remaining propulsion mechanisms are planarized with respect to each other. Optionally, the method may further comprise responsive to the detected failure, actuating respective actuators associated with remaining propulsion mechanisms to alter toe angles of the remaining propulsion mechanisms such that the remaining propulsion mechanisms are angled toward the fuselage. Optionally, the method may further comprise responsive to the detected failure, actuating respective actuators associated with remaining propulsion mechanisms to alter positions of the remaining propulsion mechanisms such that the remaining propulsion mechanisms are moved away from the fuselage.

Implementations disclosed herein may include an aerial vehicle, comprising a fuselage; six motor arms coupled to and extending from the fuselage; six motors, each motor coupled to a respective motor arm and positioned around the fuselage; six propellers, each propeller coupled to and rotated by a respective motor; a ring wing coupled to outer ends of the six motor arms and positioned around the fuselage, the six motors, and the six propellers; and six actuators, each actuator coupled to a respective propeller and configured to alter at least one of an orientation or a length of at least one blade of the respective propeller.

Optionally, angles of the six propellers may be configured to be altered relative to at least one of the fuselage, the six motor arms, or the six motors. Optionally, angles of at least a portion of the at least one blade of the six propellers may be configured to be altered relative to roots of the at least one blade of the six propellers. Optionally, lengths of the at least one blade of the six propellers may be configured to be altered. Optionally, the aerial vehicle may further comprise a controller configured to at least: detect a failure of a first propeller of the six propellers; responsive to the detected failure, actuate at least one actuator of the six actuators to alter at least one of the orientation or the length of the at least one blade of the respective propeller; identify a safe landing location for the aerial vehicle; and navigate the aerial vehicle to the safe landing location.

Implementations disclosed herein may include an aerial vehicle, comprising a fuselage; a plurality of propulsion mechanism arms coupled to and extending from the fuselage; a plurality of propulsion mechanisms, each propulsion mechanism coupled to a respective propulsion mechanism arm and positioned around the fuselage; a plurality of propellers, each propeller coupled to and rotated by a respective propulsion mechanism; a ring wing coupled to outer ends of the plurality of propulsion mechanism arms and positioned around the fuselage and the plurality of propulsion mechanisms; and a first actuator coupled to a first propeller and configured to alter at least one of an orientation or a length of at least one blade of the first propeller.

Optionally, the first actuator may be configured to alter an angle of the first propeller relative to a first propulsion mechanism to which the first propeller is coupled. Optionally, the first actuator may be configured to alter at least one of an angle or a position of at least a portion of the at least one blade of the first propeller. Optionally, the at least a portion of the at least one blade may comprise at least one of a control surface or a trim tab of the at least one blade. Optionally, the at least a portion of the at least one blade may comprise a tip section of the at least one blade. Optionally, the first actuator may be configured to alter the angle of the tip section of the at least one blade at least one of: upward outside a plane of rotation of the first propeller, downward outside the plane of rotation of the first propeller, forward inside the plane of rotation of the first propeller, or rearward inside the plane of rotation of the first propeller. Optionally, the first actuator may be configured to alter the position of the tip section of the at least one blade radially outward or radially inward inside a plane of rotation of the first propeller. Optionally, the first actuator may comprise at least one of a tunable bias element or a magnetic actuator configured to alter a springiness of at least a portion of a coupling between the tip section of the at least one blade and a root of the at least one blade. Optionally, at least one of a pitch or the orientation of the at least one blade of the first propeller may be configured to be altered by the first actuator based at least in part on a thrust generated by the first propulsion mechanism. Optionally, the first actuator may comprise at least one of a clutch, a switch, a bias element, a servo, a solenoid, a motor, a screw actuator, a magnetic actuator, a linear actuator, or a rotary actuator. Optionally, the aerial vehicle may further comprise a controller configured to at least: detect a failure of a second propulsion mechanism of the plurality of propulsion mechanisms; responsive to the detected failure, actuate the first actuator to alter at least one of the orientation or the length of the at least one blade of the first propeller; identify a safe landing location for the aerial vehicle; and navigate the aerial vehicle to the safe landing location. Optionally, the aerial vehicle may further comprise a plurality of actuators, each actuator coupled to a respective propeller and configured to alter at least one of an orientation or a length of at least one blade of the respective propeller; wherein the plurality of actuators comprise the first actuator.

Implementations disclosed herein may include a method to control an aerial vehicle, comprising detecting a failure of a first propulsion mechanism, the aerial vehicle comprising a plurality of propulsion mechanisms, a plurality of propellers, and a plurality of actuators, each actuator associated with a respective propeller of a respective propulsion mechanism; responsive to the detected failure, actuating at least one actuator of the plurality of actuators to alter at least one of an orientation or a length of at least one blade of a respective propeller; identifying a safe landing location for the aerial vehicle; and navigating the aerial vehicle to the safe landing location.

Optionally, the method may further comprise responsive to the detected failure, actuating remaining actuators associated with remaining propulsion mechanisms to alter angles of respective remaining propellers such that the remaining propellers are planarized with respect to each other. Optionally, the method may further comprise responsive to the detected failure, actuating remaining actuators associated with remaining propulsion mechanisms to alter at least one of angles, orientations, or lengths of tip sections of respective blades of respective remaining propellers.

Implementations disclosed herein may include an aerial vehicle, comprising a fuselage; six motor arms coupled to and extending from the fuselage; six motors, each motor coupled to a respective motor arm and positioned around the fuselage; six propellers, each propeller coupled to and rotated by a respective motor; a ring wing comprising six wing sections, each wing section coupled to a respective outer end of a respective motor arm and positioned around the fuselage, the six motors, and the six propellers; and six actuators, each actuator coupled to a respective wing section and configured to alter an orientation of the respective wing section relative to the respective motor arm.

Optionally, orientations of the six wing sections may be configured to be altered to extend the six wing sections away from the fuselage. Optionally, orientations of the six wing sections may be configured to be altered to angle outer ends of the six wing sections upward relative to the fuselage. Optionally, orientations of the six wing sections may be configured to be altered to change pitches of the six wing sections. Optionally, the aerial vehicle may further comprise a controller configured to at least: detect a failure of at least one of: a first motor of the six motors, or a first propeller of the six propellers; responsive to the detected failure, actuate at least one actuator of the six actuators to alter an orientation of a respective wing section relative to a respective motor arm; identify a safe landing location for the aerial vehicle; and navigate, at least partially using auto-rotation, the aerial vehicle to the safe landing location.

Implementations disclosed herein may include an aerial vehicle, comprising a fuselage; a plurality of propulsion mechanism arms coupled to and extending from the fuselage; a plurality of propulsion mechanisms, each propulsion mechanism coupled to a respective propulsion mechanism arm and positioned around the fuselage; a ring wing comprising a plurality of wing sections, each wing section coupled to a respective outer end of a respective propulsion mechanism arm and positioned around the fuselage and the plurality of propulsion mechanisms; and a first actuator coupled to a first wing section and configured to alter an orientation of the first wing section.

Optionally, the first actuator may be configured to alter the orientation of the first wing section to at least one of extend or retract the first wing section away from or toward the fuselage. Optionally, the first actuator may be configured to alter the orientation of the first wing section to change an angle of the first wing section relative to a first propulsion mechanism arm. Optionally, the first actuator may be configured to alter the orientation of the first wing section to change a pitch of the first wing section. Optionally, the first actuator may be coupled to the plurality of wing sections and configured to collectively alter orientations of the plurality of wing sections. Optionally, the aerial vehicle may further comprise a plurality of actuators, each actuator coupled to a respective wing section and configured to alter an orientation of the respective wing section; wherein the plurality of actuators comprise the first actuator. Optionally, the plurality of actuators may be configured to alter orientations of respective wing sections to form at least one of an upper wing or a lower wing for horizontal flight. Optionally, the first actuator may comprise at least one of a clutch, a switch, a bias element, a servo, a solenoid, a motor, a screw actuator, a magnetic actuator, a linear actuator, or a rotary actuator. Optionally, the aerial vehicle may further comprise a controller configured to at least: detect a failure of a first propulsion mechanism of the plurality of propulsion mechanisms; responsive to the detected failure, actuate the first actuator to alter the orientation of the first wing section; identify a safe landing location for the aerial vehicle; and navigate the aerial vehicle to the safe landing location.

Implementations disclosed herein may include a method to control an aerial vehicle, comprising detecting a failure of a first propulsion mechanism, the aerial vehicle comprising a plurality of propulsion mechanisms and a plurality of actuators, each actuator associated with a respective wing section of a ring wing positioned around the plurality of propulsion mechanisms; responsive to the detected failure, actuating at least one actuator of the plurality of actuators to alter an orientation of a respective wing section; identifying a safe landing location for the aerial vehicle; and navigating, at least partially using auto-rotation, the aerial vehicle to the safe landing location.

Optionally, the method may further comprise responsive to the detected failure, actuating the plurality of actuators to alter orientations of respective wing sections to extend the respective wing sections away from a fuselage of the aerial vehicle. Optionally, the method may further comprise responsive to the detected failure, actuating the plurality of actuators to alter orientations of respective wing sections to change angles of the respective wing sections relative to a fuselage of the aerial vehicle to adjust lift generated due to auto-rotation. Optionally, the method may further comprise responsive to the detected failure, actuating the plurality of actuators to alter orientations of respective wing sections to change pitches of the respective wing sections to adjust lift generated due to auto-rotation. Optionally, the method may further comprise responsive to the detected failure, operating at least one of remaining propulsion mechanisms to maneuver the aerial vehicle to the safe landing location. Optionally, the method may further comprise responsive to the detected failure, operating at least one of remaining propulsion mechanisms to slow down the aerial vehicle prior to landing at the safe landing location.

Implementations disclosed herein may include an aerial vehicle, comprising a fuselage; six motor arms coupled to and extending from the fuselage; six motors, each motor coupled to a respective motor arm and positioned around the fuselage; six propellers, each propeller coupled to and rotated by a respective motor; and a ring wing coupled to outer ends of the six motor arms and positioned around the fuselage, the six motors, and the six propellers, the ring wing comprising six wing sections; wherein at least one wing section of the six wing sections is pivotably coupled to adjacent wing sections.

Optionally, the at least one wing section may be freely pivotable about a pivot axis based at least in part on airflow around the at least one wing section. Optionally, the aerial vehicle may further comprise a locking element associated with the at least one wing section, the locking element configured to at least one of hold or release the at least one wing section relative to a nominal position. Optionally, the aerial vehicle may further comprise an actuator associated with the at least one wing section, the actuator configured to modify an orientation of the at least one wing section. Optionally, a plurality of wing sections of the six wing sections may be pivotably coupled to adjacent wing sections.

Implementations disclosed herein may include an aerial vehicle, comprising a fuselage; at least one propulsion mechanism coupled to the fuselage and configured to provide thrust to the aerial vehicle; and a ring wing positioned around the fuselage and the at least one propulsion mechanism; wherein the ring wing includes at least one wing section that is pivotable relative to a remainder of the ring wing.

Optionally, the at least one wing section may pivot around a pivot axis extending substantially parallel to a span of the at least one wing section. Optionally, the at least one wing section may be freely pivotable based at least in part on airflow around the at least one wing section. Optionally, the aerial vehicle may further comprise a locking element associated with the at least one wing section, the locking element configured to at least one of hold or release the at least one wing section relative to a nominal position. Optionally, the locking element may comprise at least one of a clutch, switch, bias element, servo, solenoid, linear actuator, rotary actuator, piezoelectric actuator, or magnetic actuator. Optionally, the aerial vehicle may further comprise a bias element associated with the at least one wing section, the bias element configured to bias the at least one wing section toward a nominal position. Optionally, the aerial vehicle may further comprise a dampening element associated with the at least one wing section, the dampening element configured to dampen a pivoting of the at least one wing section. Optionally, the aerial vehicle may further comprise an actuator associated with the at least one wing section, the actuator configured to modify an orientation of the at least one wing section. Optionally, the actuator may comprise at least one of a servo, solenoid, motor, screw actuator, geared actuator, magnetic actuator, linear actuator, or rotary actuator. Optionally, the ring wing may be a hexagonal ring wing; and the ring wing may include a plurality of wing sections that are pivotable relative to a remainder of the ring wing, the plurality of wing sections including the at least one wing section. Optionally, a first wing section of the plurality of wing sections may be an upper wing section in a horizontal flight orientation of the aerial vehicle; and a second wing section of the plurality of wing sections may be a lower wing section in the horizontal flight orientation of the aerial vehicle.

Implementations disclosed herein may include a method to operate an aerial vehicle, comprising operating the aerial vehicle in a horizontal flight orientation, the aerial vehicle comprising a ring wing positioned around a fuselage and at least one propulsion mechanism of the aerial vehicle; and pivoting at least one wing section of the ring wing based at least in part on airflow around the at least one wing section.

Optionally, the method may further comprise determining that the aerial vehicle is in the horizontal flight orientation; and in response to determining that the aerial vehicle is in the horizontal flight orientation, releasing, via a locking element, the at least one wing section to enable pivoting. Optionally, the method may further comprise determining that the aerial vehicle is transitioning to a vertical flight orientation; and in response to determining that the aerial vehicle is transitioning to the vertical flight orientation, locking, via a locking element, the at least one wing section to prevent pivoting. Optionally, pivoting the at least one wing section may further comprise modifying, via an actuator, an orientation of the at least one wing section relative to a remainder of the ring wing.

Although the invention has been described and illustrated with respect to illustrative implementations thereof, the foregoing and various other additions and omissions may be made therein and thereto without departing from the scope of the present invention, which is solely defined by the claims.

## Claims

1. An aerial vehicle (100), comprising:
a fuselage (110);
a plurality of propulsion mechanism arms (105) coupled to and extending from the fuselage;
a plurality of propulsion mechanisms (102), each propulsion mechanism coupled to a respective propulsion mechanism arm and positioned around the fuselage;
a ring wing (107) comprising a plurality of wing sections (107-1... 6) positioned around the fuselage and the plurality of propulsion mechanisms, a respective spanwise end of each wing section coupled to a respective outer end of a respective propulsion mechanism arm, wherein each wing section comprises a releasable or frangible connection (2023) to an adjacent wing section of the plurality of wing sections; and
a first actuator (2025) coupled to a first wing section and configured to alter an orientation of the first wing section, wherein based on the releasable or frangible connection releasing or separating the first wing section from the adjacent wing section, the first actuator is configured to alter the orientation of the first wing section.

2. The aerial vehicle of claim 1, wherein the first actuator is configured to alter the orientation of the first wing section to at least one of extend or retract the first wing section away from or toward the fuselage.

3. The aerial vehicle of any one of claims 1 or 2, wherein the first actuator is configured to alter the orientation of the first wing section to change an angle of the first wing section relative to the first propulsion mechanism arm.

4. The aerial vehicle of any one of claims 1-3, wherein the first actuator is configured to alter the orientation of the first wing section to change a pitch of the first wing section.

5. The aerial vehicle of any one of claims 1-4, wherein the first actuator is coupled to the plurality of wing sections and configured to collectively alter orientations of the plurality of wing sections.

6. The aerial vehicle of any one of claims 1-5, wherein the first actuator comprises at least one of a clutch, a switch, a bias element, a servo, a solenoid, a motor, a screw actuator, a magnetic actuator, a linear actuator, or a rotary actuator.

7. The aerial vehicle of any one of claims 1-4 or 6, further comprising:
a plurality of actuators, each actuator coupled to a respective wing section and configured to alter an orientation of the respective wing section;
wherein the plurality of actuators comprise the first actuator.

8. The aerial vehicle of claim 7, wherein the plurality of actuators are configured to alter orientations of respective wing sections to form at least one of an upper wing or a lower wing for horizontal flight.

9. The aerial vehicle of claim 7, wherein:
the plurality of propulsion mechanism arms comprise six propulsion mechanism arms coupled to and extending from the fuselage;
the plurality of propulsion mechanisms comprise six motors coupled to respective propulsion mechanism arms and positioned around the fuselage, and six propellers coupled to and rotated by respective motors;
the plurality of wing sections comprise six wing sections positioned around the fuselage, the six motors, and the six propellers; and
the plurality of actuators comprise six actuators coupled to respective wing sections.

10. The aerial vehicle of claim 9, wherein orientations of the six wing sections are configured to be altered to extend the six wing sections away from the fuselage.

11. The aerial vehicle of any one of claims 9 or 10, wherein orientations of the six wing sections are configured to be altered to angle outer ends of the six wing sections upward relative to the fuselage.

12. The aerial vehicle of any one of claims 9-11, wherein orientations of the six wing sections are configured to be altered to change pitches of the six wing sections.

13. The aerial vehicle of claim 7, further comprising:
a controller configured to at least:
detect a failure of the first propulsion mechanism of the plurality of propulsion mechanisms;
responsive to the detected failure, actuate the first actuator to alter the orientation of the first wing section;
identify a safe landing location for the aerial vehicle; and
navigate the aerial vehicle to the safe landing location.

14. The aerial vehicle of claim 13, wherein the controller is further configured to:
responsive to the detected failure, at least one of:
actuate the plurality of actuators to alter orientations of respective wing sections to extend the respective wing sections away from the fuselage of the aerial vehicle;
actuate the plurality of actuators to alter orientations of respective wing sections to change angles of the respective wing sections relative to the fuselage of the aerial vehicle to adjust lift generated due to auto-rotation; or
actuate the plurality of actuators to alter orientations of respective wing sections to change pitches of the respective wing sections to adjust lift generated due to auto-rotation.

15. The aerial vehicle of any one of claims 13-14, wherein the controller is further configured to:
responsive to the detected failure, at least one of:
operate at least one of remaining propulsion mechanisms to maneuver the aerial vehicle to the safe landing location; or
operate at least one of remaining propulsion mechanisms to slow down the aerial vehicle prior to landing at the safe landing location.

## Patentansprüche

1. Luftfahrzeug (100), das Folgendes umfasst:
einen Rumpf (110);
mehrere Antriebsmechanismusarme (105), die mit dem Rumpf gekoppelt sind und sich davon erstrecken;
mehrere Antriebsmechanismen (102), wobei jeder Antriebsmechanismus mit einem jeweiligen Antriebsmechanismusarm gekoppelt ist und um den Rumpf herum angeordnet ist;
einen Ringflügel (107), der mehrere Flügelabschnitte (107-1 ... 6) umfasst, die um den Rumpf und die mehreren Antriebsmechanismen herum angeordnet sind, wobei ein jeweiliges Ende in Spannweitenrichtung von jedem Flügelabschnitt mit einem jeweiligen äußeren Ende eines jeweiligen Antriebsmechanismusarms gekoppelt ist, wobei jeder Flügelabschnitt eine lösbare oder zerbrechliche Verbindung (2023) mit einem benachbarten Flügelabschnitt der mehreren Flügelabschnitte umfasst; und
einen ersten Aktor (2025), der mit einem ersten Flügelabschnitt gekoppelt ist und konfiguriert ist, eine Orientierung des ersten Flügelabschnitts zu verändern, wobei der erste Flügelabschnitt auf der Grundlage der lösbaren oder zerbrechlichen Verbindung vom benachbarten Flügelabschnitt gelöst oder getrennt wird, wobei der erste Aktor konfiguriert ist, die Orientierung des ersten Flügelabschnitts zu verändern.

2. Luftfahrzeug nach Anspruch 1, wobei der erste Aktor konfiguriert ist, die Orientierung des ersten Flügelabschnitts zu verändern, derart, dass der erste Flügelabschnitt vom Rumpf weg ausgefahren und/oder in Richtung des Rumpfs eingefahren wird.

3. Luftfahrzeug nach einem der Ansprüche 1 oder 2, wobei der erste Aktor konfiguriert ist, die Orientierung des ersten Flügelabschnitts zu verändern, derart, dass ein Winkel des ersten Flügelabschnitts in Bezug auf den ersten Antriebsmechanismusarm geändert wird.

4. Luftfahrzeug nach einem der Ansprüche 1-3, wobei der erste Aktor konfiguriert ist, die Orientierung des ersten Flügelabschnitts zu verändern, derart, dass ein Anstellwinkel des ersten Flügelabschnitts geändert wird.

5. Luftfahrzeug nach einem der Ansprüche 1-4, wobei der erste Aktor mit den mehreren Flügelabschnitten gekoppelt ist und konfiguriert ist, die Orientierungen der mehreren Flügelabschnitte gemeinsam zu verändern.

6. Luftfahrzeug nach einem der Ansprüche 1-5, wobei der erste Aktor eine Kupplung und/oder einen Schalter und/oder ein Vorbelastungselement und/oder eine Servoeinrichtung und/oder einen Elektromagneten und/oder einen Motor und/oder einen Schraubenaktor und/oder einen magnetischen Aktor und/oder einen Linearaktor und/oder einen Drehaktor umfasst.

7. Luftfahrzeug nach einem der Ansprüche 1-4 oder 6, das ferner Folgendes umfasst:
mehrere Aktoren, wobei jeder Aktor mit einem jeweiligen Flügelabschnitt gekoppelt ist und konfiguriert ist, eine Orientierung des jeweiligen Flügelabschnitts zu verändern;
wobei die mehreren Aktoren den ersten Aktor umfassen.

8. Luftfahrzeug nach Anspruch 7, wobei die mehreren Aktoren konfiguriert sind, die Orientierungen jeweiliger Flügelabschnitte zu verändern, derart, dass ein oberer Flügel und/oder ein unterer Flügel für den Horizontalflug gebildet werden.

9. Luftfahrzeug nach Anspruch 7, wobei:
die mehreren Antriebsmechanismusarme sechs Antriebsmechanismusarme umfassen, die mit dem Rumpf gekoppelt sind und sich davon erstrecken;
die mehreren Antriebsmechanismen sechs Motoren, die mit jeweiligen Antriebsmechanismusarmen gekoppelt sind und um den Rumpf herum angeordnet sind, und sechs Propeller, die mit jeweiligen Motoren gekoppelt sind und durch diese gedreht werden, umfassen;
die mehreren Flügelabschnitte sechs Flügelabschnitte umfassen, die um den Rumpf, die sechs Motoren und die sechs Propeller herum angeordnet sind, umfassen; und
die mehreren Aktoren sechs Aktoren umfassen, die mit jeweiligen Flügelabschnitten gekoppelt sind.

10. Luftfahrzeug nach Anspruch 9, wobei die Orientierungen der sechs Flügelabschnitte konfiguriert sind, derart verändert zu werden, dass die sechs Flügelabschnitte vom Rumpf weg ausgefahren werden.

11. Luftfahrzeug nach einem der Ansprüche 9 oder 10, wobei die Orientierungen der sechs Flügelabschnitte konfiguriert sind, derart verändert zu werden, dass die äußeren Enden der sechs Flügelabschnitte in Bezug auf den Rumpf nach oben angewinkelt sind.

12. Luftfahrzeug nach einem der Ansprüche 9-11, wobei die Orientierungen der sechs Flügelabschnitte konfiguriert sind, derart geändert zu werden, dass die Anstellwinkel der sechs Flügelabschnitte geändert werden.

13. Luftfahrzeug nach Anspruch 7, das ferner Folgendes umfasst:
eine Steuereinheit, die konfiguriert ist, zumindest:
einen Fehler des ersten Antriebsmechanismus der mehreren Antriebsmechanismen zu detektieren;
als Antwort auf den detektierten Fehler den ersten Aktor zu betätigen, um die Orientierung des ersten Flügelabschnitts zu verändern;
einen sicheren Landeplatz für das Luftfahrzeug zu identifizieren; und
das Luftfahrzeug zu dem sicheren Landeplatz zu navigieren.

14. Luftfahrzeug nach Anspruch 13, wobei die Steuereinheit ferner konfiguriert ist,
als Antwort auf den detektierten Fehler:
die mehreren Aktoren zu betätigen, um die Orientierungen der jeweiligen Flügelabschnitte zu verändern, derart, dass die jeweiligen Flügelabschnitte vom Rumpf des Luftfahrzeugs weg ausgefahren werden; und/oder
die mehreren Aktoren zu betätigen, um die Orientierungen der jeweiligen Flügelabschnitte zu verändern, derart, dass die Winkel der jeweiligen Flügelabschnitte in Bezug auf den Rumpf des Luftfahrzeugs geändert werden, um einen Auftrieb einzustellen, der aufgrund von Autorotation erzeugt wird; und/oder
die mehreren Aktoren zu betätigen, um die Orientierungen der jeweiligen Flügelabschnitte zu verändern, derart, dass die Anstellwinkel der jeweiligen Flügelabschnitte geändert werden, um einen Auftrieb einzustellen, der aufgrund von Autorotation erzeugt wird.

15. Luftfahrzeug nach einem der Ansprüche 13-14, wobei die Steuereinheit ferner konfiguriert,
als Antwort auf den detektierten Fehler:
mindestens einen der verbleibenden Antriebsmechanismen zu betätigen, um das Luftfahrzeug zu dem sicheren Landeplatz zu manövrieren; und/oder
mindestens einen der verbleibenden Antriebsmechanismen zu betätigen, um das Luftfahrzeug vor dem Landen auf dem sicheren Landeplatz zu verlangsamen.

## Revendications

1. Véhicule aérien (100), comprenant :
un fuselage (110) ;
une pluralité de bras (105) de mécanisme de propulsion accouplés au fuselage et s'étendant depuis lui ;
une pluralité de mécanismes de propulsion (102), chaque mécanisme de propulsion étant accouplé à un bras de mécanisme de propulsion respectif et positionné autour du fuselage ;
une aile annulaire (107) comprenant une pluralité de tronçons d'aile (107-1...6) positionnés autour du fuselage et de la pluralité de mécanismes de propulsion, une extrémité en envergure respective de chaque tronçon d'aile étant accouplée à une extrémité extérieure respective d'un bras de mécanisme de propulsion respectif, chaque tronçon d'aile comprenant une liaison libérable ou frangible (2023) avec un tronçon d'aile adjacent de la pluralité de tronçons d'aile ; et
un premier actionneur (2025) accouplé à un premier tronçon d'aile et configuré pour modifier une orientation du premier tronçon d'aile ; sur la base de la libération ou de la séparation, par la liaison libérable ou frangible, du premier tronçon d'aile du tronçon d'aile adjacent, le premier actionneur étant configuré pour modifier l'orientation du premier tronçon d'aile.

2. Véhicule aérien selon la revendication 1, le premier actionneur étant configuré pour modifier l'orientation du premier tronçon d'aile pour déployer le premier tronçon d'aile à l'écart du fuselage et/ou pour l'escamoter en direction du fuselage.

3. Véhicule aérien selon l'une quelconque des revendications 1 ou 2, le premier actionneur étant configuré pour modifier l'orientation du premier tronçon d'aile pour changer un angle formé par le premier tronçon d'aile avec le premier bras de mécanisme de propulsion.

4. Véhicule aérien selon l'une quelconque des revendications 1 à 3, le premier actionneur étant configuré pour modifier l'orientation du premier tronçon d'aile pour changer un pas du premier tronçon d'aile.

5. Véhicule aérien selon l'une quelconque des revendications 1 à 4, le premier actionneur étant accouplé à la pluralité de tronçons d'aile et étant configuré pour modifier collectivement des orientations de la pluralité de tronçons d'aile.

6. Véhicule aérien selon l'une quelconque des revendications 1 à 5, le premier actionneur comprenant un embrayage et/ou un commutateur et/ou un élément de sollicitation et/ou un servomécanisme et/ou un solénoïde et/ou un moteur et/ou un actionneur à vis et/ou un actionneur magnétique et/ou un actionneur linéaire et/ou un actionneur rotatif.

7. Véhicule aérien selon l'une quelconque des revendications 1 à 4 ou 6, comprenant en outre :
une pluralité d'actionneurs, chaque actionneur étant accouplé à un tronçon d'aile respectif et configuré pour modifier une orientation du tronçon d'aile respectif ;
la pluralité d'actionneurs comprenant le premier actionneur.

8. Véhicule aérien selon la revendication 7, la pluralité d'actionneurs étant configurés pour modifier des orientations de tronçons d'aile respectifs pour former une aile supérieure et/ou une aile inférieure pour un vol horizontal.

9. Véhicule aérien selon la revendication 7,
la pluralité de bras de mécanisme de propulsion comprenant six bras de mécanisme de propulsion accouplés au fuselage et s'étendant depuis lui ;
la pluralité de mécanismes de propulsion comprenant six moteurs accouplés à des bras de mécanisme de mécanisme de propulsion respectifs et positionnés autour du fuselage, et six hélices accouplées à des moteurs respectifs et entraînées en rotation par eux ;
la pluralité de tronçons d'aile comprenant six tronçons d'aile positionnés autour du fuselage, des six moteurs, et des six hélices ; et
la pluralité d'actionneurs comprenant six actionneurs accouplés à des tronçons d'aile respectifs.

10. Véhicule aérien selon la revendication 9, des orientations des six tronçons d'aile étant configurées pour être modifiées pour déployer les six tronçons d'aile à l'écart du fuselage.

11. Véhicule aérien selon l'une quelconque des revendications 9 ou 10, des orientations des six tronçons d'aile étant configurées pour être modifiées pour incliner des extrémités extérieures des six tronçons d'aile vers le haut par rapport au fuselage.

12. Véhicule aérien selon l'une quelconque des revendications 9 à 11, des orientations des six tronçons d'aile étant configurées pour être modifiées pour changer des pas des six tronçons d'aile.

13. Véhicule aérien selon la revendication 7, comprenant en outre :
un contrôleur configuré pour au moins :
détecter une défaillance du premier mécanisme de propulsion de la pluralité de mécanismes de propulsion ;
en réponse à la défaillance détectée, actionner le premier actionneur pour modifier l'orientation du premier tronçon d'aile ;
identifier un lieu d'atterrissage en toute sécurité pour le véhicule aérien ; et
assurer la navigation du véhicule aérien jusqu'au lieu d'atterrissage en toute sécurité.

14. Véhicule aérien selon la revendication 13, le contrôleur étant configuré en outre pour :
en réponse à la défaillance détectée :
actionner la pluralité d'actionneurs pour modifier des orientations de tronçons d'aile respectifs pour déployer les tronçons d'aile respectifs à l'écart du fuselage du véhicule aérien ; et/ou
actionner la pluralité d'actionneurs pour modifier des orientations de tronçons d'aile respectifs pour changer des angles formés par les tronçons d'aile respectifs avec le fuselage du véhicule aérien pour ajuster la portance générée du fait de l'autorotation ; et/ou
actionner la pluralité d'actionneurs pour modifier des orientations de tronçons d'aile respectifs pour changer des pas des tronçons d'aile respectifs pour ajuster la portance générée du fait de l'autorotation.

15. Véhicule aérien selon l'une quelconque des revendications 13 à 14, le contrôleur étant configuré en outre pour :
en réponse à la défaillance détectée :
faire fonctionner au moins un des mécanismes de propulsion restants pour manœuvrer le véhicule aérien jusqu'au lieu d'atterrissage en toute sécurité ; et/ou
faire fonctionner au moins un des mécanismes de propulsion restants pour ralentir le véhicule aérien préalablement à l'atterrissage sur le lieu d'atterrissage en toute sécurité.
